(19) 

Europäisches Patentamt

European Patent Office

Office européen des brevets

(11) **EP 4 443 269 A1**

(12) **EUROPEAN PATENT APPLICATION**

(43) Date of publication:
**09.10.2024 Bulletin 2024/41**

(21) Application number: **24166885.4**

(22) Date of filing: **27.03.2024**

(51) International Patent Classification (IPC):
***G06F 1/28*** *(2006.01)*

(52) Cooperative Patent Classification (CPC):
**G06F 1/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 US 202363493677 P**
**21.12.2023 US 202318393549**

(71) Applicant: **INTEL Corporation**
**Santa Clara, CA 95054 (US)**

(72) Inventors:
• **Matsumura, Naoki**
**San Jose CA, 95118 (US)**
• **Arnold Jayachandran, Shirley**
**Folsom (US)**
• **Woods, David**
**El Dorado Hills CA, 95762 (US)**
• **Sprenger, Mark**
**Tigard OR, 97224 (US)**
• **Schiff, Tod**
**Portland OR, 97229 (US)**
• **Singh, Jagadish**
**Bangalore (IN)**
• **Jardin, Kirk**
**Sacramento (US)**

(74) Representative: **Samson & Partner Patentanwälte mbB**
**Widenmayerstraße 6**
**80538 München (DE)**

(54) **CIRCUITRY AND METHODS FOR IMPLEMENTING SYSTEM POWER CONTROL BASED ON A BATTERY'S THERMAL LIMIT AND IMPEDANCE**

(57) Techniques for system power control based on a battery's thermal limit and impedance are described. In certain examples, a system includes: a hardware processor that includes a continuous boost power mode; and a power management circuit to couple to a battery, wherein the power management circuit is to: determine heat dissipation for the battery over time when the hardware processor is in the continuous boost power mode, and control power provided to the hardware processor in the continuous boost power mode without exceeding a limit of the heat dissipation over time.

FIG. 1

EP 4 443 269 A1

**Description**

CROSS-REFERENCE TO RELATED APPLICATIONS

The present patent application claims the benefit of U.S. Provisional Patent Application Serial No. 63/493,677 filed Mar. 31, 2023, which is incorporated herein by reference in its entirety.

BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (I/O). It should be noted that the term instruction herein may refer to a macro-instruction, e.g., an instruction that is provided to the processor for execution, or to a micro-instruction, e.g., an instruction that results from a processor's decoder decoding macroinstructions.

BRIEF DESCRIPTION OF DRAWINGS

Various examples in accordance with the present disclosure will be described with reference to the drawings, in which:

FIG. 1 illustrates a system including a system-on-a-chip (SoC) with a hardware processor comprising a power manager (e.g., circuit) according to examples of the disclosure.

FIG. 2 illustrates a block diagram of a hardware processor core having a power management agent (e.g., circuit) coupled to a power source (e.g., battery) according to examples of the disclosure.

FIG. 3 illustrates a graph of battery's voltage change over time for open circuit voltage, when powering a processor (e.g., core) in continuous (e.g., boost) (e.g., turbo) mode, and for a battery thermal limit (e.g., derived from cooling capability) according to examples of the disclosure.

FIG. 4 illustrates example operations for a continuous (e.g., boost) (e.g., turbo) mode controller (e.g., circuitry) for controlling continuous (e.g., boost) (e.g., turbo) mode power without exceeding a battery's thermal limit according to examples of the disclosure.

FIG. 5 illustrates a graph of battery's voltage change over time for open circuit voltage, a low impedance battery, and for a reference battery according to examples of the disclosure.

FIG. 6 illustrates example operations for a continuous (e.g., boost) (e.g., turbo) mode controller (e.g., circuitry) for controlling continuous (e.g., boost) (e.g., turbo) mode power without exceeding a battery's thermal dissipation limit according to examples of the disclosure.

FIG. 7 illustrates example operations for a method for controlling power provided to a hardware processor in a continuous (e.g., boost) power mode without exceeding a limit of heat dissipation of a battery over time according to examples of the disclosure.

FIG. 8 illustrates an example computing system.

FIG. 9 illustrates a block diagram of an example processor and/or System on a Chip (SoC) that may have one or more cores and an integrated memory controller.

FIG. 10 is a block diagram illustrating a computing system 1000 configured to implement one or more aspects of the examples described herein.

FIG. 11A illustrates examples of a parallel processor.

FIG. 11B illustrates examples of a block diagram of a partition unit.

FIG. 11C illustrates examples of a block diagram of a processing cluster within a parallel processing unit.

FIG. 11D illustrates examples of a graphics multiprocessor in which the graphics multiprocessor couples with the pipeline manager of the processing cluster.

FIGS. 12A-12C illustrate additional graphics multiprocessors, according to examples.

FIG. 13 shows a parallel compute system 1300, according to some examples.

FIGS. 14A-14B illustrate a hybrid logical/physical view of a disaggregated parallel processor, according to examples described herein.

FIG. 15A is a block diagram illustrating both an example in-order pipeline and an example register renaming, out-of-order issue/execution pipeline according to examples.

FIG. 15B is a block diagram illustrating both an example in-order architecture core and an example register renaming, out-of-order issue/execution architecture core to be included in a processor according to examples.

FIG. 16 illustrates examples of execution unit(s) circuitry, such as execution unit(s) circuitry.

FIG. 17 is a block diagram of a register architecture according to some examples.

FIG. 18 illustrates examples of an instruction format.

FIG. 19 illustrates examples of an addressing information field.

FIG. 20 illustrates examples of a first prefix.

FIGS. 21A-21D illustrate examples of how the R, X, and B fields of the first prefix are used.

FIGS. 22A-22B illustrate examples of a second prefix.

FIG. 23 illustrates examples of a third prefix.

FIGS. 24A-24B illustrate thread execution logic including an array of processing elements employed in a graphics processor core according to examples described herein.

FIG. 25 illustrates an additional execution unit, according to an example.

FIG. 26 is a block diagram illustrating a graphics processor instruction formats 2600 according to some examples.

FIG. 27 is a block diagram of another example of a graphics processor.

FIG. 28A is a block diagram illustrating a graphics processor command format according to some examples.

FIG. 28B is a block diagram illustrating a graphics processor command sequence according to an example.

FIG. 29 is a block diagram illustrating the use of a software instruction converter to convert binary instructions in a source ISA to binary instructions in a target ISA according to examples.

FIG. 30 is a block diagram illustrating an IP core development system 3000 that may be used to manufacture an integrated circuit to perform operations according to some examples.

DETAILED DESCRIPTION

The present disclosure relates to methods, apparatus, systems, and non-transitory computer-readable storage media for power control by a battery's thermal limit and/or impedance. In certain examples, a processor (e.g., central processing unit (CPU)) includes a power manager (e.g., power management circuitry) to allow the processor (e.g., CPU) to run at its base clock speed when handling light workloads, then transition (e.g., "boost") to a higher clock speed for heavier workloads. In certain examples, running at a lower clock rate (e.g., the number of cycles executed by the processor every second) allows the processor to use less power, which can reduce heat and positively impact battery life in certain electronic devices (e.g., laptops). But when more speed is needed, such a power manager (e.g., Intel® Turbo Boost Technology) dynamically increases the clock rate to compensate. This is sometimes called "algorithmic overclocking".

In certain examples, a battery is a rechargeable battery that is onboard an electronic device, such as a smart phone's battery, a tablet's battery, or a laptop's battery. In certain examples, a (e.g., charged) battery had a voltage of about 11 volts (V) to 15V, e.g., 11.1V or 14.8V.

In certain examples, there are several power boost (e.g., turbo-boost) modes such as, but not limited to, power limit 4 (PL4) (for example, the highest power for a short time period, e.g., multiple milliseconds(ms)), PL2 (for example, the 2nd highest power for a medium time period, e.g., 10s of seconds(s)), and PL1 (for example, 3rd highest power for a longer (e.g., continuous) time period, e.g., infinite duration). In certain examples, a power boost mode's (e.g., PL1) power should not be set higher than the thermal solution cooling limits, e.g., but the power can be "boosted" to exceed the base power (e.g., thermal design power) of the processor (e.g., CPU). In certain examples, PL1 can technically be continuous without exceeding a processor's (e.g., CPU's) thermal budget. However, in certain examples, during processor (e.g., CPU) power boost (e.g., turbo) mode (e.g., PL4 / PL2 / PL1) when powered (e.g., exclusively) by a battery (e.g., direct current (DC) mode of operation), the battery temperature increases due to joule heating caused by battery impedance (e.g., resistance and/or reactance). High battery temperature accelerates battery degradation by nature of chemical degradation. Such temperature increases become even higher when the battery is degraded, and impedance is increased. Thus, there is a problem of battery degradation during certain power boost (e.g., PLx) modes, but there is no solution to control the boost mode (e.g., turbo) power (for example, continuous boost mode, e.g., PL1) while mitigating battery degradation (e.g., an increase in battery impedance). There is also the problem of shorter battery life with certain high continuous boost mode (e.g., PL1) usage when powered by a battery (for example, instead of powered by a connection to alternating current (AC), e.g., a wall outlet).

In certain examples, the technical problems are battery degradation from joule heating during long continuous boost mode (e.g., PL1) power cycles and a shortened battery life with high continuous boost mode (e.g., PL1) usage. Examples herein provide a technical solution to these technical problems, e.g., to prevent a shorter battery life with continuous boost mode (e.g., PL1) usage on battery power.

Certain examples herein (e.g., of power management circuitry) monitor at least one of: battery voltage changes from Open Circuit Voltage (OCV) during continuous power boost (e.g., turbo) mode, current (e.g., battery current), and impedance (e.g., battery impedance).

Certain examples herein determine a battery's heat dissipation (for example, energy loss by current multiplied by resistance, (e.g., I*R), e.g., voltage drop) over time, and control continuous boost (e.g., turbo) power (e.g., PL1) without exceeding the limit of heat over time.

Certain examples herein utilize a power mode (e.g., PL1) that provides power to a processor (e.g., CPU) based on a thermal limit of a battery that is providing the power, e.g., in addition to providing power based on the processor's (e.g., CPU's) thermal limit. Certain examples herein (e.g., instantly) adjust continuous boost (e.g., turbo) power based on a battery's thermal limit and/or impedance, and thus control the battery's temperature faster than based on adjusting the continuous boost (e.g., turbo) power based on a monitored temperature (e.g., battery temperature) which is delayed compared to a power change, e.g., because the temperature response to increased (e.g., boost) power is delayed due to a low thermal conductivity of battery materials (e.g., lithium cobalt oxide).

In certain examples, the technical problems are battery degradation from joule heating during long continuous power mode (e.g., boost and/or non-boost) power cycles and a shortened battery life with high continuous power mode usage. Examples herein provide a technical solution to these technical problems, e.g., to prevent a shorter battery life with continuous power mode usage on battery power. There is also a problem of battery degradation during certain continuous power (e.g., boost and/or non-boost) modes, but there is no solution to control the continuous mode power while mitigating battery degradation (e.g., an increase in battery impedance).

Certain examples herein (e.g., of power management circuitry) monitor at least one of: battery voltage changes from Open Circuit Voltage (OCV) during continuous power mode, current (e.g., battery current), and impedance (e.g., battery impedance).

Certain examples herein determine a battery's heat dissipation (for example, energy loss by current multiplied by resistance, (e.g., I*R), e.g., voltage drop) over time, and control continuous power without exceeding the limit of heat over time.

Certain examples herein utilize a power mode (e.g., PL1) that provides power to a processor (e.g., CPU) based on a thermal limit of a battery that is providing the power, e.g., in addition to providing power based on the processor's (e.g., CPU's) thermal limit. Certain examples herein (e.g., instantly) adjust continuous power based on a battery's thermal limit and/or impedance, and thus control the battery's temperature faster than based on adjusting the continuous power based on a monitored temperature (e.g., battery temperature) which is delayed compared to a power change, e.g., because the temperature response to increased power is delayed due to a low thermal conductivity of battery materials (e.g., lithium cobalt oxide).

A power management circuit (for example, controlling power (e.g., power flowing into a processor from a battery) based on a coupled battery's thermal limit and/or impedance as disclosed herein) cannot practically be performed in the human mind (or with pen and paper).

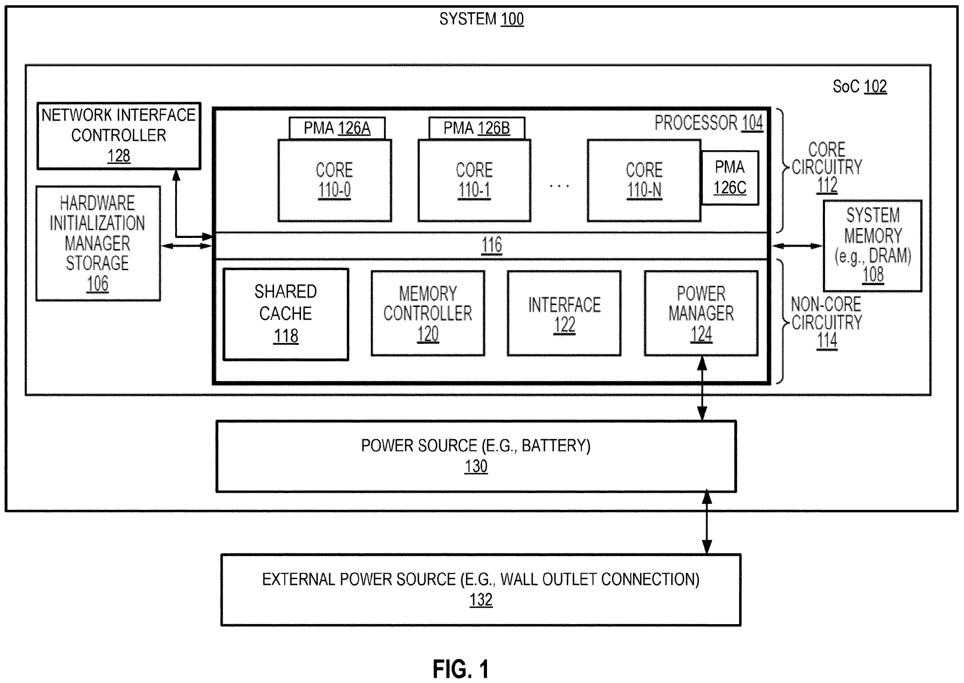

FIG. 1 illustrates a system 100 including a system-on-a-chip (SoC) 102 with a hardware processor 104 comprising a power manager (e.g., circuit) 124 according to examples of the disclosure. Depicted SoC 102 includes a processor 104 coupled to hardware initialization manager (non-transitory) storage 106 and system memory 108 (e.g., dynamic random-access memory (DRAM)). In one example, the hardware initialization manager (non-transitory) storage 106 stores hardware initialization manager firmware (e.g., or software). In one example, the hardware initialization manager (non-transitory) storage 106 stores Basic Input/Output System (BIOS) firmware. In another example, the hardware initialization manager (non-transitory) storage 106 stores Unified Extensible Firmware Interface (UEFI) firmware. In certain examples (e.g., triggered by the power-on or reboot of a processor), processor 104 executes the hardware initialization manager firmware (e.g., or software) stored in hardware initialization manager (non-transitory) storage 106 to initialize the processor for operation, for example, to begin executing an operating system (OS) and/or initialize the (e.g., hardware) components of system 100.

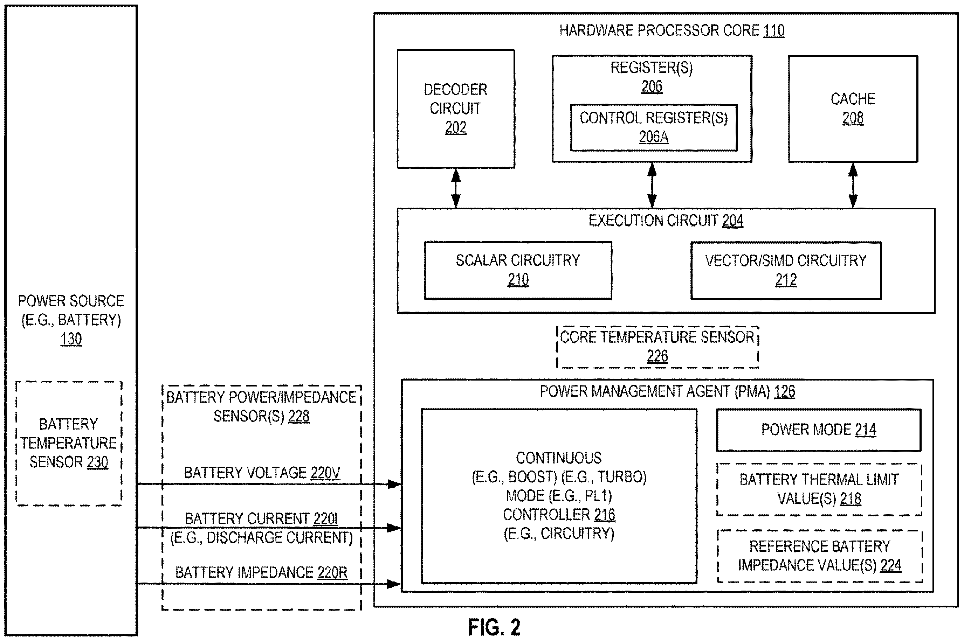

Depicted processor 104 is a multicore processor including core circuitry 112 having a plurality of cores 110_0 to 110_N, where N is any integer. In another example, processor only includes a single core. Cores 110_0 to 110_N may be coupled to each other via interconnect 116 or other electrical coupling. Each core may include the components discussed herein, for example, as shown in Figure 2. Depicted processor 104 includes non-core circuitry 114 separate from (e.g., outside of) the core circuitry 112. Non-core circuitry 114 may include any combination of shared cache 118 (e.g., a middle and/or last level cache), memory controller 120 (e.g., to maintain cache coherency in caches and/or fetch and retrieve data from system memory 108 or other memory), interface 122 (e.g., to provide a coupling to various components that are not part of processor 104), such as, but not limited to, peripheral devices, mass storage, etc.).

Each core may include its own (e.g., not shared) cache layer inside that core, for example, as shown in Figure 2. Each core (e.g., and individual components of that core) and/or other components of system 100 may be separately powered, for example, placed into or out of one of multiple power states. In certain examples, each power state is a power state according to an Advanced Configuration and Power Interface (ACPI) standard (e.g., the Advanced Configuration and Power Interface (ACPI) Specification Version 6.5 of August 2022). In certain examples, there are core states (c-states) for each core and/or processor (or package) states (p-states) for each processor.

Non-limiting examples of p-states are: P0 Performance State where a device or processor is in this state uses its maximum performance capability and may consume maximum power, P1 Performance State where the performance capability of a device or processor is limited below its maximum (e.g., via lower voltage and/or frequency than P0) and consumes less than maximum power, up to the Pn Performance State where the performance capability of a device or processor is at its minimum level and consumes minimal power while remaining in an active state (e.g., where state n is a maximum number and is processor or device dependent). In certain examples, processors and devices define support for an arbitrary number of performance states (e.g., not to exceed 16).

Non-limiting examples of c-states are: C0 processor core power state (e.g., the operating power state) where while the processor core is an executing power state, C1 processor core power state where the processor core has a hardware latency low enough that the operating software does not consider the latency aspect of the state when deciding whether to use it (e.g., aside from putting the processor in a nonexecuting power state, this state has no other software-visible effects), C2 processor power state that offers improved power savings over the C1 state (e.g., where the worst-case hardware latency for this state is provided via the ACPI system firmware and the operating software can use this information to determine when the C1 state should be used instead of the C2 state and/or aside from putting the processor core in a non-executing power state, this state has no other software-visible effects), C3 processor core power state that offers improved power savings over the C1 and C2 states. (e.g., where the worst-case hardware latency for this state is provided via the ACPI system firmware and the operating software can use this information to determine when the C2 state should be used instead of the C3 state and/or while in the C3 state, the processor's (e.g., core's) caches maintain state but ignore any snoops. For example, where the operating software is responsible for ensuring that the caches maintain coherency. Additional states may be defined by manufacturers for their processors. As one example, a C6 processor core power state may be used wherein the power (e.g., voltage) to the core is shut off, for example, where entry into the C6 state causes the core state (e.g., context information for the core and/or threads operating on that core) to be saved (e.g., to a dedicated C6 storage section in system memory (e.g., static random-access memory (SRAM)) before the core is shut off (e.g., core clocks are stopped and/or core voltage is reduced to zero Volts). As another example, a C7 processor core power state may be used that includes the C6 state changes but also where a last level cache (e.g., shared cache 118) is flushed. In certain examples, power manager 124 (e.g., circuit) controls the power levels of the components of system 100 (e.g., cores), e.g., according to a power state. In one example, an operating system executing on processor 104 requests the power state changes that are implemented by power manager 124.

In certain examples, system 100 includes a (e.g., DC) power source, e.g., a battery. In certain examples, the battery may be coupled to an external (e.g., AC) power source 132, e.g., a (e.g., an about 110V- about 220V) wall outlet connection.

In certain examples, power manager 124 (and/or power management agents 126) implements (e.g., CPU) a contiguous power mode (e.g., boost and/or non-boost), for example, when powered (e.g., exclusively) by a battery (e.g., direct current (DC) mode of operation). In certain examples, power manager 124 (and/or power management agents 126) adjusts the power (e.g., frequency, voltage, and/or current) utilized in continuous power mode (e.g., boost and/or non-boost mode) based on a battery's thermal limit and/or impedance, e.g., via modifying one or more p-states and/or c-states to stay within the power permitted (e.g., allotted).

In certain examples, power manager 124 (and/or power management agents 126) implements (e.g., CPU) power boost (e.g., turbo) mode (e.g., PL4 / PL2 /PL1), for example, when powered (e.g., exclusively) by a battery (e.g., direct current (DC) mode of operation). In certain examples, power manager 124 (and/or power management agents 126) adjusts the power (e.g., frequency, voltage, and/or current) utilized in continuous boost (e.g., turbo) mode (e.g., PL1) based on a battery's thermal limit and/or impedance, e.g., via modifying one or more p-states and/or c-states to stay within the power permitted (e.g., allotted).

In certain examples, processor 104 (e.g., each core thereof) includes a power management agent (PMA), e.g., PMA circuit. For example, with core 110-0 including (e.g., as a component therein) PMA 126A, core 110-1 including (e.g., as a component therein) PMA 126B, core 110-N including (e.g., as a component therein) PMA 126C, shared cache 118 including (e.g., as a component therein) PMA, memory controller 120 including (e.g., as a component therein) PMA, interface 122 including (e.g., as a component therein) PMA, or any combination thereof. In certain examples, a PMA controls power management operations internally to its respective component, e.g., such that PMA 126A only controls power management operations of core 110-0, PMA 126B only control power management operations of core 110-1, etc. In certain examples, PMA(s) 126 may interface with a processor-wide power manager 124 (e.g., controller), for example, a power control unit (PCU). In certain examples, a PMA performs certain power management activities for its component (e.g., core) autonomously. In certain examples, a PMA abstracts component (e.g., core) specific behavior and implements hardware state machines (e.g., finite state machine (FSMs) for all power management control and/or telemetry.

In certain examples, system 100 includes a network interface controller 128 to communicate with another system, e.g., such that updated power control code is sent to system 100.

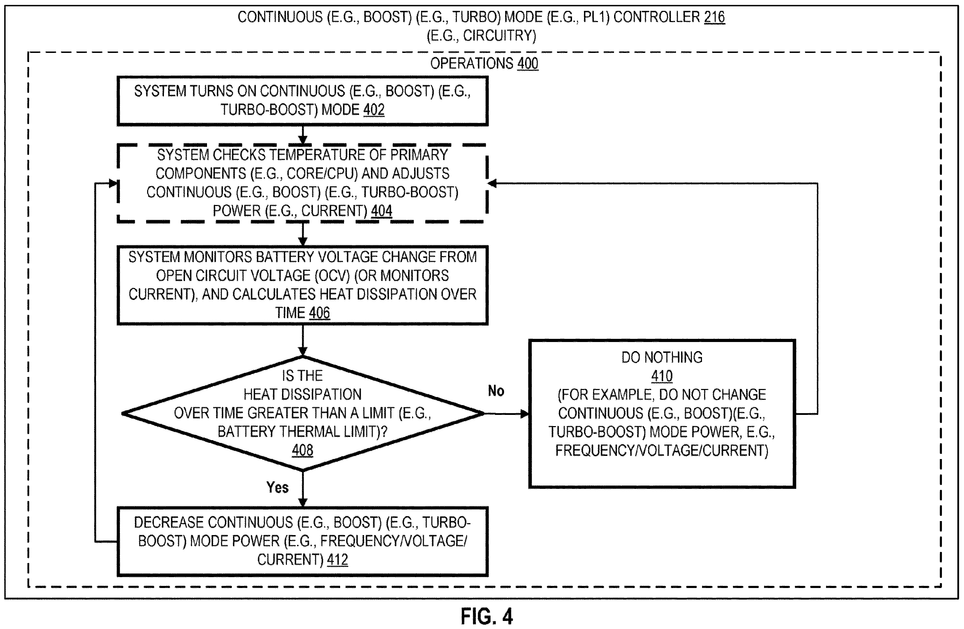

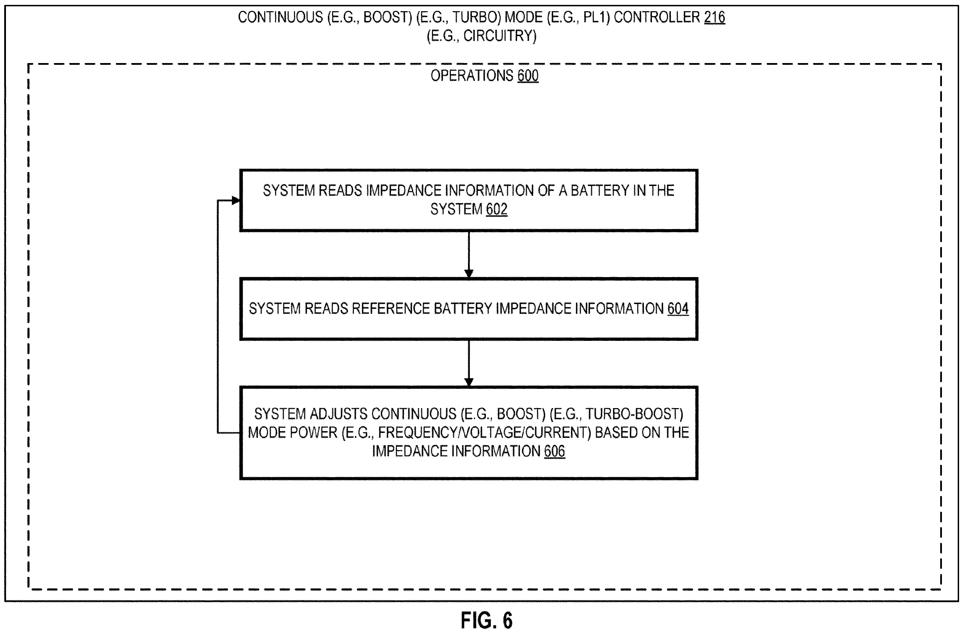

FIG. 2 illustrates a block diagram of a hardware processor core 110 having a power management agent (e.g., circuit) 126 coupled to a power source (e.g., battery) 130 according to examples of the disclosure. In certain examples, power source (e.g., battery) 130 (optionally, as shown by the dotted box) includes a battery temperature sensor 230 (or is located adjacent to the power source (e.g., battery) 130) to indicate a temperature of the power source (e.g., battery) 130, e.g., with the temperature reading(s) sent to power manager 124 and/or one or more power management agents 126. In certain examples, hardware processor core 110 (optionally, as shown by the dotted box) includes a core temperature sensor 226 (or is located adjacent to the hardware processor core 110) to indicate a temperature of the hardware processor core 110, e.g., with the temperature reading(s) sent to power manager 124 and/or one or more power management agents 126. In certain examples, the power (e.g., frequency, voltage, and/or current) is modified based on one or more of the values from battery temperature sensor 230 and/or core temperature sensor 226.In certain examples, power management agent (e.g., circuit) 126 (or power manager 124 in FIG. 1) includes a power mode 214 (e.g., as set in control register(s) 206A) comprising a non-boosted mode and/or at least one power boost (e.g., turbo) mode (e.g., PL4 / PL2 / PL1), for example, continuous boost (e.g., turbo) mode (e.g., PL1). In certain examples, power management agent (e.g., circuit) 126 includes continuous (e.g., boost) (e.g., turbo) mode (e.g., PL1) controller 216 (e.g., circuitry). In certain examples, continuous (e.g., boost) (e.g., turbo) mode (e.g., PL1) controller 216 (e.g., circuitry) operates according to the disclosure herein, e.g., as shown in FIG. 4 and/or FIG. 6. In certain examples, continuous (e.g., boost) (e.g., turbo) mode (e.g., PL1) controller 216 (e.g., circuitry) receives as input(s) (e.g., via battery power and/or impedance (e.g., resistance) sensor(s) 228) a value indicating a battery voltage 220V, a value indicating a battery current 220I (e.g., discharge current), and/or a value indicating a battery impedance (e.g., resistance) 220R, e.g., values from when the system 100 (e.g., core 110) is powered (e.g., exclusively) by a battery (e.g., direct current (DC) mode of operation). In certain examples, system 100 (e.g., Soc 102) includes battery power and/or impedance (e.g., resistance) sensor(s) 228. In certain examples, the continuous (e.g., boost) (e.g., turbo) mode (e.g., PL1) controller 216 (e.g., circuitry) adjusts the power (e.g., frequency, voltage, and/or current) is modified based on the value(s) indicating a battery voltage 220V, the value(s) indicating a battery current 220I (e.g., discharge current), and/or the value(s) indicating a battery impedance (e.g., resistance) 220R, e.g., when the system 100 (e.g., core 110) is powered (e.g., exclusively) by a battery (e.g., direct current (DC) mode of operation). In certain examples, the battery's power/impedance sensor(s) 228 are within a microcontroller in power source (e.g., battery pack) 130, e.g., and battery temperature sensor 230 is within the microcontroller.

In certain examples, power management agent 126 (or power manager 124) includes a value 218 indicating the battery 130's thermal limit. In certain examples, power management agent 126 (or power manager 124) includes a value 224 indicating a reference battery 130's impedance (e.g., resistance).

In certain examples, each core in FIG. 1 is an instance of core 110 in FIG. 2. In certain examples, PMA circuit 126 is included within core 110. Depicted hardware processor 110 includes a hardware decoder circuit 202 (e.g., decode unit) and a hardware execution circuit 204 (e.g., execution unit). Depicted hardware processor 110 includes (e.g., packed data or vector) register(s) 206. Registers 206 may include one or more registers to access (e.g., load and/or store) data in, e.g., additionally or alternatively to access (e.g., load or store) of data in another storage (e.g., cache 118 and/or system memory 108 in Figure 1). In certain examples, core 110 includes control register(s) 206A, e.g., to control the functionality disclosed herein. Depicted hardware processor 110 includes cache 208. Cache may include one or more cache banks to access (e.g., load and/or store) data in, e.g., additionally or alternatively to access (e.g., load or store) of data in register(s) 206 or other storage.

Depicted execution circuit 204 includes scalar circuitry 210 and/or vector/single instruction, multiple data (SIMD) circuitry 212. In certain examples, only one or any combination of scalar circuitry 210 and/or vector/single instruction, multiple data (SIMD) circuitry 212 are present (e.g., utilized). In certain examples, scalar circuitry 210 operates on scalar values (e.g., single numbers). In certain examples, vector/SIMD circuitry 212 operates on vector or packed data values.

Note that the figures herein may not depict all data communication connections. One of ordinary skill in the art will appreciate that this is to not obscure certain details in the figures. Note that a double headed arrow in the figures may not require two-way communication, for example, it may indicate one-way communication (e.g., to or from that component or device). Any or all combinations of communications paths may be utilized in certain examples herein.

In certain examples, hardware decoder circuit 202 receives an (e.g., single) instruction (e.g., macro-instruction) and decodes the instruction, e.g., into micro-instructions and/or micro-operations. In certain examples, hardware execution circuit 204 executes the decoded instruction (e.g., macro-instruction) to perform an operation or operations. For example, an instruction to be decoded by decoder circuit 202 and for the decoded instruction to be executed by execution circuit 204.

The following discusses two example implementations, e.g., where each can be performed independently. Certain examples herein are directed to power control that addresses shorter battery life with continuous (e.g., boost) (e.g., turbo) power (e.g., PL1) when powered by a battery. Certain examples do not (or do) monitor battery thermal budget when continuous (e.g., boost) (e.g., turbo) power (e.g., PL1) is on and off and adjust the continuous (e.g., boost) (e.g., turbo) power (e.g., PL1) and/or duration within the power budget, e.g., as solutions for noncontinuous (e.g., boost) power (e.g., PL4 and/or PL2) which turn on/off often and do not cover a continuous (e.g., boost) (e.g., turbo) power (e.g., PL1).

***Implementation 1: Controlling power without exceeding battery thermal limit***

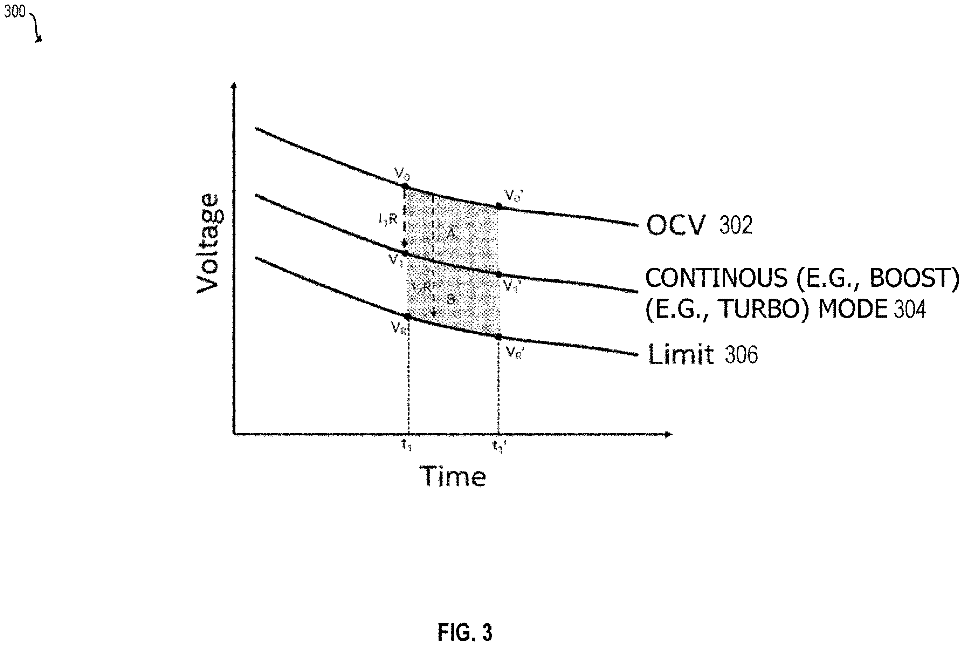

FIG. 3 illustrates a graph 300 of battery's voltage change over time for open circuit voltage (OCV) 302, when powering a processor (e.g., core) in continuous (e.g., boost) (e.g., turbo) mode 304, and for a battery thermal limit 306 (e.g., derived from cooling capability) according to examples of the disclosure.

In FIG. 3, at time ti, battery OCV 302 is $V_0$ and the voltage under continuous (e.g., boost) (e.g., turbo) power mode (e.g., PL1) 304 is Vi which is lower than $V_0$ by $I_1 * R$ (= IR drop), where $I_1$ is discharge current of (e.g., boost) (e.g., turbo) mode and R is battery impedance (e.g., resistance in Ohms). When continuous (e.g., boost) (e.g., turbo) power mode continues to time ti', battery OCV 302 and the voltage under contiguous (e.g., boost) (e.g., turbo) power mode 304 moves to $V_0$' and Vi', respectively.

In FIG. 3, the battery heat over time which is dissipated energy corresponds to the energy in area A (e.g., A is the heat dissipated from the battery) which is $\int_{t_1}^{t_1'} I_1^2 R \, dt$ , e.g., assuming battery impedance R is constant.

Certain examples herein adjust contiguous (e.g., boost) (e.g., turbo) power mode current $I_1$ so that following is met:

$$\int_{t_1}^{t_1'} I_1^2 R \, dt \leq \int_{t_1}^{t_1'} (battery\ thermal\ limit) \, dt$$

where battery thermal limit (e.g., limit 306) is derived from the cooling capability from the battery to outside of the system (e.g., outside of the processor). Note that in certain examples, the thermal limit is not a processor (e.g., CPU) thermal limit but a battery thermal limit.

In certain examples, Vi is compared (e.g., by continuous (e.g., boost) (e.g., turbo) mode (e.g., PL1) controller 216) with $V_R$ (which is derived (e.g., empirically determined) from battery thermal limit) and the contiguous (e.g., boost) (e.g., turbo) power (e.g., current Ii) is adjusted (e.g., by continuous (e.g., boost) (e.g., turbo) mode (e.g., PL1) controller 216) so that Vi does not go below $V_R$ over time.

In a different example, $I_{1*}R$ is compared (e.g., by continuous (e.g., boost) (e.g., turbo) mode (e.g., PL1) controller 216) with $(V_R-V_0)$ over time and contiguous (e.g., boost) (e.g., turbo) power (e.g., current Ii) is adjusted (e.g., by continuous (e.g., boost) (e.g., turbo) mode (e.g., PL1) controller 216) so that $I_{1*}R$ does not exceed $(V_R-V_0)$ over time. In other words, $I_1 \leq (V_R-V_0)/R$ over time.

In certain examples, if $I_1$ is adjusted to $I_2$ which is the limit, the IR drop from OCV is $I_2R$. In this case, battery heat over time corresponds to the energy in area A + B in FIG. 3 which is:

$$\int_{t_1}^{t_1'} I_2{}^2 R\, dt \quad or \quad \int_{t_1}^{t_1'} (V_R - V_0) I_2\, dt$$

In certain examples, as this is the allowable battery thermal limit (e.g., derived from the cooling capability from the battery to outside of the system), battery temperature does not exceed the limit when contiguous (e.g., boost) (e.g., turbo) power is adjusted by contiguous (e.g., boost) (e.g., turbo) power current 1 and the following is met:

$$\int_{t_1}^{t_1'} I^2 R\, dt \leq \int_{t_1}^{t_1'} I_2{}^2 R\, dt \quad or \quad \int_{t_1}^{t_1'} I^2 R\, dt \leq \int_{t_1}^{t_1'} (V_R - V_0) I_2\, dt$$

where $I_2$ is current limit, R is battery impedance, $V_R$ is voltage limit, $V_0$ is OCV, and t is time.

In a simplified form, the current may be the mean square current and $(V_R-V_0)$ may be the root-mean square voltage.

As certain examples herein control contiguous (e.g., boost) (e.g., turbo) power and/or current within a battery thermal limit, this mitigates battery degradation. Thus, the direct current/voltage monitoring in the examples herein controls battery heat faster than temperature monitoring.

In certain examples, a system herein thus monitors battery voltage changes during continuous (e.g., boost) (e.g., turbo) mode or monitors current, determines battery heat dissipation over time (e.g., from the battery voltage and/or current), and controls continuous (e.g., boost) (e.g., turbo) mode power without exceeding the battery thermal limit.

FIG. 4 is an example of operations for implementation 1. FIG. 4 illustrates example operations 400 for a continuous (e.g., boost) (e.g., turbo) power mode controller (e.g., circuitry) 216 for controlling continuous (e.g., boost) (e.g., turbo) mode power without exceeding a battery's thermal limit according to examples of the disclosure. Some or all of the operations 400 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 400 are performed by a power management agent (or power manager) of the other figures.

The operations 400 include, at block 402, turning on continuous (e.g., boost) (e.g., turbo-boots) power mode (e.g., PL1). The operations 400 further include, at block 404, (optionally, as shown by the dotted box) checking a temperature of one or more primary components (e.g., core/CPU) and adjusting continuous (e.g., boost) (e.g., turbo-boost) power (e.g., current). In certain examples, blocks 410 and 412 instead loop back to block 406. The operations 400 further include, at block 406, monitoring a battery voltage change relative to an open circuit voltage (OCV) (or monitoring current), and determining heat dissipation over time. The operations 400 further include, at block 408, checking if the heat dissipation over time is greater than a limit (e.g., battery thermal limit), and if no, proceeding to block 410, and if yes, proceeding to block 412. The operations 400 further include, at block 410, doing nothing (e.g., not changing the continuous (e.g., boost) (e.g., turbo-boost) mode power, e.g., frequency/voltage/current). The operations 400 further include, at block 412, decreasing the continuous (e.g., boost) (e.g., turbo-boost) mode power, e.g., frequency/voltage/current, e.g., according to the heat dissipation.

*Implementation 2: Controlling power without exceeding a battery energy dissipation limit*

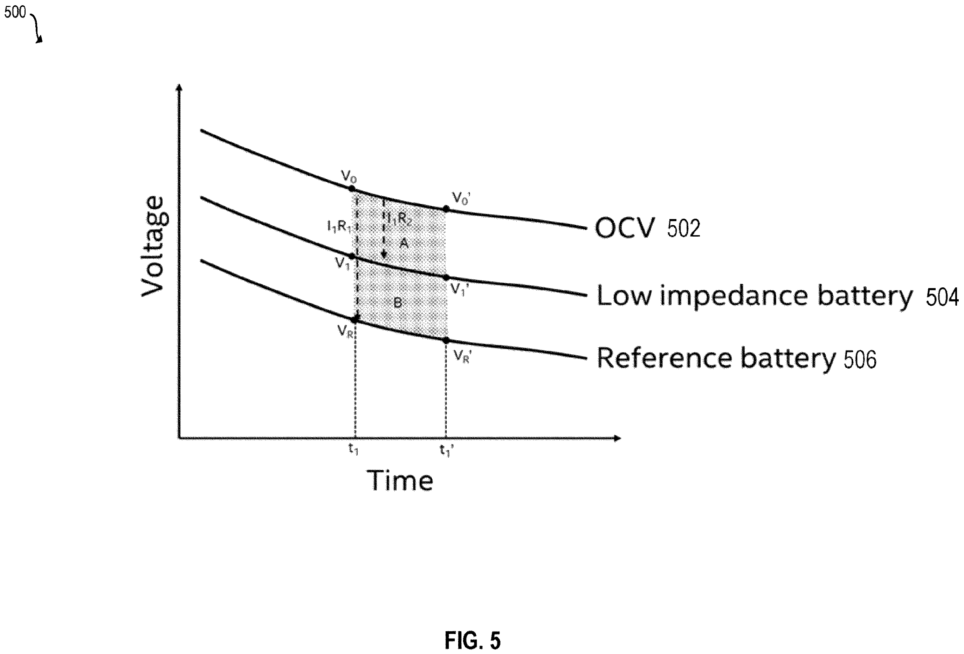

FIG. 5 illustrates a graph 500 of battery's voltage change over time for open circuit voltage (OCV) 502, a low impedance battery 504, and for a reference battery 506 according to examples of the disclosure. In certain examples, when the impedance of a reference battery (e.g., normal impedance battery) in a reference system (or digital twin) is $R_1$ and the impedance of a battery in a system (e.g., low impedance battery) is $R_2$, the I*R drop of a reference battery and a low impedance battery under current $I_1$ is $I_1*R_1$ and $I_1*R_2$, respectively, as shown in FIG. 5. In certain examples, the low (e.g., lower) impedance battery is a battery of a first brand (e.g., manufacturer) that has a lower impedance than the reference battery of a different second brand (e.g., manufacturer). In certain examples, the low (e.g., lower) impedance battery is a new battery of a brand (e.g., manufacturer) that has a lower impedance than the older reference battery of the same brand (e.g., manufacturer).

In FIG. 5, energy dissipation of a reference battery due to impedance is:

$$\int_{t_1}^{t_1'} I_1{}^2 R_1 \, dt.$$

In certain examples, energy dissipation of a low impedance battery is:

$$\int_{t_1}^{t_1'} I_1{}^2 R_2 \, dt.$$

When $R_2 < R_1$, energy dissipation of a low impedance battery is smaller than that of a reference battery by

$$\int_{t_1}^{t_1'} I_1{}^2 R_1 \, dt - \int_{t_1}^{t_1'} I_1{}^2 R_2 \, dt$$

, which corresponds to the energy dissipation of the area B in FIG. 5.

This means that current and power of the low impedance battery can be increased without decreasing battery life of a reference battery by utilizing the saved energy dissipation which is:

$$\int_{t_1}^{t_1'} I_1{}^2 R_1 \, dt - \int_{t_1}^{t_1'} I_1{}^2 R_2 \, dt.$$

When the saved energy dissipation is fully utilized, adjusted current $I_2$ meets the following:

$$\int_{t_1}^{t_1'} I_1{}^2 R_1 \, dt = \int_{t_1}^{t_1'} I_2{}^2 R_2 \, dt$$

For example, where $I_2$ is calculated as:

$$I_2 = I_1 \sqrt{\frac{R_1}{R_2}}$$

And outpower P with adjusted current $I_2$ is expressed as:

$$P = \left( V_0 \sqrt{\frac{R_1}{R_2}} - I_1 R_1 \right) I_1$$

As a non-limiting example, when a reference battery has a resistance of 0.15 Ohms, a battery in a system (e.g., a low impedance battery) has a resistance of 0.10 Ohms, OCV is 12V, and original discharge current is 5A, the output power of a low impedance battery can be at least 20% higher while maintaining battery life of a reference battery.

In certain examples, a system herein thus stores reference battery impedance information (e.g., values 224 in FIG. 2), monitors battery impedance in a system, and adjusts contiguous (e.g., boost) (e.g., turbo) power (e.g., current) based on the impedance comparison.

FIG. 6 is an example of operations for implementation 2. FIG. 6 illustrates example operations 600 for a continuous (e.g., boost) (e.g., turbo) power mode controller (e.g., circuitry) 216 for controlling continuous (e.g., boost) (e.g., turbo) mode power without exceeding a battery's thermal dissipation limit according to examples of the disclosure. Some or all of the operations 600 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 600 are performed by a power management agent (or power manager) of the other figures.

The operations 600 include, at block 602, reading impedance information (e.g., battery impedance 220R in FIG. 2) of a battery in the system. The operations 600 further include, at block 604, reading (e.g., by hardware initialization manager (e.g., BIOS), a PMA circuit 126, and/or power manager 124) reference battery impedance information (e.g., values 224 in FIG. 2). The operations 600 further include, at block 606, adjusting continuous (e.g., boost) (e.g., turbo-boost) mode power (e.g., frequency/voltage/current) based on the impedance information.

In certain examples, a system monitors battery voltage changes during continuous (e.g., boost) (e.g., turbo) power mode or monitors current, determines battery heat dissipation over time, and controls continuous (e.g., boost) (e.g., turbo) mode power without exceeding limit.

In certain examples, a system stores reference battery impedance information, monitors battery impedance in a system, and adjusts contiguous (e.g., boost) (e.g., turbo) mode current or power based on the impedance comparison.

In certain examples, $I_1$ may be the root-mean square current.

In certain examples, $R_2$ may increase when a battery is degraded. Therefore, certain examples herein (e.g., continuously) monitor $R_2$ during operation, and adjusts contiguous (e.g., boost) (e.g., turbo) mode current.

To consider other sources of heat for the battery when in closed chassis (e.g., conduction from processor (e.g., CPU) heat sink, or anything else that is raising the internal chassis temperature), the thermistor temperature readings of the battery may also be used.

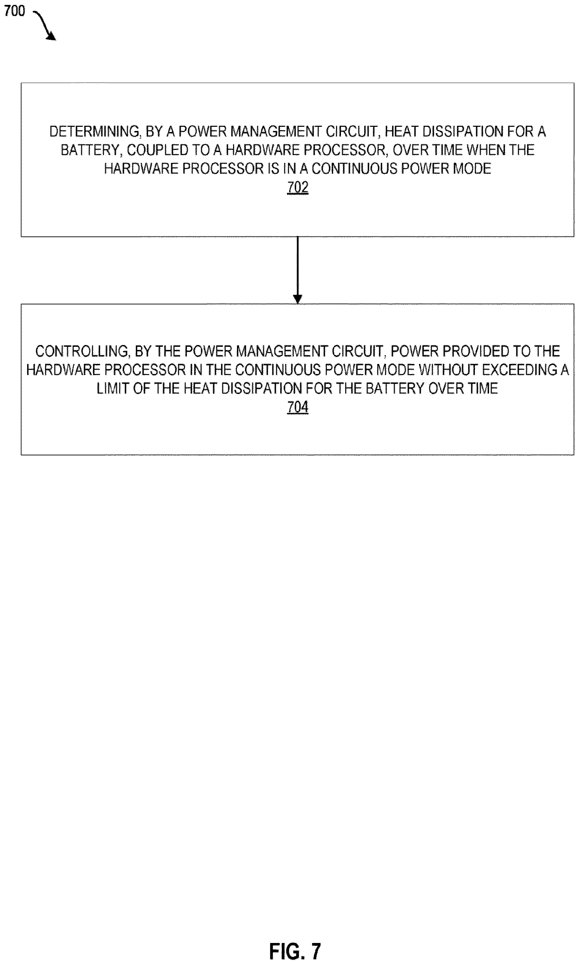

FIG. 7 illustrates example operations 700 for a method for controlling power provided to a hardware processor in a continuous (e.g., boost) power mode without exceeding a limit of heat dissipation of a battery over time according to examples of the disclosure. Some or all of the operations 700 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 700 are performed by a component(s) of the other figures (e.g., hardware initialization manager (e.g., BIOS), a PMA circuit 126, and/or power manager 124).

The operations 700 include, at block 702, determining, by a power management circuit, heat dissipation for a battery, coupled to a hardware processor, over time when the hardware processor is in a continuous power mode. The operations 700 further include, at block 704, controlling, by the power management circuit, power provided to the hardware processor in the continuous power mode without exceeding a limit of the heat dissipation for the battery over time.

At least some examples of the disclosed technologies can be described in view of the following examples:

In a first set of examples, an apparatus includes a hardware processor that includes a continuous power mode; and a power management circuit to couple to a battery, wherein the power management circuit is to: determine heat dissipation for the battery over time when the hardware processor is in the continuous power mode, and control power provided to the hardware processor in the continuous power mode without exceeding a limit of the heat dissipation for the battery over time. In certain examples, the power management circuit is to determine the heat dissipation for the battery over time based on a voltage of the battery. In certain examples, the power management circuit is to determine the heat dissipation for the battery over time based on a resistance of the battery. In certain examples, the power management circuit is to determine the heat dissipation for the battery over time based on the resistance of the battery and a reference impedance for the battery. In certain examples, the power management circuit is to determine the heat dissipation for the battery over time based on a current of the battery. In certain examples, the power management circuit is to control the power provided to the hardware processor in the continuous power mode by adjusting a continuous mode current. In certain examples, the continuous power mode of the hardware processor is a continuous boost power mode.

In another set of examples, a method includes determining, by a power management circuit, heat dissipation for a battery, coupled to a hardware processor, over time when the hardware processor is in a continuous power mode; and controlling, by the power management circuit, power provided to the hardware processor in the continuous power mode without exceeding a limit of the heat dissipation for the battery over time. In certain examples, the determining, by the power management circuit, the heat dissipation for the battery over time is based on a voltage of the battery. In certain examples, the determining, by the power management circuit, the heat dissipation for the battery over time is based on a resistance of the battery. In certain examples, the determining, by the power management circuit, the heat dissipation for the battery over time is based on the resistance of the battery and a reference impedance for the battery. In certain examples, the determining, by the power management circuit, the heat dissipation for the battery over time is based on a current of the battery. In certain examples, the controlling, by the power management circuit, the power provided to the hardware processor in the continuous power mode is by adjusting a continuous mode current. In certain examples, the continuous power mode of the hardware processor is a continuous boost power mode.

In yet another set of examples, a system includes a battery; a hardware processor, that includes a continuous power mode, coupled to the battery; and a power management circuit to determine heat dissipation for the battery over time when the hardware processor is in the continuous power mode, and control power provided to the hardware processor in the continuous power mode without exceeding a limit of the heat dissipation for the battery over time. In certain examples, the power management circuit is to determine the heat dissipation for the battery over time based on a voltage of the battery. In certain examples, the power management circuit is to determine the heat dissipation for the battery over time based on a resistance of the battery. In certain examples, the power management circuit is to determine the heat dissipation for the battery over time based on the resistance of the battery and a reference impedance for the battery. In certain examples, the power management circuit is to determine the heat dissipation for the battery over time based on a current of the battery. In certain examples, the power management circuit is to control the power provided to the hardware processor in the continuous power mode by adjusting a continuous mode current. In certain examples, the continuous power mode of the hardware processor is a continuous boost power mode.

In another set of examples, an apparatus includes a hardware processor that includes a continuous boost power mode; and a power management circuit to couple to a battery, wherein the power management circuit is to: determine heat dissipation for the battery over time when the hardware processor is in the continuous boost power mode, and control power provided to the hardware processor in the continuous boost power mode without exceeding a limit of the heat dissipation over time. In certain examples, the power management circuit is to determine the heat dissipation for the battery over time based on a voltage of the battery. In certain examples, the power management circuit is to determine the heat dissipation for the battery over time based on a resistance of the battery. In certain examples, the power management circuit is to determine the heat dissipation for the battery over time based on the resistance of the battery and a reference impedance for the battery. In certain examples, the power management circuit is to determine the heat dissipation for the battery over time based on a current of the battery. In certain examples, the power management circuit is to control the power provided to the hardware processor in the continuous boost power mode by adjusting a boost mode current.

Exemplary architectures, systems, etc. that the above may be used in are detailed below.

Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

Example Systems

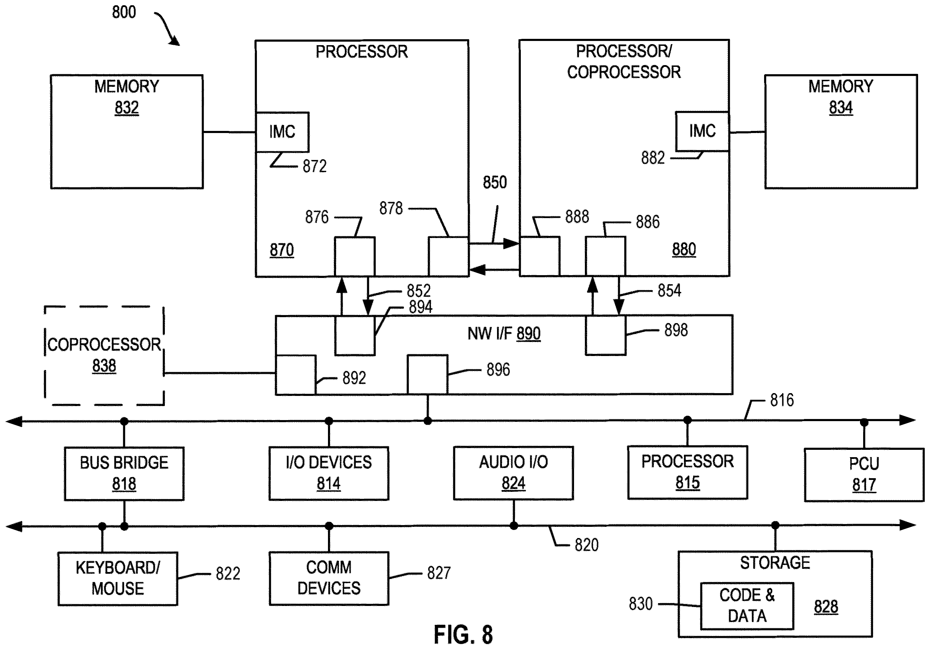

FIG. 8 illustrates an example computing system. Multiprocessor system 800 is an interfaced system and includes a plurality of processors or cores including a first processor 870 and a second processor 880 coupled via an interface 850 such as a point-to-point (P-P) interconnect, a fabric, and/or bus. In some examples, the first processor 870 and the second processor 880 are homogeneous. In some examples, first processor 870 and the second processor 880 are heterogenous. Though the example system 800 is shown to have two processors, the system may have three or more processors, or may be a single processor system. In some examples, the computing system is a system on a chip (SoC).

Processors 870 and 880 are shown including integrated memory controller (IMC) circuitry 872 and 882, respectively. Processor 870 also includes interface circuits 876 and 878; similarly, second processor 880 includes interface circuits 886 and 888. Processors 870, 880 may exchange information via the interface 850 using interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a network interface (NW I/F) 890 via individual interfaces 852, 854 using interface circuits 876, 894, 886, 898. The network interface 890 (e.g., one or more of an interconnect, bus, and/or fabric, and in some examples is a chipset) may optionally exchange information with a coprocessor 838 via an interface circuit 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via an interface such as P-P interconnect, such that either or both processors' local cache information may be stored in the shared cache if a processor is placed into a low power mode.

Network interface 890 may be coupled to a first interface 816 via interface circuit 896. In some examples, first interface 816 may be an interface such as a Peripheral Component Interconnect (PCI) interconnect, a PCI Express interconnect or another I/O interconnect. In some examples, first interface 816 is coupled to a power control unit (PCU) 817, which may include circuitry, software, and/or firmware to perform power management operations with regard to the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interface 816, along with a bus bridge 818 which couples first interface 816 to a second interface 820. In some examples, one or more additional processor(s) 815, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 816. In some examples, second interface 820 may be a low pin count (LPC) interface. Various devices may be coupled to second interface 820 including, for example, a keyboard and/or mouse 822, communication devices 827 and storage circuitry 828. Storage circuitry 828 may be one or more non-transitory machine-readable storage media as described below, such as a disk drive or other mass storage device which may include instructions/code and data 830 and may implement instruction storage in some examples. Further, an audio I/O 824 may be coupled to second interface 820. Note that other architectures than the point-to-point architecture described above are possible. For example, instead of the point-to-point architecture, a system such as multiprocessor system 800 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

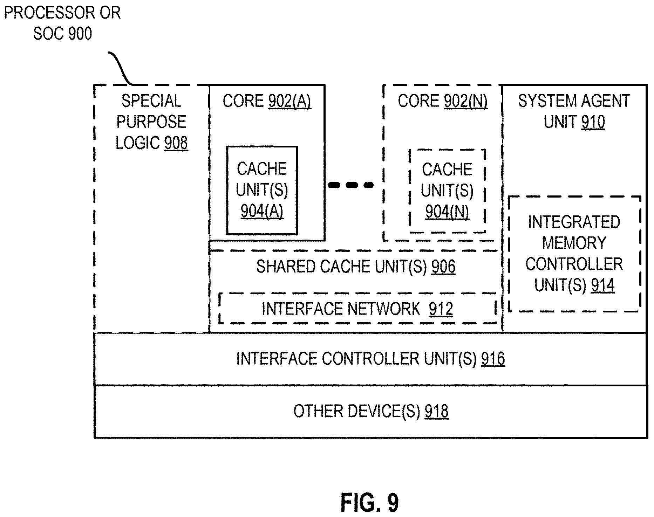

FIG. 9 illustrates a block diagram of an example processor and/or SoC 900 that may have one or more cores and an integrated memory controller. The solid lined boxes illustrate a processor 900 with a single core 902(A), system agent unit circuitry 910, and a set of one or more interface controller unit(s) circuitry 916, while the optional addition of the dashed lined boxes illustrates an alternative processor 900 with multiple cores 902(A)-(N), a set of one or more integrated memory controller unit(s) circuitry 914 in the system agent unit circuitry 910, and special purpose logic 908, as well as a set of one or more interface controller units circuitry 916. Note that the processor 900 may be one of the processors 870 or 880, or co-processor 838 or 815 of FIG. 8.

Thus, different implementations of the processor 900 may include: 1) a CPU with the special purpose logic 908 being integrated graphics and/or scientific (throughput) logic (which may include one or more cores, not shown), and the cores 902(A)-(N) being one or more general purpose cores (e.g., general purpose in-order cores, general purpose out-of-order cores, or a combination of the two); 2) a coprocessor with the cores 902(A)-(N) being a large number of special purpose cores intended primarily for graphics and/or scientific (throughput); and 3) a coprocessor with the cores 902(A)-(N) being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904(A)-(N) within the cores 902(A)-(N), a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples interface network circuitry 912 (e.g., a ring interconnect) interfaces the special purpose logic 908 (e.g., integrated graphics logic), the set of shared cache unit(s) circuitry 906, and the system agent unit circuitry 910, alternative examples use any number of well-known techniques for interfacing such units. In some examples, coherency is maintained between one or more of the shared cache unit(s) circuitry 906 and cores 902(A)-(N). In some examples, interface controller units circuitry 916 couple the cores 902 to one or more other devices 918 such as one or more I/O devices, storage, one or more communication devices (e.g., wireless networking, wired networking, etc.), etc.

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous in terms of instruction set architecture (ISA). Alternatively, the cores 902(A)-(N) may be heterogeneous in terms of ISA; that is, a subset of the cores 902(A)-(N) may be capable of executing an ISA, while other cores may be capable of executing only a subset of that ISA or another ISA.

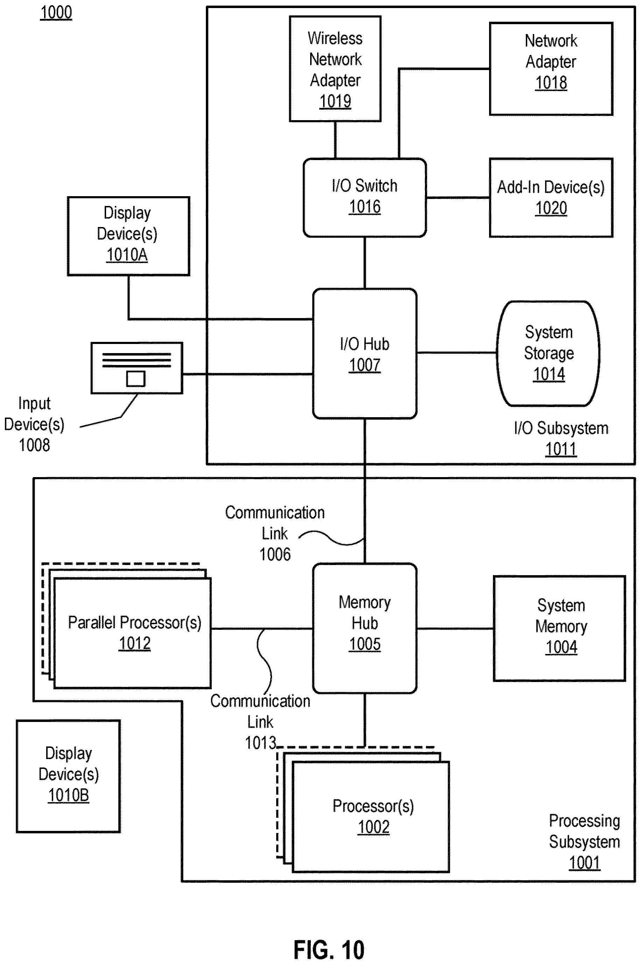

FIG. 10 is a block diagram illustrating a computing system 1000 configured to implement one or more aspects of the examples described herein. The computing system 1000 includes a processing subsystem 1001 having one or more processor(s) 1002 and a system memory 1004 communicating via an interconnection path that may include a memory hub 1005. The memory hub 1005 may be a separate component within a chipset component or may be integrated within the one or more processor(s) 1002. The memory hub 1005 couples with an I/O subsystem 1011 via a communication link 1006. The I/O subsystem 1011 includes an I/O hub 1007 that can enable the computing system 1000 to receive input from one or more input device(s) 1008. Additionally, the I/O hub 1007 can enable a display controller, which may be included in the one or more processor(s) 1002, to provide outputs to one or more display device(s) 1010A. In some examples the one or more display device(s) 1010A coupled with the I/O hub 1007 can include a local, internal, or embedded display device.

The processing subsystem 1001, for example, includes one or more parallel processor(s) 1012 coupled to memory hub 1005 via a bus or other communication link 1013. The communication link 1013 may be one of any number of standards-based communication link technologies or protocols, such as, but not limited to PCI Express, or may be a vendor specific communications interface or communications fabric. The one or more parallel processor(s) 1012 may form a computationally focused parallel or vector processing system that can include a large number of processing cores and/or processing clusters, such as a many integrated core (MIC) processor. For example, the one or more parallel processor(s) 1012 form a graphics processing subsystem that can output pixels to one of the one or more display device(s) 1010A coupled via the I/O hub 1007. The one or more parallel processor(s) 1012 can also include a display controller and display interface (not shown) to enable a direct connection to one or more display device(s) 1010B.

Within the I/O subsystem 1011, a system storage unit 1014 can connect to the I/O hub 1007 to provide a storage mechanism for the computing system 1000. An I/O switch 1016 can be used to provide an interface mechanism to enable connections between the I/O hub 1007 and other components, such as a network adapter 1018 and/or wireless network adapter 1019 that may be integrated into the platform, and various other devices that can be added via one or more add-in device(s) 1020. The add-in device(s) 1020 may also include, for example, one or more external graphics processor devices, graphics cards, and/or compute accelerators. The network adapter 1018 can be an Ethernet adapter or another wired network adapter. The wireless network adapter 1019 can include one or more of a Wi-Fi, Bluetooth, near field communication (NFC), or other network device that includes one or more wireless radios.

The computing system 1000 can include other components not explicitly shown, including USB or other port connections, optical storage drives, video capture devices, and the like, which may also be connected to the I/O hub 1007. Communication paths interconnecting the various components in FIG. 10 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link™ (CXL™) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1012 may incorporate circuitry optimized for graphics and video processing, including, for example, video output circuitry, and constitutes a graphics processing unit (GPU). Alternatively or additionally, the one or more parallel processor(s) 1012 can incorporate circuitry optimized for general purpose processing, while preserving the underlying computational architecture, described in greater detail herein. Components of the computing system 1000 may be integrated with one or more other system elements on a single integrated circuit. For example, the one or more parallel processor(s) 1012, memory hub 1005, processor(s) 1002, and I/O hub 1007 can be integrated into a system on chip (SoC) integrated circuit. Alternatively, the components of the computing system 1000 can be integrated into a single package to form a system in package (SIP) configuration. In some examples at least a portion of the components of the computing system 1000 can be integrated into a multi-chip module (MCM), which can be interconnected with other multi-chip modules into a modular computing system.

It will be appreciated that the computing system 1000 shown herein is illustrative and that variations and modifications are possible. The connection topology, including the number and arrangement of bridges, the number of processor(s) 1002, and the number of parallel processor(s) 1012, may be modified as desired. For instance, system memory 1004 can be connected to the processor(s) 1002 directly rather than through a bridge, while other devices communicate with system memory 1004 via the memory hub 1005 and the processor(s) 1002. In other alternative topologies, the parallel processor(s) 1012 are connected to the I/O hub 1007 or directly to one of the one or more processor(s) 1002, rather than to the memory hub 1005. In other examples, the I/O hub 1007 and memory hub 1005 may be integrated into a single chip. It is also possible that two or more sets of processor(s) 1002 are attached via multiple sockets, which can couple with two or more instances of the parallel processor(s) 1012.

Some of the particular components shown herein are optional and may not be included in all implementations of the computing system 1000. For example, any number of add-in cards or peripherals may be supported, or some components may be eliminated. Furthermore, some architectures may use different terminology for components similar to those illustrated in FIG. 10. For example, the memory hub 1005 may be referred to as a Northbridge in some architectures, while the I/O hub 1007 may be referred to as a Southbridge.

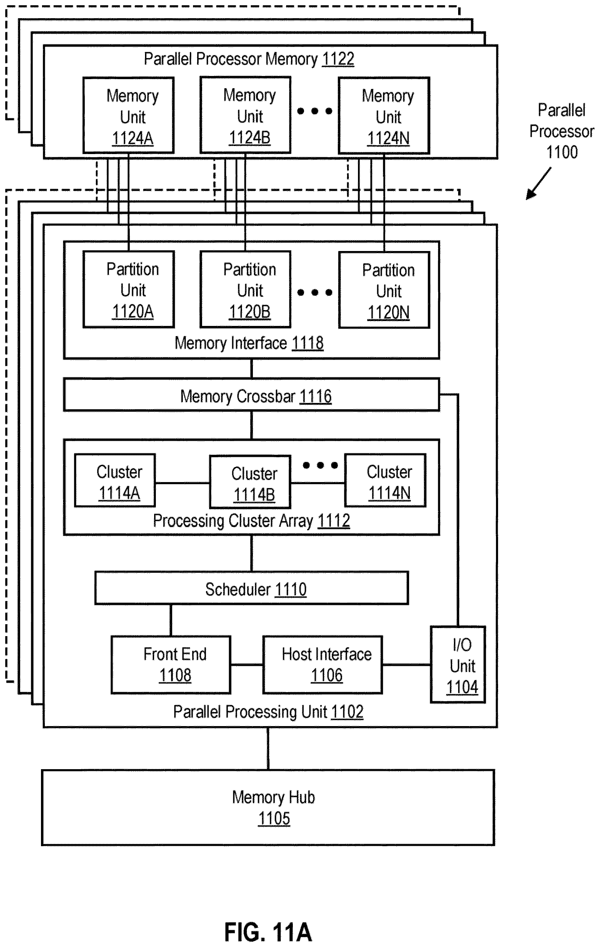

FIG. 11A illustrates examples of a parallel processor 1100. The parallel processor 1100 may be a GPU, GPGPU or the like as described herein. The various components of the parallel processor 1100 may be implemented using one or more integrated circuit devices, such as programmable processors, application specific integrated circuits (ASICs), or field programmable gate arrays (FPGA). The illustrated parallel processor 1100 may be one or more of the parallel processor(s) 1012 shown in FIG. 10.

The parallel processor 1100 includes a parallel processing unit 1102. The parallel processing unit includes an I/O unit 1104 that enables communication with other devices, including other instances of the parallel processing unit 1102. The I/O unit 1104 may be directly connected to other devices. For instance, the I/O unit 1104 connects with other devices via the use of a hub or switch interface, such as memory hub 1005. The connections between the memory hub 1005 and the I/O unit 1104 form a communication link 1013. Within the parallel processing unit 1102, the I/O unit 1104 connects with a host interface 1106 and a memory crossbar 1116, where the host interface 1106 receives commands directed to performing processing operations and the memory crossbar 1116 receives commands directed to performing memory operations.

When the host interface 1106 receives a command buffer via the I/O unit 1104, the host interface 1106 can direct work operations to perform those commands to a front end 1108. In some examples the front end 1108 couples with a scheduler 1110, which is configured to distribute commands or other work items to a processing cluster array 1112. The scheduler 1110 ensures that the processing cluster array 1112 is properly configured and in a valid state before tasks are distributed to the processing clusters of the processing cluster array 1112. The scheduler 1110 may be implemented via firmware logic executing on a microcontroller. The microcontroller implemented scheduler 1110 is configurable to perform complex scheduling and work distribution operations at coarse and fine granularity, enabling rapid preemption and context switching of threads executing on the processing cluster array 1112. Preferably, the host software can prove workloads for scheduling on the processing cluster array 1112 via one of multiple graphics processing doorbells. In other examples, polling for new workloads or interrupts can be used to identify or indicate availability of work to perform. The workloads can then be automatically distributed across the processing cluster array 1112 by the scheduler 1110 logic within the scheduler microcontroller.

The processing cluster array 1112 can include up to "N" processing clusters (e.g., cluster 1114A, cluster 1114B, through cluster 1114N). Each cluster 1114A-1114N of the processing cluster array 1112 can execute a large number of concurrent threads. The scheduler 1110 can allocate work to the clusters 1114A-1114N of the processing cluster array 1112 using various scheduling and/or work distribution algorithms, which may vary depending on the workload arising for each type of program or computation. The scheduling can be handled dynamically by the scheduler 1110 or can be assisted in part by compiler logic during compilation of program logic configured for execution by the processing cluster array 1112. Optionally, different clusters 1114A-1114N of the processing cluster array 1112 can be allocated for processing different types of programs or for performing different types of computations.

The processing cluster array 1112 can be configured to perform various types of parallel processing operations. For example, the processing cluster array 1112 is configured to perform general-purpose parallel compute operations. For example, the processing cluster array 1112 can include logic to execute processing tasks including filtering of video and/or audio data, performing modeling operations, including physics operations, and performing data transformations.

The processing cluster array 1112 is configured to perform parallel graphics processing operations. In such examples in which the parallel processor 1100 is configured to perform graphics processing operations, the processing cluster array 1112 can include additional logic to support the execution of such graphics processing operations, including, but not limited to texture sampling logic to perform texture operations, as well as tessellation logic and other vertex processing logic. Additionally, the processing cluster array 1112 can be configured to execute graphics processing related shader programs such as, but not limited to vertex shaders, tessellation shaders, geometry shaders, and pixel shaders. The parallel processing unit 1102 can transfer data from system memory via the I/O unit 1104 for processing. The transferred data can be stored to on-chip memory (e.g., parallel processor memory 1122) during processing, then written back to system memory.

In examples in which the parallel processing unit 1102 is used to perform graphics processing, the scheduler 1110 may be configured to divide the processing workload into approximately equal sized tasks, to better enable distribution of the graphics processing operations to multiple clusters 1114A-1114N of the processing cluster array 1112. In some of these examples, portions of the processing cluster array 1112 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1114A-1114N may be stored in buffers to allow the intermediate data to be transmitted between clusters 1114A-1114N for further processing.

During operation, the processing cluster array 1112 can receive processing tasks to be executed via the scheduler 1110, which receives commands defining processing tasks from front end 1108. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 1110 may be configured to fetch the indices corresponding to the tasks or may receive the indices from the front end 1108. The front end 1108 can be configured to ensure the processing cluster array 1112 is configured to a valid state before the workload specified by incoming command buffers (e.g., batch-buffers, push buffers, etc.) is initiated.

Each of the one or more instances of the parallel processing unit 1102 can couple with parallel processor memory 1122. The parallel processor memory 1122 can be accessed via the memory crossbar 1116, which can receive memory requests from the processing cluster array 1112 as well as the I/O unit 1104. The memory crossbar 1116 can access the parallel processor memory 1122 via a memory interface 1118. The memory interface 1118 can include multiple partition units (e.g., partition unit 1120A, partition unit 1120B, through partition unit 1120N) that can each couple to a portion (e.g., memory unit) of parallel processor memory 1122. The number of partition units 1120A-1120N may be configured to be equal to the number of memory units, such that a first partition unit 1120A has a corresponding first memory unit 1124A, a second partition unit 1120B has a corresponding second memory unit 1124B, and an Nth partition unit 1120N has a corresponding Nth memory unit 1124N. In other examples, the number of partition units 1120A-1120N may not be equal to the number of memory devices.

The memory units 1124A-1124N can include various types of memory devices, including dynamic random-access memory (DRAM) or graphics random access memory, such as synchronous graphics random access memory (SGRAM), including graphics double data rate (GDDR) memory. Optionally, the memory units 1124A-1124N may also include 3D stacked memory, including but not limited to high bandwidth memory (HBM). Persons skilled in the art will appreciate that the specific implementation of the memory units 1124A-1124N can vary and can be selected from one of various conventional designs. Render targets, such as frame buffers or texture maps may be stored across the memory units 1124A-1124N, allowing partition units 1120A-1120N to write portions of each render target in parallel to efficiently use the available bandwidth of parallel processor memory 1122. In some examples, a local instance of the parallel processor memory 1122 may be excluded in favor of a unified memory design that utilizes system memory in conjunction with local cache memory.

Optionally, any one of the clusters 1114A-1114N of the processing cluster array 1112 has the ability to process data that will be written to any of the memory units 1 124A-1124N within parallel processor memory 1122. The memory crossbar 1116 can be configured to transfer the output of each cluster 1114A-1114N to any partition unit 1120A-1120N or to another cluster 1114A-1114N, which can perform additional processing operations on the output. Each cluster 1114A-1114N can communicate with the memory interface 1118 through the memory crossbar 1116 to read from or write to various external memory devices. In one of the examples with the memory crossbar 1116 the memory crossbar 1116 has a connection to the memory interface 1118 to communicate with the I/O unit 1104, as well as a connection to a local instance of the parallel processor memory 1122, enabling the processing units within the different processing clusters 1114A-1114N to communicate with system memory or other memory that is not local to the parallel processing unit 1102. Generally, the memory crossbar 1116 may, for example, be able to use virtual channels to separate traffic streams between the clusters 1114A-1114N and the partition units 1120A-1120N.

While a single instance of the parallel processing unit 1102 is illustrated within the parallel processor 1100, any number of instances of the parallel processing unit 1102 can be included. For example, multiple instances of the parallel processing unit 1102 can be provided on a single add-in card, or multiple add-in cards can be interconnected. For example, the parallel processor 1100 can be an add-in device, such as add-in device 1020 of FIG. 10, which may be a graphics card such as a discrete graphics card that includes one or more GPUs, one or more memory devices, and device-to-device or network or fabric interfaces. The different instances of the parallel processing unit 1102 can be configured to inter-operate even if the different instances have different numbers of processing cores, different amounts of local parallel processor memory, and/or other configuration differences. Optionally, some instances of the parallel processing unit 1102 can include higher precision floating point units relative to other instances. Systems incorporating one or more instances of the parallel processing unit 1102 or the parallel processor 1100 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1102 can be partitioned into multiple instances. Those multiple instances can be configured to execute workloads associated with different clients in an isolated manner, enabling a pre-determined quality of service to be provided for each client. For example, each cluster 1114A-1114N can be compartmentalized and isolated from other clusters, allowing the processing cluster array 1112 to be divided into multiple compute partitions or instances. In such configuration, workloads that execute on an isolated partition are protected from faults or errors associated with a different workload that executes on a different partition. The partition units 1120A-1120N can be configured to enable a dedicated and/or isolated path to memory for the clusters 1114A-1114N associated with the respective compute partitions. This datapath isolation enables the compute resources within a partition can communicate with one or more assigned memory units 1124A-1124N without being subjected to inference by the activities of other partitions.

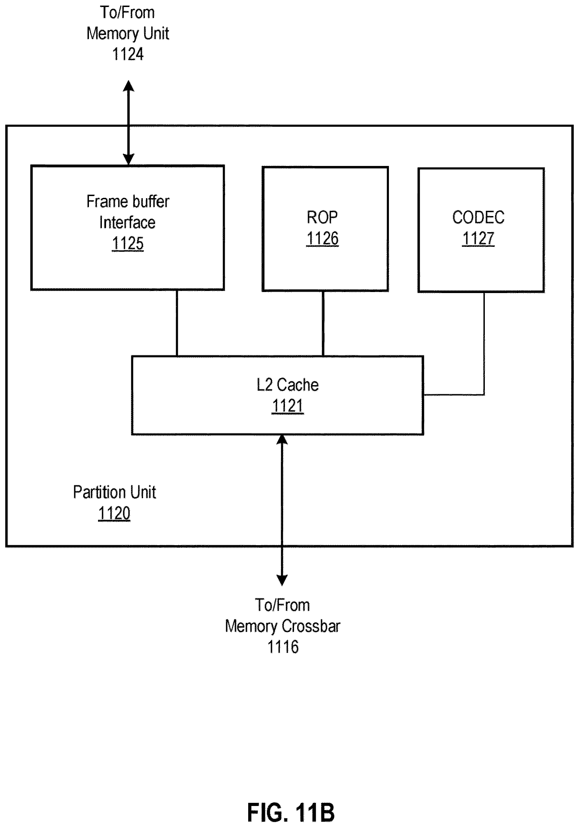

FIG. 11B is a block diagram of a partition unit 1120. The partition unit 1120 may be an instance of one of the partition units 1120A-1120N of FIG. 11A. As illustrated, the partition unit 1120 includes an L2 cache 1121, a frame buffer interface 1125, and a ROP 1126 (raster operations unit). The L2 cache 1121 is a read/write cache that is configured to perform load and store operations received from the memory crossbar 1116 and ROP 1126. Read misses and urgent write-back requests are output by L2 cache 1121 to frame buffer interface 1125 for processing. Updates can also be sent to the frame buffer via the frame buffer interface 1125 for processing. In some examples the frame buffer interface 1125 interfaces with one of the memory units in parallel processor memory, such as the memory units 1124A-1124N of FIG. 11A (e.g., within parallel processor memory 1122). The partition unit 1120 may additionally or alternatively also interface with one of the memory units in parallel processor memory via a memory controller (not shown).

In graphics applications, the ROP 1126 is a processing unit that performs raster operations such as stencil, z test, blending, and the like. The ROP 1126 then outputs processed graphics data that is stored in graphics memory. In some examples the ROP 1126 includes or couples with a CODEC 1127 that includes compression logic to compress depth or color data that is written to memory or the L2 cache 1121 and decompress depth or color data that is read from memory or the L2 cache 1121. The compression logic can be lossless compression logic that makes use of one or more of multiple compression algorithms. The type of compression that is performed by the CODEC 1127 can vary based on the statistical characteristics of the data to be compressed. For example, in some examples, delta color compression is performed on depth and color data on a per-tile basis. In some examples the CODEC 1127 includes compression and decompression logic that can compress and decompress compute data associated with machine learning operations. The CODEC 1127 can, for example, compress sparse matrix data for sparse machine learning operations. The CODEC 1127 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 1126 may be included within each processing cluster (e.g., cluster 1114A-1114N of FIG. 11A) instead of within the partition unit 1120. In such example, read and write requests for pixel data are transmitted over the memory crossbar 1116 instead of pixel fragment data. The processed graphics data may be displayed on a display device, such as one of the one or more display device(s) 1010A-1010B of FIG. 10, routed for further processing by the processor(s) 1002, or routed for further processing by one of the processing entities within the parallel processor 1100 of FIG. 11A.

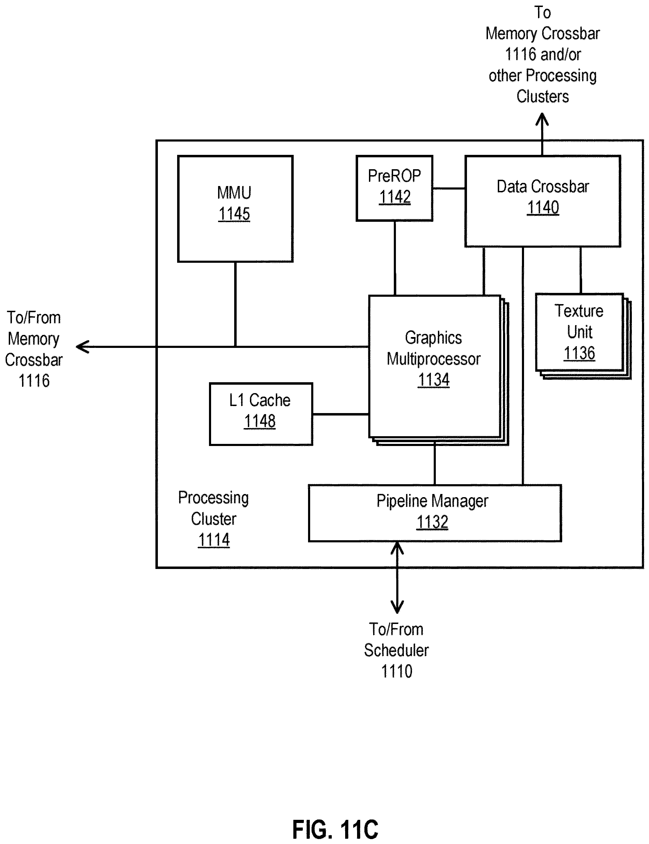

FIG. 11C is a block diagram of a processing cluster 1114 within a parallel processing unit. For example, the processing cluster is an instance of one of the processing clusters 1114A-1114N of FIG. 11A. The processing cluster 1114 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1114 can be controlled via a pipeline manager 1132 that distributes processing tasks to SIMT parallel processors. The pipeline manager 1132 receives instructions from the scheduler 1110 of FIG. 11A and manages execution of those instructions via a graphics multiprocessor 1134 and/or a texture unit 1136. The illustrated graphics multiprocessor 1134 is an exemplary instance of a SIMT parallel processor. However, various types of SIMT parallel processors of differing architectures may be included within the processing cluster 1114. One or more instances of the graphics multiprocessor 1134 can be included within a processing cluster 1114. The graphics multiprocessor 1134 can process data and a data crossbar 1140 can be used to distribute the processed data to one of multiple possible destinations, including other shader units. The pipeline manager 1132 can facilitate the distribution of processed data by specifying destinations for processed data to be distributed via the data crossbar 1140.

Each graphics multiprocessor 1134 within the processing cluster 1114 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1114 constitute a thread. A set of threads executing across the set of parallel processing engines is a thread group. A thread group executes the same program on different input data. Each thread within a thread group can be assigned to a different processing engine within a graphics multiprocessor 1134. A thread group may include fewer threads than the number of processing engines within the graphics multiprocessor 1134. When a thread group includes fewer threads than the number of processing engines, one or more of the processing engines may be idle during cycles in which that thread group is being processed. A thread group may also include more threads than the number of processing engines within the graphics multiprocessor 1134. When the thread group includes more threads than the number of processing engines within the graphics multiprocessor 1134, processing can be performed over consecutive clock cycles. Optionally, multiple thread groups can be executed concurrently on the graphics multiprocessor 1134.

The graphics multiprocessor 1134 may include an internal cache memory to perform load and store operations. Optionally, the graphics multiprocessor 1134 can forego an internal cache and use a cache memory (e.g., level 1 (L1) cache 1148) within the processing cluster 1114. Each graphics multiprocessor 1134 also has access to level 2 (L2) caches within the partition units (e.g., partition units 1120A-1120N of FIG. 11A) that are shared among all processing clusters 1114 and may be used to transfer data between threads. The graphics multiprocessor 1134 may also access off-chip global memory, which can include one or more of local parallel processor memory and/or system memory. Any memory external to the parallel processing unit 1102 may be used as global memory. Examples in which the processing cluster 1114 includes multiple instances of the graphics multiprocessor 1134 can share common instructions and data, which may be stored in the L1 cache 1148.

Each processing cluster 1114 may include an MMU 1145 (memory management unit) that is configured to map virtual addresses into physical addresses. In other examples, one or more instances of the MMU 1145 may reside within the memory interface 1118 of FIG. 11A. The MMU 1145 includes a set of page table entries (PTEs) used to map a virtual address to a physical address of a tile and optionally a cache line index. The MMU 1145 may include address translation lookaside buffers (TLB) or caches that may reside within the graphics multiprocessor 1134 or the L1 cache 1148 of processing cluster 1114. The physical address is processed to distribute surface data access locality to allow efficient request interleaving among partition units. The cache line index may be used to determine whether a request for a cache line is a hit or miss.

In graphics and computing applications, a processing cluster 1114 may be configured such that each graphics multiprocessor 1134 is coupled to a texture unit 1136 for performing texture mapping operations, e.g., determining texture sample positions, reading texture data, and filtering the texture data. Texture data is read from an internal texture L1 cache (not shown) or in some examples from the L1 cache within graphics multiprocessor 1134 and is fetched from an L2 cache, local parallel processor memory, or system memory, as needed. Each graphics multiprocessor 1134 outputs processed tasks to the data crossbar 1140 to provide the processed task to another processing cluster 1114 for further processing or to store the processed task in an L2 cache, local parallel processor memory, or system memory via the memory crossbar 1116. A preROP 1142 (pre-raster operations unit) is configured to receive data from graphics multiprocessor 1134, direct data to ROP units, which may be located with partition units as described herein (e.g., partition units 1120A-1120N of FIG. 11A). The preROP 1142 unit can perform optimizations for color blending, organize pixel color data, and perform address translations.

It will be appreciated that the core architecture described herein is illustrative and that variations and modifications are possible. Any number of processing units, e.g., graphics multiprocessor 1134, texture units 1136, preROPs 1142, etc., may be included within a processing cluster 1114. Further, while only one processing cluster 1114 is shown, a parallel processing unit as described herein may include any number of instances of the processing cluster 1114. Optionally, each processing cluster 1114 can be configured to operate independently of other processing clusters 1114 using separate and distinct processing units, L1 caches, L2 caches, etc.

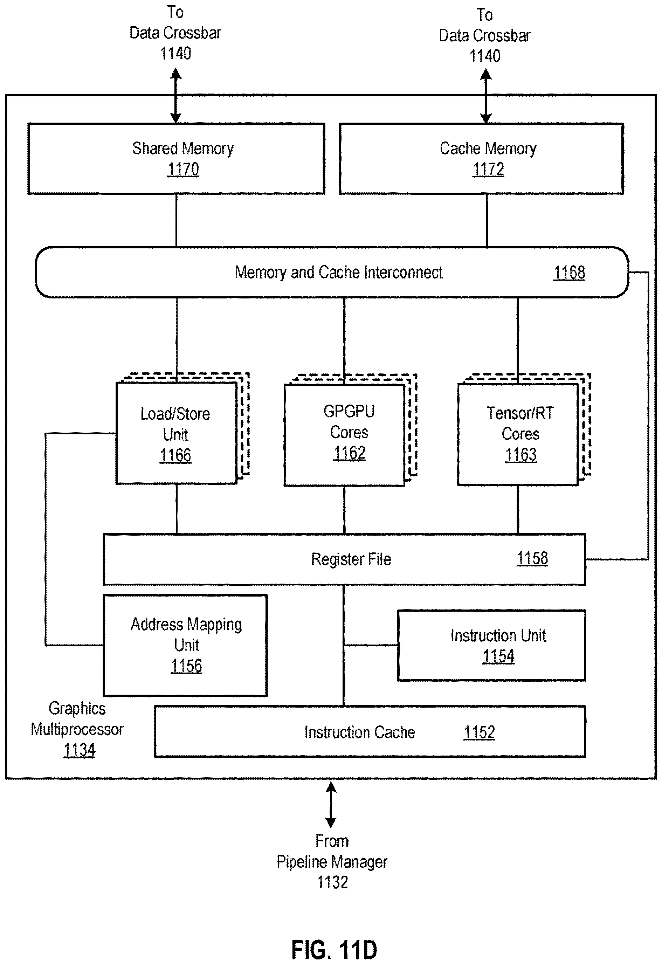

FIG. 11D shows an example of the graphics multiprocessor 1134 in which the graphics multiprocessor 1134 couples with the pipeline manager 1132 of the processing cluster 1114. The graphics multiprocessor 1134 has an execution pipeline including but not limited to an instruction cache 1152, an instruction unit 1154, an address mapping unit 1156, a register file 1158, one or more general purpose graphics processing unit (GPGPU) cores 1162, and one or more load/store units 1166. The GPGPU cores 1162 and load/store units 1166 are coupled with cache memory 1172 and shared memory 1170 via a memory and cache interconnect 1168. The graphics multiprocessor 1134 may additionally include tensor and/or ray-tracing cores 1163 that include hardware logic to accelerate matrix and/or ray-tracing operations.

The instruction cache 1152 may receive a stream of instructions to execute from the pipeline manager 1132. The instructions are cached in the instruction cache 1152 and dispatched for execution by the instruction unit 1154. The instruction unit 1154 can dispatch instructions as thread groups (e.g., warps), with each thread of the thread group assigned to a different execution unit within GPGPU core 1162. An instruction can access any of a local, shared, or global address space by specifying an address within a unified address space. The address mapping unit 1156 can be used to translate addresses in the unified address space into a distinct memory address that can be accessed by the load/store units 1166.

The register file 1158 provides a set of registers for the functional units of the graphics multiprocessor 1134. The register file 1158 provides temporary storage for operands connected to the data paths of the functional units (e.g., GPGPU cores 1162, load/store units 1166) of the graphics multiprocessor 1134. The register file 1158 may be divided between each of the functional units such that each functional unit is allocated a dedicated portion of the register file 1158. For example, the register file 1158 may be divided between the different warps being executed by the graphics multiprocessor 1134.

The GPGPU cores 1162 can each include floating point units (FPUs) and/or integer arithmetic logic units (ALUs) that are used to execute instructions of the graphics multiprocessor 1134. In some implementations, the GPGPU cores 1162 can include hardware logic that may otherwise reside within the tensor and/or ray-tracing cores 1163. The GPGPU cores 1162 can be similar in architecture or can differ in architecture. For example and in some examples, a first portion of the GPGPU cores 1162 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1134 can additionally include one or more fixed function or special function units to perform specific functions such as copy rectangle or pixel blending operations. One or more of the GPGPU cores can also include fixed or special function logic.

The GPGPU cores 1162 may include SIMD logic capable of performing a single instruction on multiple sets of data. Optionally, GPGPU cores 1162 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 1168 is an interconnect network that connects each of the functional units of the graphics multiprocessor 1134 to the register file 1158 and to the shared memory 1170. For example, the memory and cache interconnect 1168 is a crossbar interconnect that allows the load/store unit 1166 to implement load and store operations between the shared memory 1170 and the register file 1158. The register file 1158 can operate at the same frequency as the GPGPU cores 1162, thus data transfer between the GPGPU cores 1162 and the register file 1158 is very low latency. The shared memory 1170 can be used to enable communication between threads that execute on the functional units within the graphics multiprocessor 1134. The cache memory 1172 can be used as a data cache for example, to cache texture data communicated between the functional units and the texture unit 1136. The shared memory 1170 can also be used as a program managed cached. The shared memory 1170 and the cache memory 1172 can couple with the data crossbar 1140 to enable communication with other components of the processing cluster. Threads executing on the GPGPU cores 1162 can programmatically store data within the shared memory in addition to the automatically cached data that is stored within the cache memory 1172.

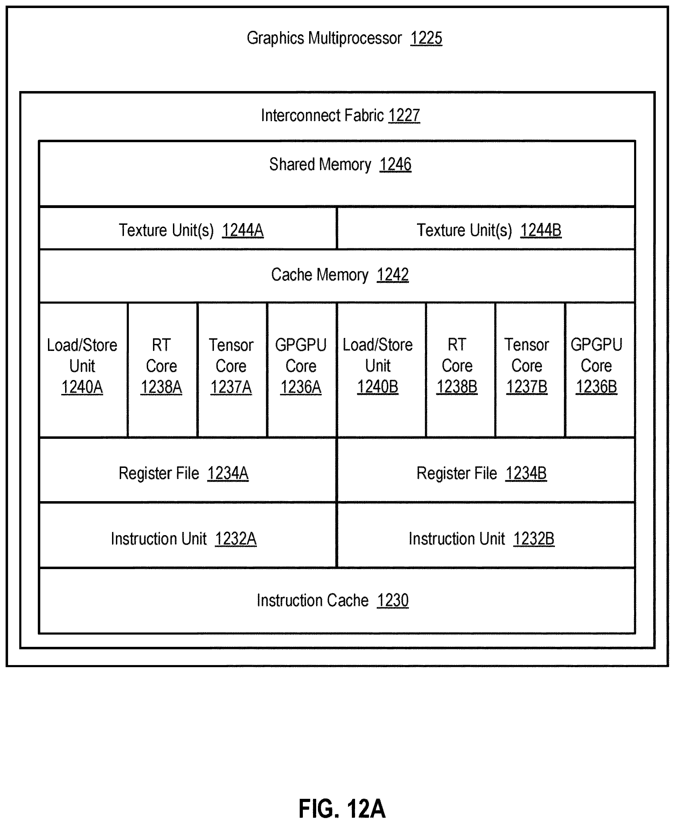

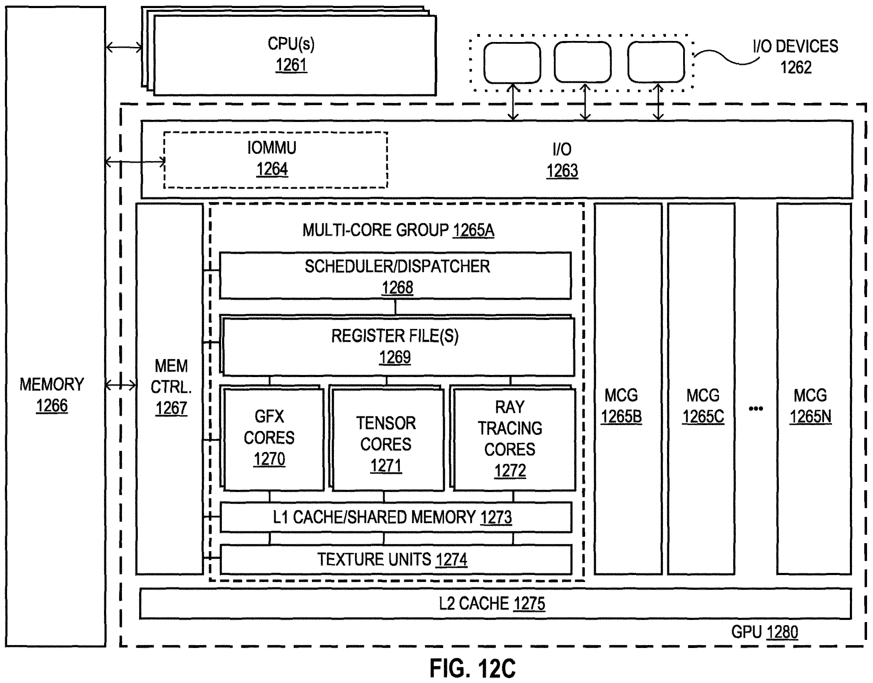

FIGS. 12A-12C illustrate additional graphics multiprocessors, according to examples. FIG. 12A-12B illustrate graphics multiprocessors 1225, 1250, which are related to the graphics multiprocessor 1134 of FIG. 11C and may be used in place of one of those. Therefore, the disclosure of any features in combination with the graphics multiprocessor 1134 herein also discloses a corresponding combination with the graphics multiprocessor(s) 1225, 1250, but is not limited to such. FIG. 12C illustrates a graphics processing unit (GPU) 1280 which includes dedicated sets of graphics processing resources arranged into multi-core groups 1265A-1265N, which correspond to the graphics multiprocessors 1225, 1250. The illustrated graphics multiprocessors 1225, 1250 and the multi-core groups 1265A-1265N can be streaming multiprocessors (SM) capable of simultaneous execution of a large number of execution threads.

The graphics multiprocessor 1225 of FIG. 12A includes multiple additional instances of execution resource units relative to the graphics multiprocessor 1134 of FIG. 11D. For example, the graphics multiprocessor 1225 can include multiple instances of the instruction unit 1232A-1232B, register file 1234A-1234B, and texture unit(s) 1244A-1244B. The graphics multiprocessor 1225 also includes multiple sets of graphics or compute execution units (e.g., GPGPU core 1236A-1236B, tensor core 1237A-1237B, ray-tracing core 1238A-1238B) and multiple sets of load/store units 1240A-1240B. The execution resource units have a common instruction cache 1230, texture and/or data cache memory 1242, and shared memory 1246.

The various components can communicate via an interconnect fabric 1227. The interconnect fabric 1227 may include one or more crossbar switches to enable communication between the various components of the graphics multiprocessor 1225. The interconnect fabric 1227 may be a separate, high-speed network fabric layer upon which each component of the graphics multiprocessor 1225 is stacked. The components of the graphics multiprocessor 1225 communicate with remote components via the interconnect fabric 1227. For example, the cores 1236A-1236B, 1237A-1237B, and 1238A-1238B can each communicate with shared memory 1246 via the interconnect fabric 1227. The interconnect fabric 1227 can arbitrate communication within the graphics multiprocessor 1225 to ensure a fair bandwidth allocation between components.

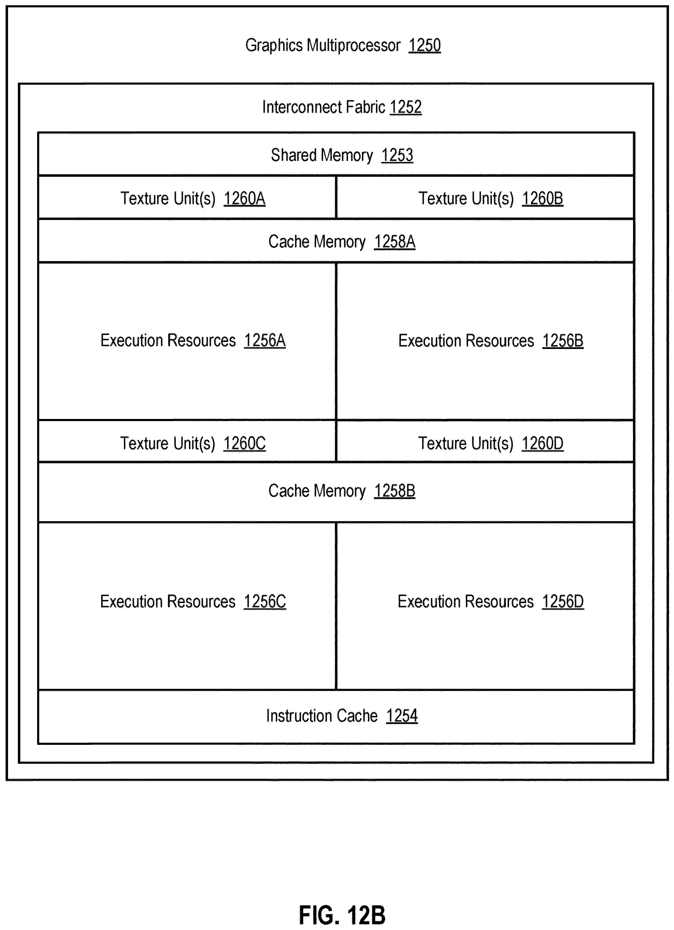

The graphics multiprocessor 1250 of FIG. 12B includes multiple sets of execution resources 1256A-1256D, where each set of execution resource includes multiple instruction units, register files, GPGPU cores, and load store units, as illustrated in FIG. 11D and FIG. 12A. The execution resources 1256A-1256D can work in concert with texture unit(s) 1260A-1260D for texture operations, while sharing an instruction cache 1254, and shared memory 1253. For example, the execution resources 1256A-1256D can share an instruction cache 1254 and shared memory 1253, as well as multiple instances of a texture and/or data cache memory 1258A-1258B. The various components can communicate via an interconnect fabric 1252 similar to the interconnect fabric 1227 of FIG. 12A.

Persons skilled in the art will understand that the architecture described in FIG. 1, 11A-11D, and 12A-12B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1102 of FIG. 11A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 12C illustrates a graphics processing unit (GPU) 1280 which includes dedicated sets of graphics processing resources arranged into multi-core groups 1265A-1265N. While the details of only a single multi-core group 1265A are provided, it will be appreciated that the other multi-core groups 1265B-1265N may be equipped with the same or similar sets of graphics processing resources. Details described with respect to the multi-core groups 1265A-1265N may also apply to any graphics multiprocessor 1134, 1225, 1250 described herein.

As illustrated, a multi-core group 1265A may include a set of graphics cores 1270, a set of tensor cores 1271, and a set of ray tracing cores 1272. A scheduler/dispatcher 1268 schedules and dispatches the graphics threads for execution on the various cores 1270, 1271, 1272. A set of register files 1269 store operand values used by the cores 1270, 1271, 1272 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 1273 store graphics data such as texture data, vertex data, pixel data, ray data, bounding volume data, etc., locally within each multi-core group 1265A. One or more texture units 1274 can also be used to perform texturing operations, such as texture mapping and sampling. A Level 2 (L2) cache 1275 shared by all or a subset of the multi-core groups 1265A-1265N stores graphics data and/or instructions for multiple concurrent graphics threads. As illustrated, the L2 cache 1275 may be shared across a plurality of multi-core groups 1265A-1265N. One or more memory controllers 1267 couple the GPU 1280 to a memory 1266 which may be a system memory (e.g., DRAM) and/or a dedicated graphics memory (e.g., GDDR6 memory).

Input/output (I/O) circuitry 1263 couples the GPU 1280 to one or more I/O devices 1262 such as digital signal processors (DSPs), network controllers, or user input devices. An on-chip interconnect may be used to couple the I/O devices 1262 to the GPU 1280 and memory 1266. One or more I/O memory management units (IOMMUs) 1264 of the I/O circuitry 1263 couple the I/O devices 1262 directly to the system memory 1266. Optionally, the IOMMU 1264 manages multiple sets of page tables to map virtual addresses to physical addresses in system memory 1266. The I/O devices 1262, CPU(s) 1261, and GPU(s) 1280 may then share the same virtual address space.

In one implementation of the IOMMU 1264, the IOMMU 1264 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1266). The base addresses of each of the first and second sets of page tables may be stored in control registers and swapped out on a context switch (e.g., so that the new context is provided with access to the relevant set of page tables). While not illustrated in FIG. 12C, each of the cores 1270, 1271, 1272 and/or multi-core groups 1265A-1265N may include translation lookaside buffers (TLBs) to cache guest virtual to guest physical translations, guest physical to host physical translations, and guest virtual to host physical translations.

The CPU(s) 1261, GPUs 1280, and I/O devices 1262 may be integrated on a single semiconductor chip and/or chip package. The illustrated memory 1266 may be integrated on the same chip or may be coupled to the memory controllers 1267 via an off-chip interface. In one implementation, the memory 1266 comprises GDDR6 memory which shares the same virtual address space as other physical system-level memories, although the underlying principles described herein are not limited to this specific implementation.

The tensor cores 1271 may include a plurality of execution units specifically designed to perform matrix operations, which are the fundamental compute operation used to perform deep learning operations. For example, simultaneous matrix multiplication operations may be used for neural network training and inferencing. The tensor cores 1271 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1271. The training of neural networks, in particular, requires a significant number of matrix dot product operations. In order to process an inner-product formulation of an N × N × N matrix multiply, the tensor cores 1271 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1271 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 1271 support a sparse mode of operation for matrices in which the vast majority of values are zero. The tensor cores 1271 include support for sparse input matrices that are encoded in a sparse matrix representation (e.g., coordinate list encoding (COO), compressed sparse row (CSR), compress sparse column (CSC), etc.). The tensor cores 1271 also include support for compressed sparse matrix representations in the event that the sparse matrix representation may be further compressed. Compressed, encoded, and/or compressed and encoded matrix data, along with associated compression and/or encoding metadata, can be read by the tensor cores 1271 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1271, output matrix C may be output in a compressed format, a sparse encoding, or a compressed sparse encoding.

The ray tracing cores 1272 may accelerate ray tracing operations for both real-time ray tracing and non-real-time ray tracing implementations. In particular, the ray tracing cores 1272 may include ray traversal/intersection circuitry for performing ray traversal using bounding volume hierarchies (BVHs) and identifying intersections between rays and primitives enclosed within the BVH volumes. The ray tracing cores 1272 may also include circuitry for performing depth testing and culling (e.g., using a Z buffer or similar arrangement). In one implementation, the ray tracing cores 1272 perform traversal and intersection operations in concert with the image denoising techniques described herein, at least a portion of which may be executed on the tensor cores 1271. For example, the tensor cores 1271 may implement a deep learning neural network to perform denoising of frames generated by the ray tracing cores 1272. However, the CPU(s) 1261, graphics cores 1270, and/or ray tracing cores 1272 may also implement all or a portion of the denoising and/or deep learning algorithms.

In addition, as described above, a distributed approach to denoising may be employed in which the GPU 1280 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1272 may process all BVH traversal and/or ray-primitive intersections, saving the graphics cores 1270 from being overloaded with thousands of instructions per ray. For example, each ray tracing core 1272 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 1265A can simply launch a ray probe, and the ray tracing cores 1272 independently perform ray traversal and intersection and return hit data (e.g., a hit, no hit, multiple hits, etc.) to the thread context. The other cores 1270, 1271 are freed to perform other graphics or compute work while the ray tracing cores 1272 perform the traversal and intersection operations.

Optionally, each ray tracing core 1272 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1270 and tensor cores 1271) are freed to perform other forms of graphics work.

In some examples described below, a hybrid rasterization/ray tracing approach is used in which work is distributed between the graphics cores 1270 and ray tracing cores 1272.

The ray tracing cores 1272 (and/or other cores 1270, 1271) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1272, graphics cores 1270 and tensor cores 1271 is Vulkan API (e.g., Vulkan version 1.1.85 and later). Note, however, that the underlying principles described herein are not limited to any particular ray tracing ISA.

In general, the various cores 1272, 1271, 1270 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:

- Ray Generation - Ray generation instructions may be executed for each pixel, sample, or other user-defined work assignment.

- Closest Hit - A closest hit instruction may be executed to locate the closest intersection point of a ray with primitives within a scene.

- Any Hit - An any hit instruction identifies multiple intersections between a ray and primitives within a scene, potentially to identify a new closest intersection point.

- Intersection - An intersection instruction performs a ray-primitive intersection test and outputs a result.

- Per-primitive Bounding box Construction - This instruction builds a bounding box around a given primitive or group of primitives (e.g., when building a new BVH or other acceleration data structure).

- Miss - Indicates that a ray misses all geometry within a scene, or specified region of a scene.

- Visit - Indicates the child volumes a ray will traverse.

- Exceptions - Includes various types of exception handlers (e.g., invoked for various error conditions).

In some examples the ray tracing cores 1272 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 1272 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1272 can also be used to perform computations that are not directly analogous to ray tracing. For example, mesh projection, mesh refinement, and volume sampling computations can be accelerated using the ray tracing cores 1272. Generic coordinate space calculations, such as nearest neighbor calculations can also be performed. For example, the set of points near a given point can be discovered by defining a bounding box in the coordinate space around the point. BVH and ray probe logic within the ray tracing cores 1272 can then be used to determine the set of point intersections within the bounding box. The intersections constitute the origin point and the nearest neighbors to that origin point. Computations that are performed using the ray tracing cores 1272 can be performed in parallel with computations performed on the graphics cores 1272 and tensor cores 1271. A shader compiler can be configured to compile a compute shader or other general-purpose graphics processing program into low level primitives that can be parallelized across the graphics cores 1270, tensor cores 1271, and ray tracing cores 1272.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Examples described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

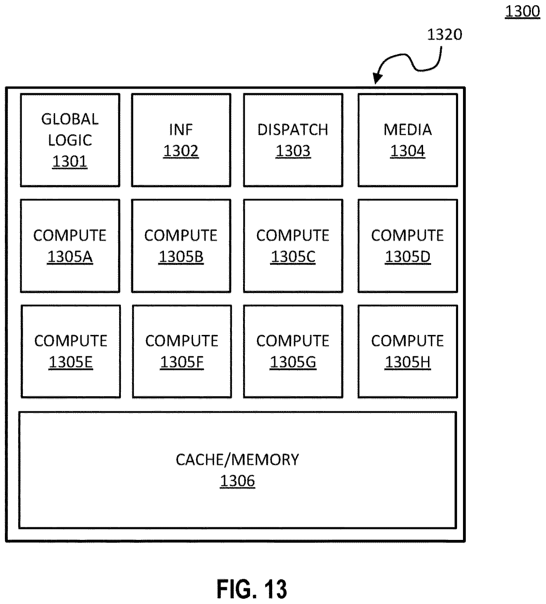

FIG. 13 shows a parallel compute system 1300, according to some examples. In some examples the parallel compute system 1300 includes a parallel processor 1320, which can be a graphics processor or compute accelerator as described herein. The parallel processor 1320 includes a global logic unit 1301, an interface 1302, a thread dispatcher 1303, a media unit 1304, a set of compute units 1305A-1305H, and a cache/memory units 1306. The global logic unit 1301, in some examples, includes global functionality for the parallel processor 1320, including device configuration registers, global schedulers, power management logic, and the like. The interface 1302 can include a front-end interface for the parallel processor 1320. The thread dispatcher 1303 can receive workloads from the interface 1302 and dispatch threads for the workload to the compute units 1305A-1305H. If the workload includes any media operations, at least a portion of those operations can be performed by the media unit 1304. The media unit can also offload some operations to the compute units 1305A-1305H. The cache/memory units 1306 can include cache memory (e.g., L3 cache) and local memory (e.g., HBM, GDDR) for the parallel processor 1320.

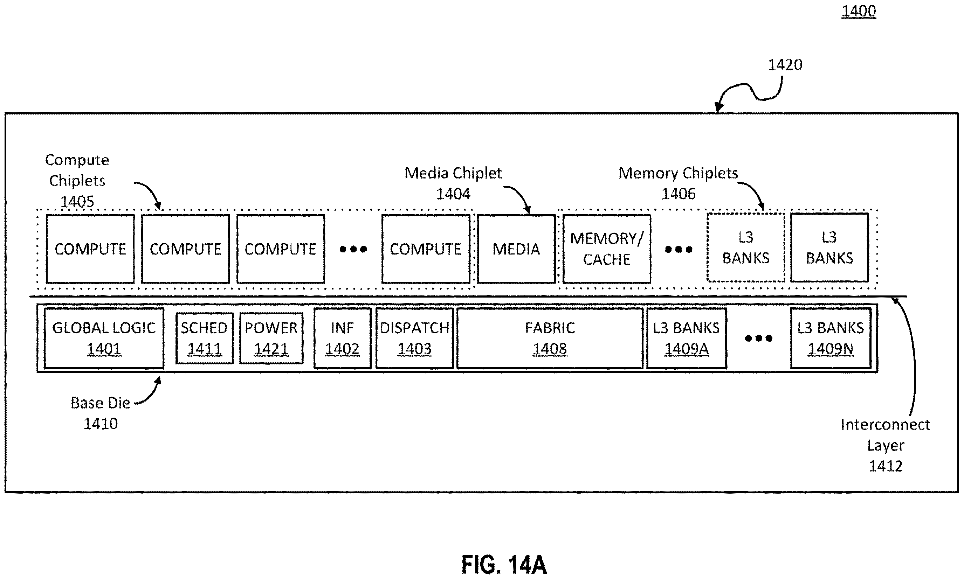

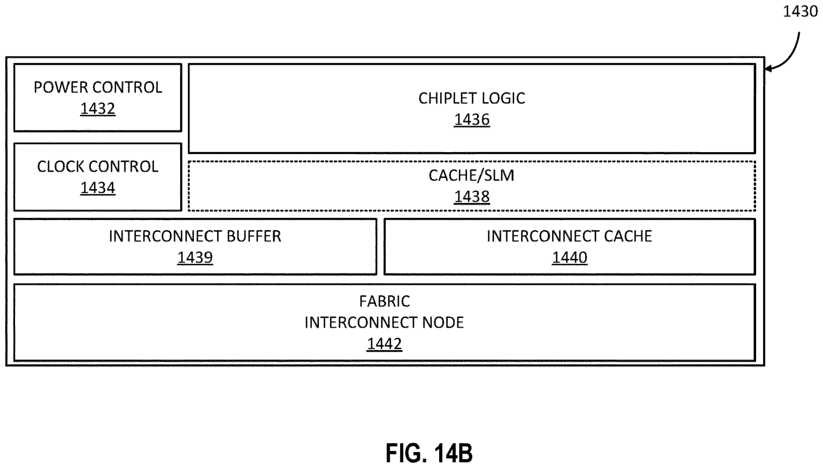

FIGS. 14A-14B illustrate a hybrid logical/physical view of a disaggregated parallel processor, according to examples described herein. FIG. 14A illustrates a disaggregated parallel compute system 1400. FIG. 14B illustrates a chiplet 1430 of the disaggregated parallel compute system 1400.

As shown in FIG. 14A, a disaggregated compute system 1400 can include a parallel processor 1420 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1405, a media chiplet 1404, and memory chiplets 1406. Each chiplet can be separately manufactured using different process technologies. For example, compute chiplets 1405 may be manufactured using the smallest or most advanced process technology available at the time of fabrication, while memory chiplets 1406 or other chiplets (e.g., I/O, networking, etc.) may be manufactured using a larger or less advanced process technologies.

The various chiplets can be bonded to a base die 1410 and configured to communicate with each other and logic within the base die 1410 via an interconnect layer 1412. In some examples, the base die 1410 can include global logic 1401, which can include scheduler 1411 and power management 1421 logic units, an interface 1402, a dispatch unit 1403, and an interconnect fabric module 1408 coupled with or integrated with one or more L3 cache banks 1409A-1409N. The interconnect fabric 1408 can be an inter-chiplet fabric that is integrated into the base die 1410. Logic chiplets can use the fabric 1408 to relay messages between the various chiplets. Additionally, L3 cache banks 1409A-1409N in the base die and/or L3 cache banks within the memory chiplets 1406 can cache data read from and transmitted to DRAM chiplets within the memory chiplets 1406 and to system memory of a host.

In some examples the global logic 1401 is a microcontroller that can execute firmware to perform scheduler 1411 and power management 1421 functionality for the parallel processor 1420. The microcontroller that executes the global logic can be tailored for the target use case of the parallel processor 1420. The scheduler 1411 can perform global scheduling operations for the parallel processor 1420. The power management 1421 functionality can be used to enable or disable individual chiplets within the parallel processor when those chiplets are not in use.

The various chiplets of the parallel processor 1420 can be designed to perform specific functionality that, in existing designs, would be integrated into a single die. A set of compute chiplets 1405 can include clusters of compute units (e.g., execution units, streaming multiprocessors, etc.) that include programmable logic to execute compute or graphics shader instructions. A media chiplet 1404 can include hardware logic to accelerate media encode and decode operations. Memory chiplets 1406 can include volatile memory (e.g., DRAM) and one or more SRAM cache memory banks (e.g., L3 banks).

As shown in FIG. 14B, each chiplet 1430 can include common components and application specific components. Chiplet logic 1436 within the chiplet 1430 can include the specific components of the chiplet, such as an array of streaming multiprocessors, compute units, or execution units described herein. The chiplet logic 1436 can couple with an optional cache or shared local memory 1438 or can include a cache or shared local memory within the chiplet logic 1436. The chiplet 1430 can include a fabric interconnect node 1442 that receives commands via the inter-chiplet fabric. Commands and data received via the fabric interconnect node 1442 can be stored temporarily within an interconnect buffer 1439. Data transmitted to and received from the fabric interconnect node 1442 can be stored in an interconnect cache 1440. Power control 1432 and clock control 1434 logic can also be included within the chiplet. The power control 1432 and clock control 1434 logic can receive configuration commands via the fabric can configure dynamic voltage and frequency scaling for the chiplet 1430. In some examples, each chiplet can have an independent clock domain and power domain and can be clock gated and power gated independently of other chiplets.

At least a portion of the components within the illustrated chiplet 1430 can also be included within logic embedded within the base die 1410 of FIG. 14A. For example, logic within the base die that communicates with the fabric can include a version of the fabric interconnect node 1442. Base die logic that can be independently clock or power gated can include a version of the power control 1432 and/or clock control 1434 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

Example Core Architectures - In-order and out-of-order core block diagram.

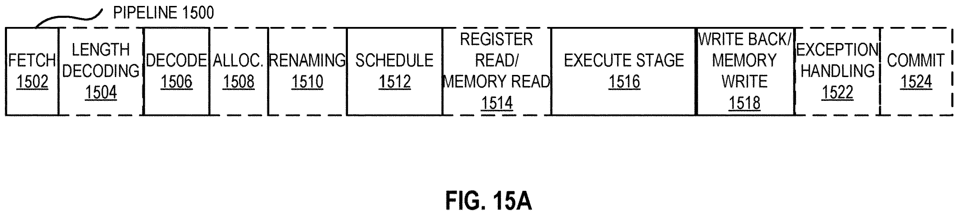

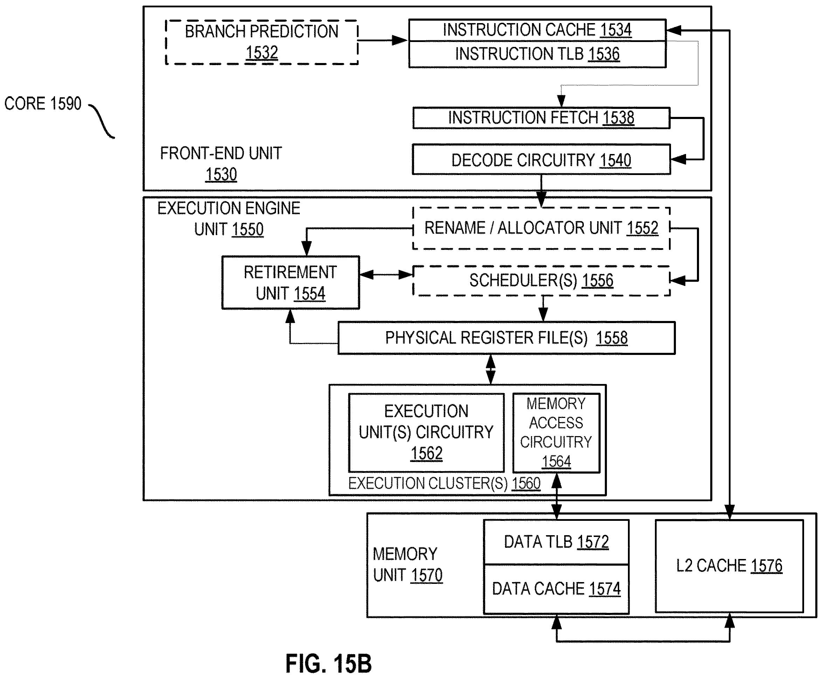

FIG. 15A is a block diagram illustrating both an example in-order pipeline and an example register renaming, out-of-order issue/execution pipeline according to examples. FIG. 15B is a block diagram illustrating both an example in-order architecture core and an example register renaming, out-of-order issue/execution architecture core to be included in a processor according to examples. The solid lined boxes in FIGS. 15A-15B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 15A, a processor pipeline 1500 includes a fetch stage 1502, an optional length decoding stage 1504, a decode stage 1506, an optional allocation (Alloc) stage 1508, an optional renaming stage 1510, a schedule (also known as a dispatch or issue) stage 1512, an optional register read/memory read stage 1514, an execute stage 1516, a write back/memory write stage 1518, an optional exception handling stage 1522, and an optional commit stage 1524. One or more operations can be performed in each of these processor pipeline stages. For example, during the fetch stage 1502, one or more instructions are fetched from instruction memory, and during the decode stage 1506, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 1506 and the register read/memory read stage 1514 may be combined into one pipeline stage. In some examples, during the execute stage 1516, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 15B may implement the pipeline 1500 as follows: 1) the instruction fetch circuitry 1538 performs the fetch and length decoding stages 1502 and 1504; 2) the decode circuitry 1540 performs the decode stage 1506; 3) the rename/allocator unit circuitry 1552 performs the allocation stage 1508 and renaming stage 1510; 4) the scheduler(s) circuitry 1556 performs the schedule stage 1512; 5) the physical register file(s) circuitry 1558 and the memory unit circuitry 1570 perform the register read/memory read stage 1514; the execution cluster(s) 1560 perform the execute stage 1516; 6) the memory unit circuitry 1570 and the physical register file(s) circuitry 1558 perform the write back/memory write stage 1518; 7) various circuitry may be involved in the exception handling stage 1522; and 8) the retirement unit circuitry 1554 and the physical register file(s) circuitry 1558 perform the commit stage 1524.

FIG. 15B shows a processor core 1590 including front-end unit circuitry 1530 coupled to execution engine unit circuitry 1550, and both are coupled to memory unit circuitry 1570. The core 1590 may be a reduced instruction set architecture computing (RISC) core, a complex instruction set architecture computing (CISC) core, a very long instruction word (VLIW) core, or a hybrid or alternative core type. As yet another option, the core 1590 may be a special-purpose core, such as, for example, a network or communication core, compression engine, coprocessor core, general purpose computing graphics processing unit (GPGPU) core, graphics core, or the like.

The front-end unit circuitry 1530 may include branch prediction circuitry 1532 coupled to instruction cache circuitry 1534, which is coupled to an instruction translation lookaside buffer (TLB) 1536, which is coupled to instruction fetch circuitry 1538, which is coupled to decode circuitry 1540. In some examples, the instruction cache circuitry 1534 is included in the memory unit circuitry 1570 rather than the front-end circuitry 1530. The decode circuitry 1540 (or decoder) may decode instructions, and generate as an output one or more micro-operations, microcode entry points, microinstructions, other instructions, or other control signals, which are decoded from, or which otherwise reflect, or are derived from, the original instructions. The decode circuitry 1540 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 1540 may be implemented using various different mechanisms. Examples of suitable mechanisms include, but are not limited to, lookup tables, hardware implementations, programmable logic arrays (PLAs), microcode read only memories (ROMs), etc. In some examples, the core 1590 includes a microcode ROM (not shown) or other medium that stores microcode for certain macroinstructions (e.g., in decode circuitry 1540 or otherwise within the front-end circuitry 1530). In some examples, the decode circuitry 1540 includes a micro-operation (micro-op) or operation cache (not shown) to hold/cache decoded operations, micro-tags, or micro-operations generated during the decode or other stages of the processor pipeline 1500. The decode circuitry 1540 may be coupled to rename/allocator unit circuitry 1552 in the execution engine circuitry 1550.

The execution engine circuitry 1550 includes the rename/allocator unit circuitry 1552 coupled to retirement unit circuitry 1554 and a set of one or more scheduler(s) circuitry 1556. The scheduler(s) circuitry 1556 represents any number of different schedulers, including reservations stations, central instruction window, etc. In some examples, the scheduler(s) circuitry 1556 can include arithmetic logic unit (ALU) scheduler/scheduling circuitry, ALU queues, address generation unit (AGU) scheduler/scheduling circuitry, AGU queues, etc. The scheduler(s) circuitry 1556 is coupled to the physical register file(s) circuitry 1558. Each of the physical register file(s) circuitry 1558 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 1558 includes vector registers unit circuitry, writemask registers unit circuitry, and scalar register unit circuitry. These register units may provide architectural vector registers, vector mask registers, general-purpose registers, etc. The physical register file(s) circuitry 1558 is coupled to the retirement unit circuitry 1554 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1554 and the physical register file(s) circuitry 1558 are coupled to the execution cluster(s) 1560. The execution cluster(s) 1560 includes a set of one or more execution unit(s) circuitry 1562 and a set of one or more memory access circuitry 1564. The execution unit(s) circuitry 1562 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1556, physical register file(s) circuitry 1558, and execution cluster(s) 1560 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1564). It should also be understood that where separate pipelines are used, one or more of these pipelines may be out-of-order issue/execution and the rest in-order.

In some examples, the execution engine unit circuitry 1550 may perform load store unit (LSU) address/data pipelining to an Advanced Microcontroller Bus (AMB) interface (not shown), and address phase and writeback, data phase load, store, and branches.

The set of memory access circuitry 1564 is coupled to the memory unit circuitry 1570, which includes data TLB circuitry 1572 coupled to data cache circuitry 1574 coupled to level 2 (L2) cache circuitry 1576. In some examples, the memory access circuitry 1564 may include load unit circuitry, store address unit circuitry, and store data unit circuitry, each of which is coupled to the data TLB circuitry 1572 in the memory unit circuitry 1570. The instruction cache circuitry 1534 is further coupled to the level 2 (L2) cache circuitry 1576 in the memory unit circuitry 1570. In some examples, the instruction cache 1534 and the data cache 1574 are combined into a single instruction and data cache (not shown) in L2 cache circuitry 1576, level 3 (L3) cache circuitry (not shown), and/or main memory. The L2 cache circuitry 1576 is coupled to one or more other levels of cache and eventually to a main memory.

The core 1590 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 1590 includes logic to support a packed data instruction set architecture extension (e.g., AVX1, AVX2), thereby allowing the operations used by many multimedia applications to be performed using packed data.

Example Execution Unit(s) Circuitry.

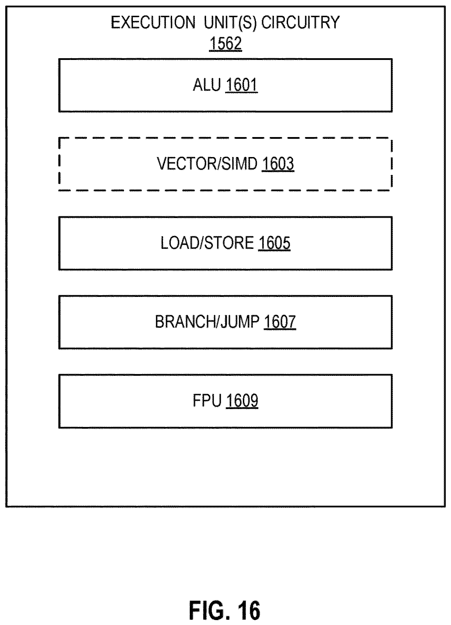

FIG. 16 illustrates examples of execution unit(s) circuitry, such as execution unit(s) circuitry 1562 of FIG. 15B. As illustrated, execution unit(s) circuity 1562 may include one or more ALU circuits 1601, optional vector/single instruction multiple data (SIMD) circuits 1603, load/store circuits 1605, branch/jump circuits 1607, and/or Floating-point unit (FPU) circuits 1609. ALU circuits 1601 perform integer arithmetic and/or Boolean operations. Vector/SINM circuits 1603 perform vector/SnVID operations on packed data (such as SIMD/vector registers). Load/store circuits 1605 execute load and store instructions to load data from memory into registers or store from registers to memory. Load/store circuits 1605 may also generate addresses. Branch/jump circuits 1607 cause a branch or jump to a memory address depending on the instruction. FPU circuits 1609 perform floating-point arithmetic. The width of the execution unit(s) circuitry 1562 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Example Register Architecture.

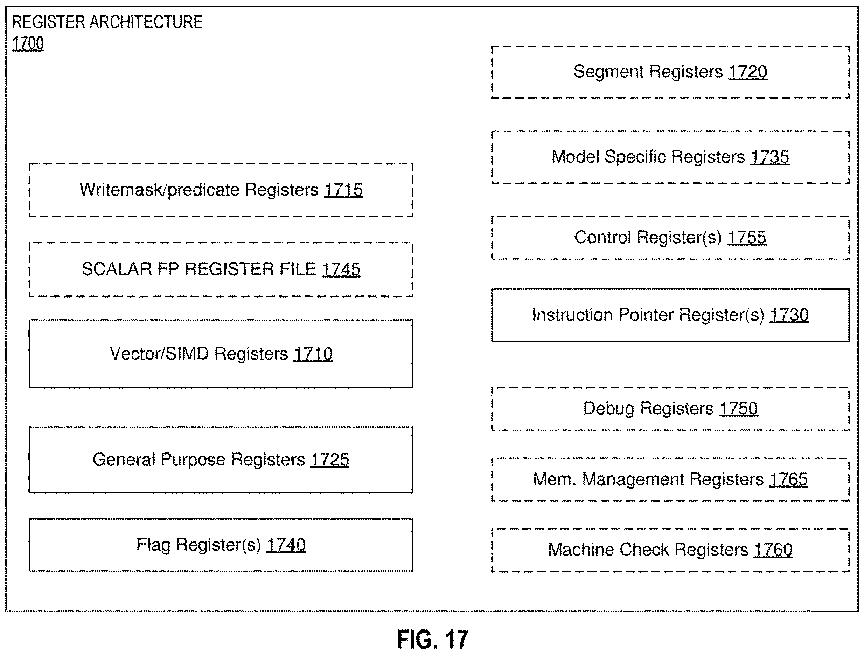

FIG. 17 is a block diagram of a register architecture 1700 according to some examples. As illustrated, the register architecture 1700 includes vector/SnVID registers 1710 that vary from 128-bit to 1,024 bits width. In some examples, the vector/SIMD registers 1710 are physically 512-bits and, depending upon the mapping, only some of the lower bits are used. For example, in some examples, the vector/SIMD registers 1710 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1700 includes writemask/predicate registers 1715. For example, in some examples, there are 8 writemask/predicate registers (sometimes called k0 through k7) that are each 16-bit, 32-bit, 64-bit, or 128-bit in size. Writemask/predicate registers 1715 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1715 corresponds to a data element position of the destination. In other examples, the writemask/predicate registers 1715 are scalable and consists of a set number of enable bits for a given vector element (e.g., 8 enable bits per 64-bit vector element).

The register architecture 1700 includes a plurality of general-purpose registers 1725. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1700 includes scalar floating-point (FP) register file 1745 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1740 (e.g., EFLAGS, RFLAGS, etc.) store status and control information for arithmetic, compare, and system operations. For example, the one or more flag registers 1740 may store condition code information such as carry, parity, auxiliary carry, zero, sign, and overflow. In some examples, the one or more flag registers 1740 are called program status and control registers.

Segment registers 1720 contain segment points for use in accessing memory. In some examples, these registers are referenced by the names CS, DS, SS, ES, FS, and GS.

Model specific registers or machine specific registers (MSRs) 1735 control and report on processor performance. Most MSRs 1735 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1760 consist of control, status, and error reporting MSRs that are used to detect and report on hardware errors. Control register(s) 1755 (e.g., CR0-CR4) determine the operating mode of a processor (e.g., processor 870, 880, 838, 815, and/or 900) and the characteristics of a currently executing task. In some examples, MSRs 1735 are a subset of control registers 1755.

One or more instruction pointer register(s) 1730 store an instruction pointer value. Debug registers 1750 control and allow for the monitoring of a processor or core's debugging operations.

Memory (mem) management registers 1765 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1700 may, for example, be used in register file 110, or physical register file(s) circuitry 1558.

Instruction Set Architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

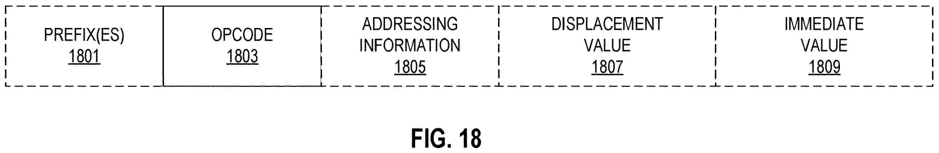

FIG. 18 illustrates examples of an instruction format. As illustrated, an instruction may include multiple components including, but not limited to, one or more fields for: one or more prefixes 1801, an opcode 1803, addressing information 1805 (e.g., register identifiers, memory addressing information, etc.), a displacement value 1807, and/or an immediate value 1809. Note that some instructions utilize some or all the fields of the format whereas others may only use the field for the opcode 1803. In some examples, the order illustrated is the order in which these fields are to be encoded, however, it should be appreciated that in other examples these fields may be encoded in a different order, combined, etc.

The prefix(es) field(s) 1801, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1803 is used to at least partially define the operation to be performed upon a decoding of the instruction. In some examples, a primary opcode encoded in the opcode field 1803 is one, two, or three bytes in length. In other examples, a primary opcode can be a different length. An additional 3-bit opcode field is sometimes encoded in another field.

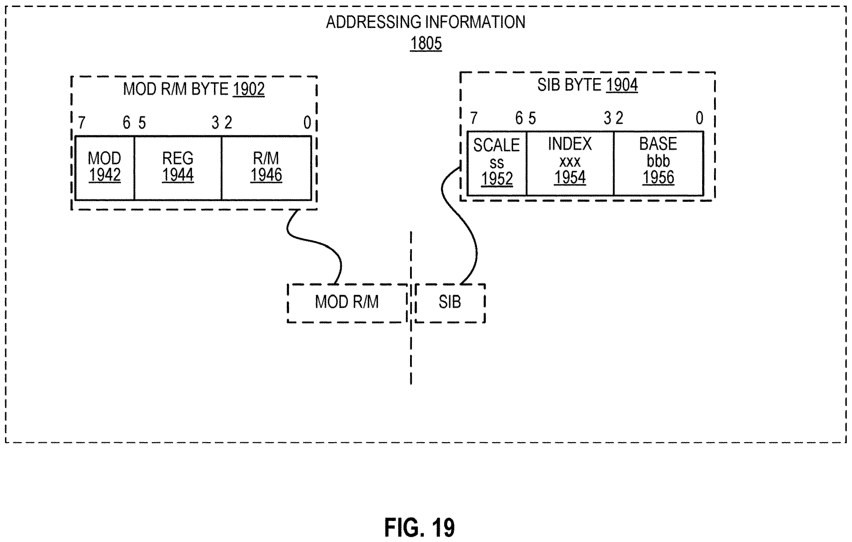

The addressing information field 1805 is used to address one or more operands of the instruction, such as a location in memory or one or more registers. FIG. 19 illustrates examples of the addressing information field 1805. In this illustration, an optional MOD R/M byte 1902 and an optional Scale, Index, Base (SIB) byte 1904 are shown. The MOD R/M byte 1902 and the SIB byte 1904 are used to encode up to two operands of an instruction, each of which is a direct register or effective memory address. Note that both of these fields are optional in that not all instructions include one or more of these fields. The MOD R/M byte 1902 includes a MOD field 1942, a register (reg) field 1944, and R/M field 1946.

The content of the MOD field 1942 distinguishes between memory access and non-memory access modes. In some examples, when the MOD field 1942 has a binary value of 11 (1 1b), a register-direct addressing mode is utilized, and otherwise a register-indirect addressing mode is used.

The register field 1944 may encode either the destination register operand or a source register operand or may encode an opcode extension and not be used to encode any instruction operand. The content of register field 1944, directly or through address generation, specifies the locations of a source or destination operand (either in a register or in memory). In some examples, the register field 1944 is supplemented with an additional bit from a prefix (e.g., prefix 1801) to allow for greater addressing.

The R/M field 1946 may be used to encode an instruction operand that references a memory address or may be used to encode either the destination register operand or a source register operand. Note the R/M field 1946 may be combined with the MOD field 1942 to dictate an addressing mode in some examples.

The SIB byte 1904 includes a scale field 1952, an index field 1954, and a base field 1956 to be used in the generation of an address. The scale field 1952 indicates a scaling factor. The index field 1954 specifies an index register to use. In some examples, the index field 1954 is supplemented with an additional bit from a prefix (e.g., prefix 1801) to allow for greater addressing. The base field 1956 specifies a base register to use. In some examples, the base field 1956 is supplemented with an additional bit from a prefix (e.g., prefix 1801) to allow for greater addressing. In practice, the content of the scale field 1952 allows for the scaling of the content of the index field 1954 for memory address generation (e.g., for address generation that uses $2^{scale}$ * index + base).

Some addressing forms utilize a displacement value to generate a memory address. For example, a memory address may be generated according to $2^{scale}$ * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1807 provides this value. Additionally, in some examples, a displacement factor usage is encoded in the MOD field of the addressing information field 1805 that indicates a compressed displacement scheme for which a displacement value is calculated and stored in the displacement field 1807.

In some examples, the immediate value field 1809 specifies an immediate value for the instruction. An immediate value may be encoded as a 1-byte value, a 2-byte value, a 4-byte value, etc.

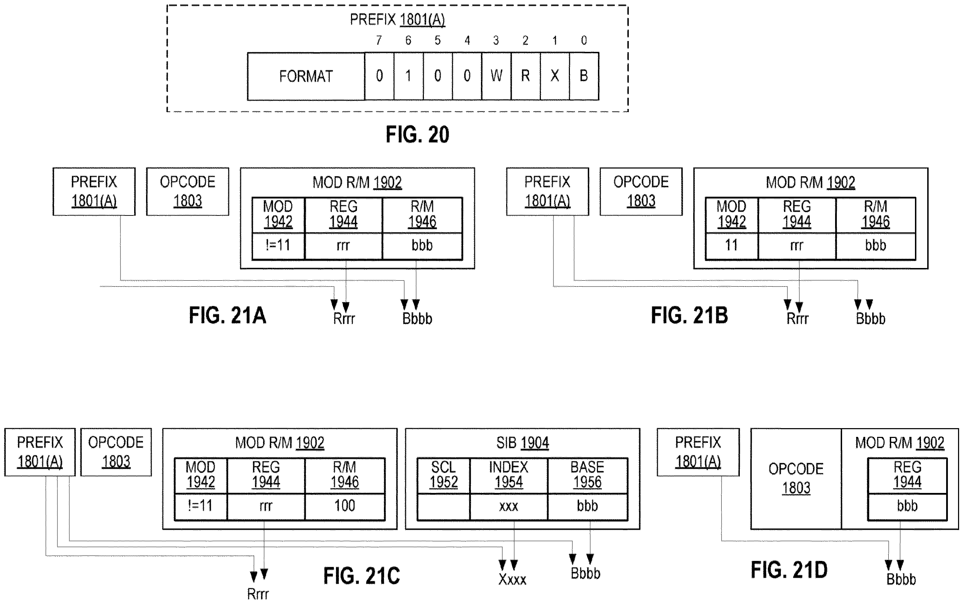

FIG. 20 illustrates examples of a first prefix 1801(A). In some examples, the first prefix 1801(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1801(A) may specify up to three registers using 3-bit fields depending on the format: 1) using the reg field 1944 and the R/M field 1946 of the MOD R/M byte 1902; 2) using the MOD R/M byte 1902 with the SIB byte 1904 including using the reg field 1944 and the base field 1956 and index field 1954; or 3) using the register field of an opcode.

In the first prefix 1801(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 ($2^4$) registers to be addressed, whereas the MOD R/M reg field 1944 and MOD R/M R/M field 1946 alone can each only address 8 registers.

In the first prefix 1801(A), bit position 2 (R) may be an extension of the MOD R/M reg field 1944 and may be used to modify the MOD R/M reg field 1944 when that field encodes a general-purpose register, a 64-bit packed data register (e.g., an SSE register), or a control or debug register. R is ignored when MOD R/M byte 1902 specifies other registers or defines an extended opcode.

Bit position 1 (X) may modify the SIB byte index field 1954.

Bit position 0 (B) may modify the base in the MOD R/M R/M field 1946 or the SIB byte base field 1956; or it may modify the opcode register field used for accessing general purpose registers (e.g., general purpose registers 1725).

FIGS. 21A-21D illustrate examples of how the R, X, and B fields of the first prefix 1801(A) are used. FIG. 21A illustrates R and B from the first prefix 1801(A) being used to extend the reg field 1944 and R/M field 1946 of the MOD R/M byte 1902 when the SIB byte 1904 is not used for memory addressing. FIG. 21B illustrates R and B from the first prefix 1801(A) being used to extend the reg field 1944 and R/M field 1946 of the MOD R/M byte 1902 when the SIB byte 19 04 is not used (register-register addressing). FIG. 21C illustrates R, X, and B from the first prefix 1801(A) being used to extend the reg field 1944 of the MOD R/M byte 1902 and the index field 1954 and base field 1956 when the SIB byte 19 04 being used for memory addressing. FIG. 21D illustrates B from the first prefix 1801(A) being used to extend the reg field 1944 of the MOD R/M byte 1902 when a register is encoded in the opcode 1803.

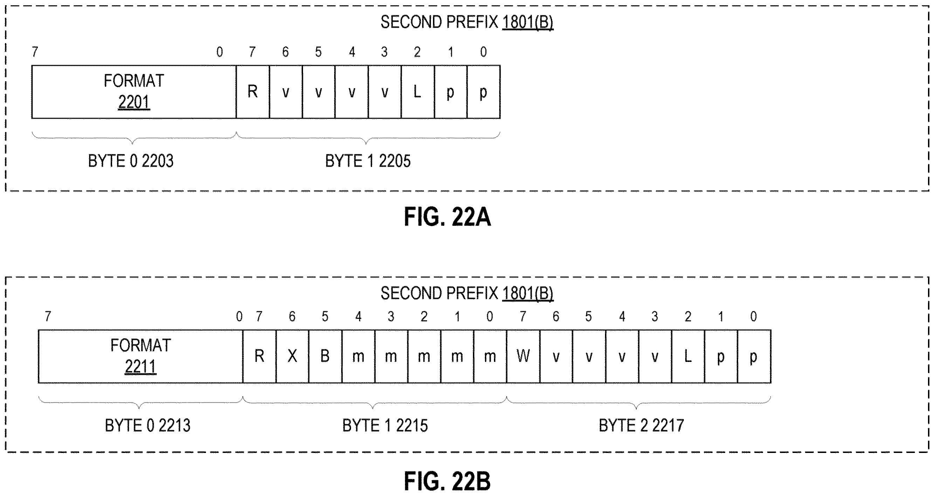

FIGS. 22A-22B illustrate examples of a second prefix 1801(B). In some examples, the second prefix 1801(B) is an example of a VEX prefix. The second prefix 1801(B) encoding allows instructions to have more than two operands, and allows SIMD vector registers (e.g., vector/SIMD registers 1710) to be longer than 64-bits (e.g., 128-bit and 256-bit). The use of the second prefix 1801(B) provides for three-operand (or more) syntax. For example, previous two-operand instructions performed operations such as A = A + B, which overwrites a source operand. The use of the second prefix 1801(B) enables operands to perform nondestructive operations such as A = B + C.

In some examples, the second prefix 1801(B) comes in two forms - a two-byte form and a three-byte form. The two-byte second prefix 1801(B) is used mainly for 128-bit, scalar, and some 256-bit instructions; while the three-byte second prefix 1801(B) provides a compact replacement of the first prefix 1801(A) and 3-byte opcode instructions.

FIG. 22A illustrates examples of a two-byte form of the second prefix 1801(B). In some examples, a format field 2201 (byte 0 2203) contains the value C5H. In some examples, byte 1 2205 includes an "R" value in bit[7]. This value is the complement of the "R" value of the first prefix 1801(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1946 to encode the instruction operand that references a memory address or encode either the destination register operand or a source register operand.

Instructions that use this prefix may use the MOD R/M reg field 1944 to encode either the destination register operand or a source register operand, or to be treated as an opcode extension and not used to encode any instruction operand.

For instruction syntax that support four operands, vvvv, the MOD R/M R/M field 1946 and the MOD R/M reg field 1944 encode three of the four operands. Bits[7:4] of the immediate value field 1809 are then used to encode the third source register operand.

FIG. 22(B) illustrates examples of a three-byte form of the second prefix 1801(B). In some examples, a format field 2211 (byte 0 2213) contains the value C4H. Byte 1 2215 includes in bits[7:5] "R," "X," and "B" which are the complements of the same values of the first prefix 1801(A). Bits[4:0] of byte 1 2215 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2217 is used similar to W of the first prefix 1801(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 111 1b.

Instructions that use this prefix may use the MOD R/M R/M field 1946 to encode the instruction operand that references a memory address or encode either the destination register operand or a source register operand.

Instructions that use this prefix may use the MOD R/M reg field 1944 to encode either the destination register operand or a source register operand, or to be treated as an opcode extension and not used to encode any instruction operand.

For instruction syntax that support four operands, vvvv, the MOD R/M R/M field 1946, and the MOD R/M reg field 1944 encode three of the four operands. Bits[7:4] of the immediate value field 1809 are then used to encode the third source register operand.

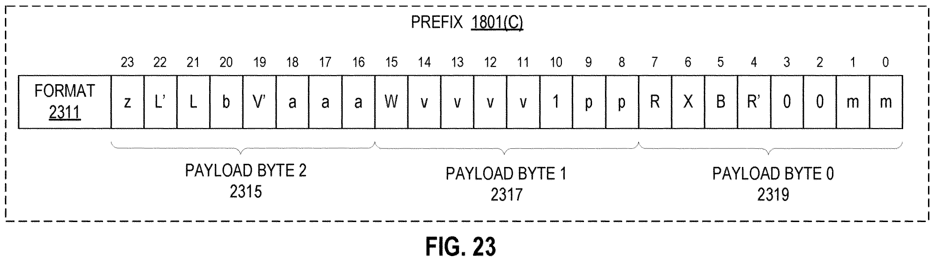

FIG. 23 illustrates examples of a third prefix 1801(C). In some examples, the third prefix 1801(C) is an example of an EVEX prefix. The third prefix 1801(C) is a four-byte prefix.

The third prefix 1801(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 17) or predication utilize this prefix. Opmask register allow for conditional processing or selection control. Opmask instructions, whose source/destination operands are opmask registers and treat the content of an opmask register as a single value, are encoded using the second prefix 1801(B).

The third prefix 1801(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1801(C) is a format field 2311 that has a value, in some examples, of 62H.

Subsequent bytes are referred to as payload bytes 2315-2319 and collectively form a 24-bit value of P[23:0] providing specific capability in the form of one or more fields (detailed herein).

In some examples, P[1:0] of payload byte 2319 are identical to the low two mm bits. P[3:2] are reserved in some examples. Bit P[4] (R') allows access to the high 16 vector register set when combined with P[7] and the MOD R/M reg field 1944. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1944 and MOD R/M R/M field 1946. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1801(A) and second prefix 1801(B) and may serve as an opcode extension bit or operand size promotion.

P[18:16] specify the index of a register in the opmask (writemask) registers (e.g., writemask/predicate registers 1715). In some examples, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P [23] indicates support for merging-writemasking (e.g., when set to 0) or support for zeroing and merging-writemasking (e.g., when set to 1).

Example examples of encoding of registers in instructions using the third prefix 1801(C) are detailed in the following tables.

Table 1: 32-Register Support in 64-bit Mode

|  | 4 | 3 | [2:0] | REG. TYPE | COMMON USAGES |
|---|---|---|---|---|---|
| REG | R' | R | MOD R/M reg | GPR, Vector | Destination or Source |
| VVVV | V' |  | vvvv | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

Table 2: Encoding Register Specifiers in 32-bit Mode

|  | [2:0] | REG. TYPE | COMMON USAGES |
|---|---|---|---|
| REG | MOD R/M reg | GPR, Vector | Destination or Source |

(continued)

| | [2:0] | REG. TYPE | COMMON USAGES |
|---|---|---|---|
| VVVV | vvvv | GPR, Vector | 2nd Source or Destination |
| RM | MOD R/M R/M | GPR, Vector | 1st Source or Destination |
| BASE | MOD R/M R/M | GPR | Memory addressing |
| INDEX | SIB.index | GPR | Memory addressing |
| VIDX | SIB.index | Vector | VSIB memory addressing |

Table 3: Opmask Register Specifier Encoding

| | [2:0] | REG. TYPE | COMMON USAGES |
|---|---|---|---|
| REG | MOD R/M Reg | k0-k7 | Source |
| VVVV | vvvv | k0-k7 | 2nd Source |
| RM | MOD R/M R/M | k0-k7 | 1st Source |
| {k1} | aaa | k0-k7 | Opmask |

Graphics Execution Units

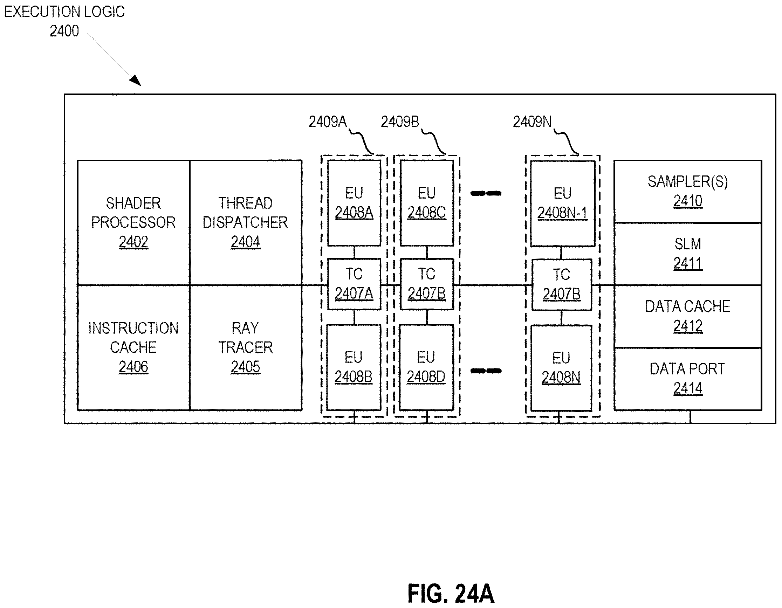

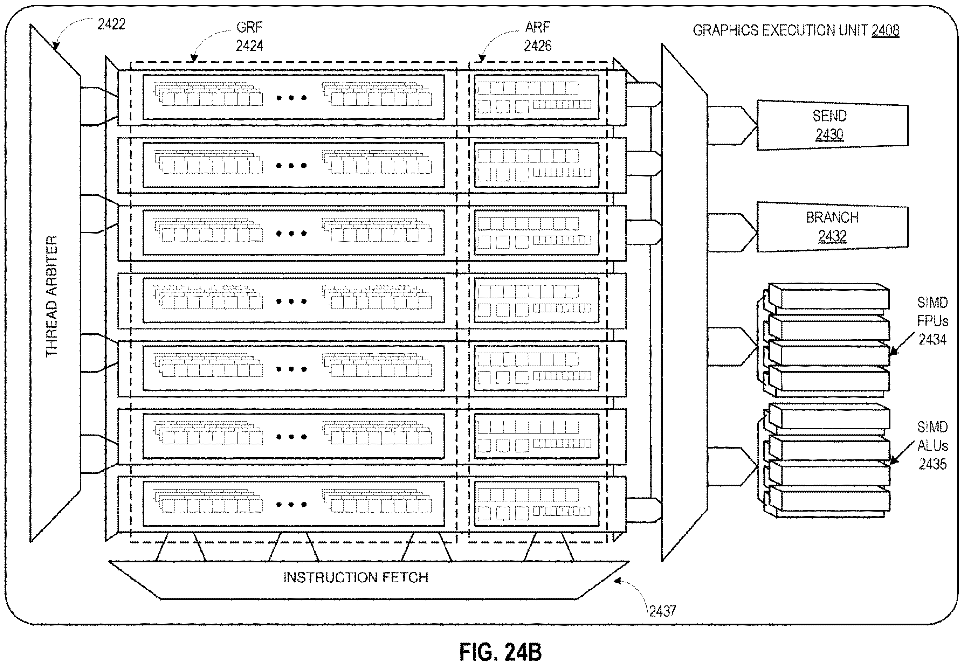

FIGS. 24A-24B illustrate thread execution logic 2400 including an array of processing elements employed in a graphics processor core according to examples described herein. Elements of Figures 24A-24B having the same reference numbers (or names) as the elements of any other figure herein can operate or function in any manner similar to that described elsewhere herein, but are not limited to such. Figure 24A is representative of an execution unit within a general-purpose graphics processor, while Figure 24B is representative of an execution unit that may be used within a compute accelerator.

As illustrated in Figure 24A, in some examples thread execution logic 2400 includes a shader processor 2402, a thread dispatcher 2404, instruction cache 2406, a scalable execution unit array including a plurality of execution units 2408A-2408N, a sampler 2410, shared local memory 2411, a data cache 2412, and a data port 2414. In some examples the scalable execution unit array can dynamically scale by enabling or disabling one or more execution units (e.g., any of execution units 2408A, 2408B, 2408C, 2408D, through 2408N-1 and 2408N) based on the computational requirements of a workload. In some examples the included components are interconnected via an interconnect fabric that links to each of the components. In some examples, thread execution logic 2400 includes one or more connections to memory, such as system memory or cache memory, through one or more of instruction cache 2406, data port 2414, sampler 2410, and execution units 2408A-2408N. In some examples, each execution unit (e.g., 2408A) is a stand-alone programmable general-purpose computational unit that is capable of executing multiple simultaneous hardware threads while processing multiple data elements in parallel for each thread. In various examples, the array of execution units 2408A-2408N is scalable to include any number individual execution units.

In some examples, the execution units 2408A-2408N are primarily used to execute shader programs. A shader processor 2402 can process the various shader programs and dispatch execution threads associated with the shader programs via a thread dispatcher 2404. In some examples the thread dispatcher includes logic to arbitrate thread initiation requests from the graphics and media pipelines and instantiate the requested threads on one or more execution unit in the execution units 2408A-2408N. For example, a geometry pipeline can dispatch vertex, tessellation, or geometry shaders to the thread execution logic for processing. In some examples, thread dispatcher 2404 can also process runtime thread spawning requests from the executing shader programs.

In some examples, the execution units 2408A-2408N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 2408A-2408N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 2408A-2408N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 2408A-2408N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 2408A-2408N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused execution unit 2409A-2409N having thread control logic (2407A-2407N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 2409A-2409N includes at least two execution units. For example, fused execution unit 2409A includes a first EU 2408A, second EU 2408B, and thread control logic 2407A that is common to the first EU 2408A and the second EU 2408B. The thread control logic 2407A controls threads executed on the fused graphics execution unit 2409A, allowing each EU within the fused execution units 2409A-2409N to execute using a common instruction pointer register.

One or more internal instruction caches (e.g., 2406) are included in the thread execution logic 2400 to cache thread instructions for the execution units. In some examples, one or more data caches (e.g., 2412) are included to cache thread data during thread execution. Threads executing on the execution logic 2400 can also store explicitly managed data in the shared local memory 2411. In some examples, a sampler 2410 is included to provide texture sampling for 3D operations and media sampling for media operations. In some examples, sampler 2410 includes specialized texture or media sampling functionality to process texture or media data during the sampling process before providing the sampled data to an execution unit.

During execution, the graphics and media pipelines send thread initiation requests to thread execution logic 2400 via thread spawning and dispatch logic. Once a group of geometric objects has been processed and rasterized into pixel data, pixel processor logic (e.g., pixel shader logic, fragment shader logic, etc.) within the shader processor 2402 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 2402 then executes an application programming interface (API)-supplied pixel or fragment shader program. To execute the shader program, the shader processor 2402 dispatches threads to an execution unit (e.g., 2408A) via thread dispatcher 2404. In some examples, shader processor 2402 uses texture sampling logic in the sampler 2410 to access texture data in texture maps stored in memory. Arithmetic operations on the texture data and the input geometry data compute pixel color data for each geometric fragment, or discards one or more pixels from further processing.

In some examples, the data port 2414 provides a memory access mechanism for the thread execution logic 2400 to output processed data to memory for further processing on a graphics processor output pipeline. In some examples, the data port 2414 includes or couples to one or more cache memories (e.g., data cache 2412) to cache data for memory access via the data port.

In some examples, the execution logic 2400 can also include a ray tracer 2405 that can provide ray tracing acceleration functionality. The ray tracer 2405 can support a ray tracing instruction set that includes instructions/functions for ray generation.

Figure 24B illustrates exemplary internal details of an execution unit 2408, according to examples. A graphics execution unit 2408 can include an instruction fetch unit 2437, a general register file array (GRF) 2424, an architectural register file array (ARF) 2426, a thread arbiter 2422, a send unit 2430, a branch unit 2432, a set of SIMD floating point units (FPUs) 2434, and in some examples a set of dedicated integer SIMD ALUs 2435. The GRF 2424 and ARF 2426 includes the set of general register files and architecture register files associated with each simultaneous hardware thread that may be active in the graphics execution unit 2408. In some examples, per thread architectural state is maintained in the ARF 2426, while data used during thread execution is stored in the GRF 2424. The execution state of each thread, including the instruction pointers for each thread, can be held in thread-specific registers in the ARF 2426.

In some examples the graphics execution unit 2408 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 2408 is not limited to the number of hardware threads, and multiple logical threads can be assigned to each hardware thread.

In some examples, the graphics execution unit 2408 can co-issue multiple instructions, which may each be different instructions. The thread arbiter 2422 of the graphics execution unit thread 2408 can dispatch the instructions to one of the send unit 2430, branch unit 2432, or SIMD FPU(s) 2434 for execution. Each execution thread can access 128 general-purpose registers within the GRF 2424, where each register can store 32 bytes, accessible as a SIMD 8-element vector of 32-bit data elements. In some examples, each execution unit thread has access to 4 Kbytes within the GRF 2424, although examples are not so limited, and greater or fewer register resources may be provided in other examples. In some examples the graphics execution unit 2408 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 2424 can store a total of 28 Kbytes. Where 16 threads may access 4Kbytes, the GRF 2424 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 2430. In some examples, branch instructions are dispatched to a dedicated branch unit 2432 to facilitate SIMD divergence and eventual convergence.

In some examples the graphics execution unit 2408 includes one or more SIMD floating point units (FPU(s)) 2434 to perform floating-point operations. In some examples, the FPU(s) 2434 also support integer computation. In some examples the FPU(s) 2434 can SIMD execute up to $M$ number of 32-bit floating-point (or integer) operations, or SIMD execute up to $2M$ 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 2435 are also present, and may be specifically optimized to perform operations associated with machine learning computations.

In some examples, arrays of multiple instances of the graphics execution unit 2408 can be instantiated in a graphics sub-core grouping (e.g., a sub-slice). For scalability, product architects can choose the exact number of execution units per sub-core grouping. In some examples the execution unit 2408 can execute instructions across a plurality of execution channels. In a further example, each thread executed on the graphics execution unit 2408 is executed on a different channel.

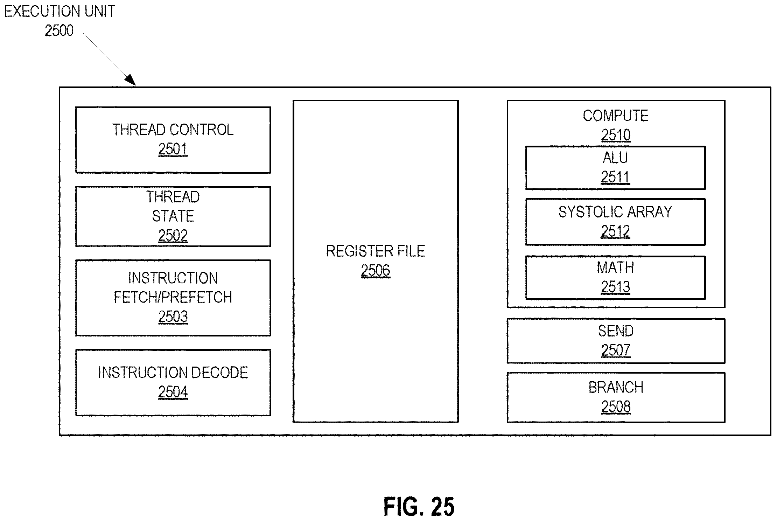

Figure 25 illustrates an additional execution unit 2500, according to an example. In some examples, the execution unit 2500 includes a thread control unit 2501, a thread state unit 2502, an instruction fetch/prefetch unit 2503, and an instruction decode unit 2504. The execution unit 2500 additionally includes a register file 2506 that stores registers that can be assigned to hardware threads within the execution unit. The execution unit 2500 additionally includes a send unit 2507 and a branch unit 2508. In some examples, the send unit 2507 and branch unit 2508 can operate similarly as the send unit 2430 and a branch unit 2432 of the graphics execution unit 2408 of Figure 24B.

The execution unit 2500 also includes a compute unit 2510 that includes multiple different types of functional units. In some examples the compute unit 2510 includes an ALU unit 2511 that includes an array of arithmetic logic units. The ALU unit 2511 can be configured to perform 64-bit, 32-bit, and 16-bit integer and floating point operations. Integer and floating point operations may be performed simultaneously. The compute unit 2510 can also include a systolic array 2512, and a math unit 2513. The systolic array 2512 includes a $W$ wide and D deep network of data processing units that can be used to perform vector or other data-parallel operations in a systolic manner. In some examples the systolic array 2512 can be configured to perform matrix operations, such as matrix dot product operations. In some examples the systolic array 2512 support 16-bit floating point operations, as well as 8-bit and 4-bit integer operations. In some examples the systolic array 2512 can be configured to accelerate machine learning operations. In such examples, the systolic array 2512 can be configured with support for the bfloat 16-bit floating point format. In some examples, a math unit 2513 can be included to perform a specific subset of mathematical operations in an efficient and lower-power manner than ALU unit 2511. The math unit 2513 can include a variant of math logic that may be found in shared function logic of a graphics processing engine provided by other examples (e.g., math logic of a shared function logic). In some examples the math unit 2513 can be configured to perform 32-bit and 64-bit floating point operations.

The thread control unit 2501 includes logic to control the execution of threads within the execution unit. The thread control unit 2501 can include thread arbitration logic to start, stop, and preempt execution of threads within the execution unit 2500. The thread state unit 2502 can be used to store thread state for threads assigned to execute on the execution unit 2500. Storing the thread state within the execution unit 2500 enables the rapid pre-emption of threads when those threads become blocked or idle. The instruction fetch/prefetch unit 2503 can fetch instructions from an instruction cache of higher level execution logic (e.g., instruction cache 2406 as in Figure 24A). The instruction fetch/prefetch unit 2503 can also issue prefetch requests for instructions to be loaded into the instruction cache based on an analysis of currently executing threads. The instruction decode unit 2504 can be used to decode instructions to be executed by the compute units. In some examples, the instruction decode unit 2504 can be used as a secondary decoder to decode complex instructions into constituent micro-operations.

The execution unit 2500 additionally includes a register file 2506 that can be used by hardware threads executing on the execution unit 2500. Registers in the register file 2506 can be divided across the logic used to execute multiple simultaneous threads within the compute unit 2510 of the execution unit 2500. The number of logical threads that may be executed by the graphics execution unit 2500 is not limited to the number of hardware threads, and multiple logical threads can be assigned to each hardware thread. The size of the register file 2506 can vary across examples based on the number of supported hardware threads. In some examples, register renaming may be used to dynamically allocate registers to hardware threads.

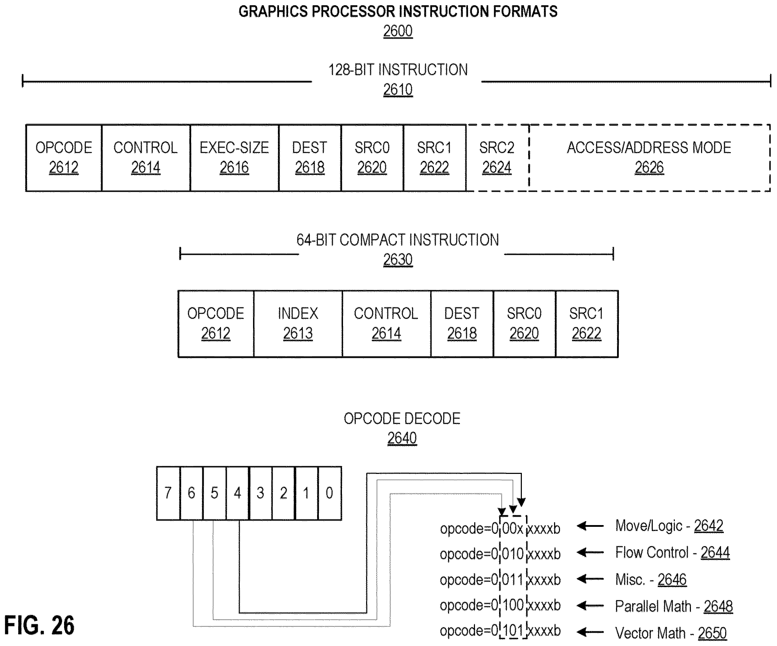

Figure 26 is a block diagram illustrating a graphics processor instruction formats 2600 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 2600 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 2610. A 64-bit compacted instruction format 2630 is available for some instructions based on the selected instruction, instruction options, and number of operands. The native 128-bit instruction format 2610 provides access to all instruction options, while some options and operations are restricted in the 64-bit format 2630. The native instructions available in the 64-bit format 2630 vary by example. In some examples, the instruction is compacted in part using a set of index values in an index field 2613. The execution unit hardware references a set of compaction tables based on the index values and uses the compaction table outputs to reconstruct a native instruction in the 128-bit instruction format 2610. Other sizes and formats of instruction can be used.

For each format, instruction opcode 2612 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 2614 enables control over certain execution options, such as channels selection (e.g., predication) and data channel order (e.g., swizzle). For instructions in the 128-bit instruction format 2610 an exec-size field 2616 limits the number of data channels that will be executed in parallel. In some examples, exec-size field 2616 is not available for use in the 64-bit compact instruction format 2630.

Some execution unit instructions have up to three operands including two source operands, src0 2620, src1 2622, and one destination 2618. In some examples, the execution units support dual destination instructions, where one of the destinations is implied. Data manipulation instructions can have a third source operand (e.g., SRC2 2624), where the instruction opcode 2612 determines the number of source operands. An instruction's last source operand can be an immediate (e.g., hard-coded) value passed with the instruction.

In some examples, the 128-bit instruction format 2610 includes an access/address mode field 2626 specifying, for example, whether direct register addressing mode or indirect register addressing mode is used. When direct register addressing mode is used, the register address of one or more operands is directly provided by bits in the instruction.

In some examples, the 128-bit instruction format 2610 includes an access/address mode field 2626, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 2626 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 2612 bit-fields to simplify Opcode decode 2640. For an 8-bit opcode, bits 4, 5, and 6 allow the execution unit to determine the type of opcode. The precise opcode grouping shown is merely an example. In some examples, a move and logic opcode group 2642 includes data movement and logic instructions (e.g., move (mov), compare (cmp)). In some examples, move and logic group 2642 shares the five most significant bits (MSB), where move (mov) instructions are in the form of 0000xxxxb and logic instructions are in the form of 0001xxxxb. A flow control instruction group 2644 (e.g., call, jump (jmp)) includes instructions in the form of 0010xxxxb (e.g., 0x20). A miscellaneous instruction group 2646 includes a mix of instructions, including synchronization instructions (e.g., wait, send) in the form of 0011xxxxb (e.g., 0x30). A parallel math instruction group 2648 includes component-wise arithmetic instructions (e.g., add, multiply (mul)) in the form of 0100xxxxb (e.g., 0x40). The parallel math group 2648 performs the arithmetic operations in parallel across data channels. The vector math group 2650 includes arithmetic instructions (e.g., dp4) in the form of 0101xxxxb (e.g., 0x50). The vector math group performs arithmetic such as dot product calculations on vector operands. The illustrated opcode decode 2640, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

Graphics Pipeline

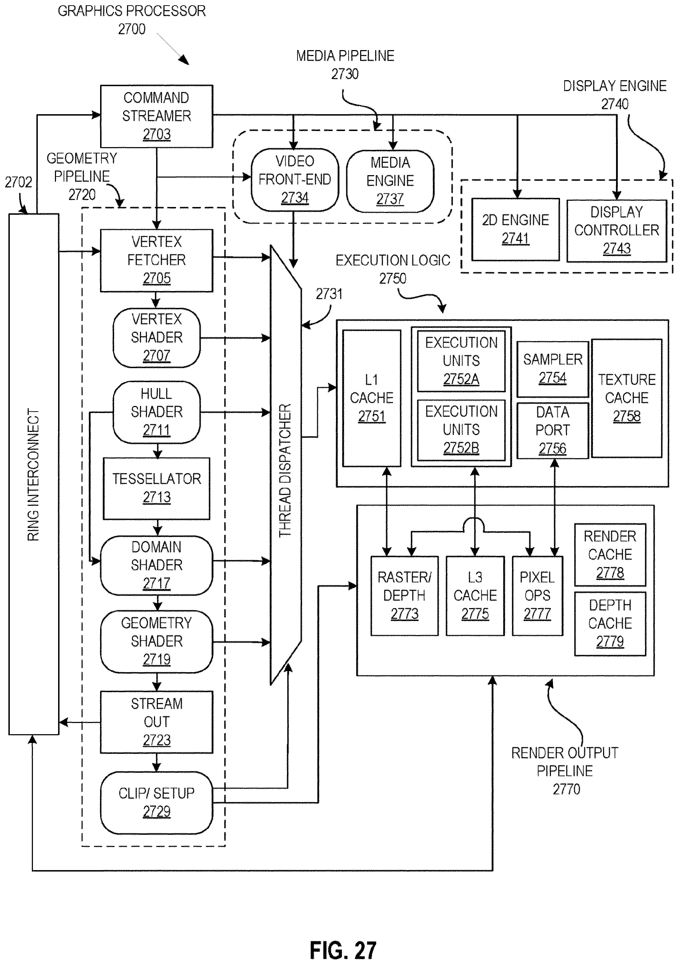

Figure 27 is a block diagram of another example of a graphics processor 2700. Elements of Figure 27 having the same reference numbers (or names) as the elements of any other figure herein can operate or function in any manner similar to that described elsewhere herein, but are not limited to such.

In some examples, graphics processor 2700 includes a geometry pipeline 2720, a media pipeline 2730, a display engine 2740, thread execution logic 2750, and a render output pipeline 2770. In some examples, graphics processor 2700 is a graphics processor within a multi-core processing system that includes one or more general-purpose processing cores. The graphics processor is controlled by register writes to one or more control registers (not shown) or via commands issued to graphics processor 2700 via a ring interconnect 2702. In some examples, ring interconnect 2702 couples graphics processor 2700 to other processing components, such as other graphics processors or general-purpose processors. Commands from ring interconnect 2702 are interpreted by a command streamer 2703, which supplies instructions to individual components of the geometry pipeline 2720 or the media pipeline 2730.

In some examples, command streamer 2703 directs the operation of a vertex fetcher 2705 that reads vertex data from memory and executes vertex-processing commands provided by command streamer 2703. In some examples, vertex fetcher 2705 provides vertex data to a vertex shader 2707, which performs coordinate space transformation and lighting operations to each vertex. In some examples, vertex fetcher 2705 and vertex shader 2707 execute vertex-processing instructions by dispatching execution threads to execution units 2752A-2752B via a thread dispatcher 2731.

In some examples, execution units 2752A-2752B are an array of vector processors having an instruction set for performing graphics and media operations. In some examples, execution units 2752A-2752B have an attached L1 cache 2751 that is specific for each array or shared between the arrays. The cache can be configured as a data cache, an instruction cache, or a single cache that is partitioned to contain data and instructions in different partitions.

In some examples, geometry pipeline 2720 includes tessellation components to perform hardware-accelerated tessellation of 3D objects. In some examples, a programmable hull shader 2711 configures the tessellation operations. A programmable domain shader 2717 provides back-end evaluation of tessellation output. A tessellator 2713 operates at the direction of hull shader 2711 and contains special purpose logic to generate a set of detailed geometric objects based on a coarse geometric model that is provided as input to geometry pipeline 2720. In some examples, if tessellation is not used, tessellation components (e.g., hull shader 2711, tessellator 2713, and domain shader 2717) can be bypassed.

In some examples, complete geometric objects can be processed by a geometry shader 2719 via one or more threads dispatched to execution units 2752A-2752B, or can proceed directly to the clipper 2729. In some examples, the geometry shader operates on entire geometric objects, rather than vertices or patches of vertices as in previous stages of the graphics pipeline. If the tessellation is disabled the geometry shader 2719 receives input from the vertex shader 2707. In some examples, geometry shader 2719 is programmable by a geometry shader program to perform geometry tessellation if the tessellation units are disabled.

Before rasterization, a clipper 2729 processes vertex data. The clipper 2729 may be a fixed function clipper or a programmable clipper having clipping and geometry shader functions. In some examples, a rasterizer and depth test component 2773 in the render output pipeline 2770 dispatches pixel shaders to convert the geometric objects into per pixel representations. In some examples, pixel shader logic is included in thread execution logic 2750. In some examples, an application can bypass the rasterizer and depth test component 2773 and access un-rasterized vertex data via a stream out unit 2723.

The graphics processor 2700 has an interconnect bus, interconnect fabric, or some other interconnect mechanism that allows data and message passing amongst the major components of the processor. In some examples, execution units 2752A-2752B and associated logic units (e.g., L1 cache 2751, sampler 2754, texture cache 2758, etc.) interconnect via a data port 2756 to perform memory access and communicate with render output pipeline components of the processor. In some examples, sampler 2754, caches 2751, 2758 and execution units 2752A-2752B each have separate memory access paths. In some examples the texture cache 2758 can also be configured as a sampler cache.

In some examples, render output pipeline 2770 contains a rasterizer and depth test component 2773 that converts vertex-based objects into an associated pixel-based representation. In some examples, the rasterizer logic includes a windower/masker unit to perform fixed function triangle and line rasterization. An associated render cache 2778 and depth cache 2779 are also available in some examples. A pixel operations component 2777 performs pixel-based operations on the data, though in some instances, pixel operations associated with 2D operations (e.g., bit block image transfers with blending) are performed by the 2D engine 2741, or substituted at display time by the display controller 2743 using overlay display planes. In some examples, a shared L3 cache 2775 is available to all graphics components, allowing the sharing of data without the use of main system memory.

In some examples, graphics processor media pipeline 2730 includes a media engine 2737 and a video front-end 2734. In some examples, video front-end 2734 receives pipeline commands from the command streamer 2703. In some examples, media pipeline 2730 includes a separate command streamer. In some examples, video front-end 2734 processes media commands before sending the command to the media engine 2737. In some examples, media engine 2737 includes thread spawning functionality to spawn threads for dispatch to thread execution logic 2750 via thread dispatcher 2731.

In some examples, graphics processor 2700 includes a display engine 2740. In some examples, display engine 2740 is external to processor 2700 and couples with the graphics processor via the ring interconnect 2702, or some other interconnect bus or fabric. In some examples, display engine 2740 includes a 2D engine 2741 and a display controller 2743. In some examples, display engine 2740 contains special purpose logic capable of operating independently of the 3D pipeline. In some examples, display controller 2743 couples with a display device (not shown), which may be a system integrated display device, as in a laptop computer, or an external display device attached via a display device connector.

In some examples, the geometry pipeline 2720 and media pipeline 2730 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

Graphics Pipeline Programming

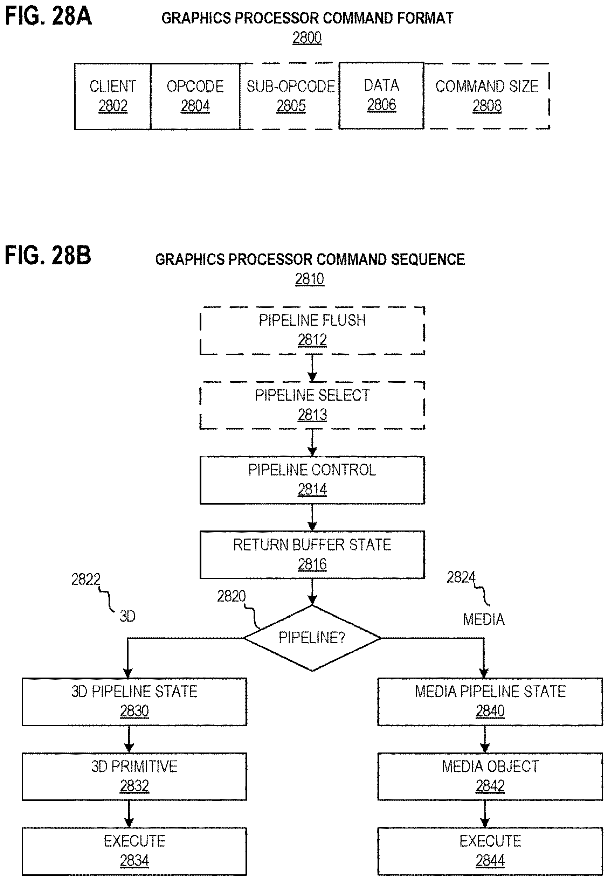

Figure 28A is a block diagram illustrating a graphics processor command format 2800 according to some examples. Figure 28B is a block diagram illustrating a graphics processor command sequence 2810 according to an example. The solid lined boxes in Figure 28A illustrate the components that are generally included in a graphics command while the dashed lines include components that are optional or that are only included in a sub-set of the graphics commands. The exemplary graphics processor command format 2800 of Figure 28A includes data fields to identify a client 2802, a command operation code (opcode) 2804, and data 2806 for the command. A sub-opcode 2805 and a command size 2808 are also included in some commands.

In some examples, client 2802 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 2804 and, if present, sub-opcode 2805 to determine the operation to perform. The client unit performs the command using information in data field 2806. For some commands, an explicit command size 2808 is expected to specify the size of the command. In some examples, the command parser automatically determines the size of at least some of the commands based on the command opcode. In some examples commands are aligned via multiples of a double word. Other command formats can be used.

The flow diagram in Figure 28B illustrates an exemplary graphics processor command sequence 2810. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 2810 may begin with a pipeline flush command 2812 to cause any active graphics pipeline to complete the currently pending commands for the pipeline. In some examples, the 3D pipeline 2822 and the media pipeline 2824 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 2812 can be used for pipeline synchronization or before placing the graphics processor into a low power state.

In some examples, a pipeline select command 2813 is used when a command sequence requires the graphics processor to explicitly switch between pipelines. In some examples, a pipeline select command 2813 is required only once within an execution context before issuing pipeline commands unless the context is to issue commands for both pipelines. In some examples, a pipeline flush command 2812 is required immediately before a pipeline switch via the pipeline select command 2813.

In some examples, a pipeline control command 2814 configures a graphics pipeline for operation and is used to program the 3D pipeline 2822 and the media pipeline 2824. In some examples, pipeline control command 2814 configures the pipeline state for the active pipeline. In some examples, the pipeline control command 2814 is used for pipeline synchronization and to clear data from one or more cache memories within the active pipeline before processing a batch of commands.

In some examples, return buffer state commands 2816 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state 2816 includes selecting the size and number of return buffers to use for a set of pipeline operations.

The remaining commands in the command sequence differ based on the active pipeline for operations. Based on a pipeline determination 2820, the command sequence is tailored to the 3D pipeline 2822 beginning with the 3D pipeline state 2830 or the media pipeline 2824 beginning at the media pipeline state 2840.

The commands to configure the 3D pipeline state 2830 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 2830 commands are also able to selectively disable or bypass certain pipeline elements if those elements will not be used.

In some examples, 3D primitive 2832 command is used to submit 3D primitives to be processed by the 3D pipeline. Commands and associated parameters that are passed to the graphics processor via the 3D primitive 2832 command are forwarded to the vertex fetch function in the graphics pipeline. The vertex fetch function uses the 3D primitive 2832 command data to generate vertex data structures. The vertex data structures are stored in one or more return buffers. In some examples, 3D primitive 2832 command is used to perform vertex operations on 3D primitives via vertex shaders. To process vertex shaders, 3D pipeline 2822 dispatches shader execution threads to graphics processor execution units.

In some examples, 3D pipeline 2822 is triggered via an execute 2834 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 2810 follows the media pipeline 2824 path when performing media operations. In general, the specific use and manner of programming for the media pipeline 2824 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 2824 is configured in a similar manner as the 3D pipeline 2822. A set of commands to configure the media pipeline state 2840 are dispatched or placed into a command queue before the media object commands 2842. In some examples, commands for the media pipeline state 2840 include data to configure the media pipeline elements that will be used to process the media objects. This includes data to configure the video decode and video encode logic within the media pipeline, such as encode or decode format. In some examples, commands for the media pipeline state 2840 also support the use of one or more pointers to "indirect" state elements that contain a batch of state settings.

In some examples, media object commands 2842 supply pointers to media objects for processing by the media pipeline. The media objects include memory buffers containing video data to be processed. In some examples, all media pipeline states must be valid before issuing a media object command 2842. Once the pipeline state is configured and media object commands 2842 are queued, the media pipeline 2824 is triggered via an execute command 2844 or an equivalent execute event (e.g., register write). Output from media pipeline 2824 may then be post processed by operations provided by the 3D pipeline 2822 or the media pipeline 2824. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

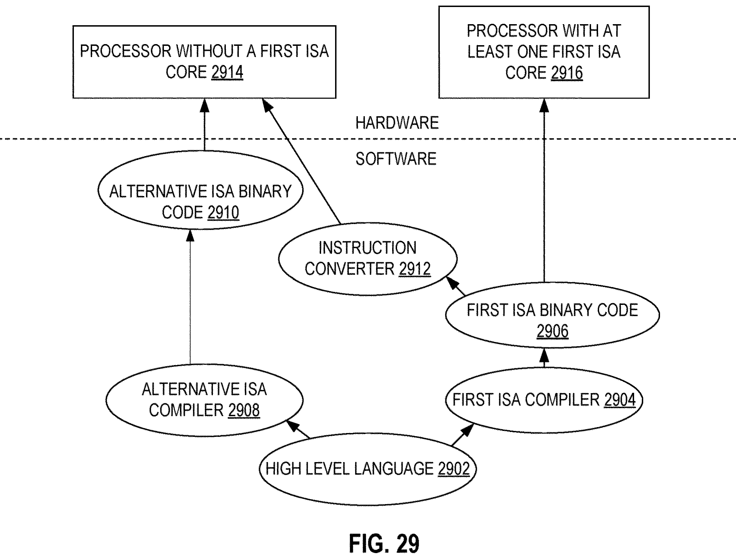

FIG. 29 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 29 shows a program in a high-level language 2902 may be compiled using a first ISA compiler 2904 to generate first ISA binary code 2906 that may be natively executed by a processor with at least one first ISA core 2916. The processor with at least one first ISA core 2916 represents any processor that can perform substantially the same functions as an Intel® processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2904 represents a compiler that is operable to generate first ISA binary code 2906 (e.g., object code) that can, with or without additional linkage processing, be executed on the processor with at least one first ISA core 2916. Similarly, FIG. 29 shows the program in the high-level language 2902 may be compiled using an alternative ISA compiler 2908 to generate alternative ISA binary code 2910 that may be natively executed by a processor without a first ISA core 2914. The instruction converter 2912 is used to convert the first ISA binary code 2906 into code that may be natively executed by the processor without a first ISA core 2914. This converted code is not necessarily to be the same as the alternative ISA binary code 2910; however, the converted code will accomplish the general operation and be made up of instructions from the alternative ISA. Thus, the instruction converter 2912 represents software, firmware, hardware, or a combination thereof that, through emulation, simulation or any other process, allows a processor or other electronic device that does not have a first ISA processor or core to execute the first ISA binary code 2906.

IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

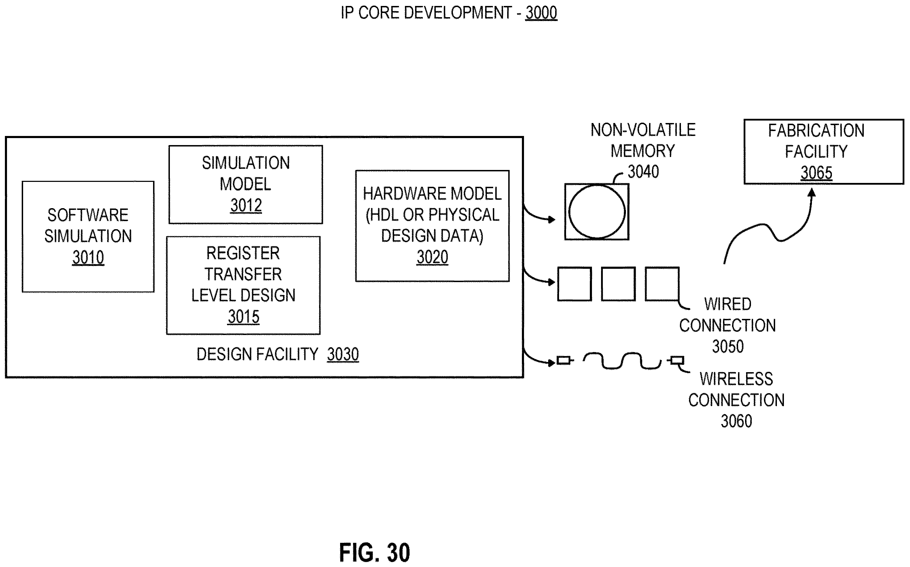

FIG. 30 is a block diagram illustrating an IP core development system 3000 that may be used to manufacture an integrated circuit to perform operations according to some examples. The IP core development system 3000 may be used to generate modular, re-usable designs that can be incorporated into a larger design or used to construct an entire integrated circuit (e.g., an SOC integrated circuit). A design facility 3030 can generate a software simulation 3010 of an IP core design in a high-level programming language (e.g., C/C++). The software simulation 3010 can be used to design, test, and verify the behavior of the IP core using a simulation model 3012. The simulation model 3012 may include functional, behavioral, and/or timing simulations. A register transfer level (RTL) design 3015 can then be created or synthesized from the simulation model 3012. The RTL design 3015 is an abstraction of the behavior of the integrated circuit that models the flow of digital signals between hardware registers, including the associated logic performed using the modeled digital signals. In addition to an RTL design 3015, lower-level designs at the logic level or transistor level may also be created, designed, or synthesized. Thus, the particular details of the initial design and simulation may vary.

The RTL design 3015 or equivalent may be further synthesized by the design facility into a hardware model 3020, which may be in a hardware description language (HDL), or some other representation of physical design data. The HDL may be further simulated or tested to verify the IP core design. The IP core design can be stored for delivery to a 3rd party fabrication facility 3065 using non-volatile memory 3040 (e.g., hard disk, flash memory, or any non-volatile storage medium). Alternatively, the IP core design may be transmitted (e.g., via the Internet) over a wired connection 3050 or wireless connection 3060. The fabrication facility 3065 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

**Claims**

1. An apparatus comprising:

   a hardware processor that includes a continuous power mode; and
   a power management circuit to couple to a battery, wherein the power management circuit is to:

   determine heat dissipation for the battery over time when the hardware processor is in the continuous power mode, and
   control power provided to the hardware processor in the continuous power mode without exceeding a limit of the heat dissipation for the battery over time.

2. The apparatus of claim 1, wherein the power management circuit is to determine the heat dissipation for the battery over time based on a voltage of the battery.

3. The apparatus of claim 1, wherein the power management circuit is to determine the heat dissipation for the battery over time based on a resistance of the battery.

4. The apparatus of claim 3, wherein the power management circuit is to determine the heat dissipation for the battery over time based on the resistance of the battery and a reference impedance for the battery.

5. The apparatus of claim 1, wherein the power management circuit is to determine the heat dissipation for the battery over time based on a current of the battery.

6. The apparatus of claim 1, wherein the power management circuit is to control the power provided to the hardware processor in the continuous power mode by adjusting a continuous mode current.

7. The apparatus of any one of claims 1-6, wherein the continuous power mode of the hardware processor is a continuous boost power mode.

8. A method comprising:

   determining, by a power management circuit, heat dissipation for a battery, coupled to a hardware processor, over time when the hardware processor is in a continuous power mode; and
   controlling, by the power management circuit, power provided to the hardware processor in the continuous power mode without exceeding a limit of the heat dissipation for the battery over time.

9. The method of claim 8, wherein the determining, by the power management circuit, the heat dissipation for the battery over time is based on a voltage of the battery.

10. The method of claim 8, wherein the determining, by the power management circuit, the heat dissipation for the battery over time is based on a resistance of the battery.

11. The method of claim 10, wherein the determining, by the power management circuit, the heat dissipation for the battery over time is based on the resistance of the battery and a reference impedance for the battery.

12. The method of claim 8, wherein the determining, by the power management circuit, the heat dissipation for the battery over time is based on a current of the battery.

13. The method of claim 8, wherein the controlling, by the power management circuit, the power provided to the hardware processor in the continuous power mode is by adjusting a continuous mode current.

14. The method of any one of claims 8-13, wherein the continuous power mode of the hardware processor is a continuous boost power mode.

SYSTEM 100

SoC 102

NETWORK INTERFACE
CONTROLLER
128

HARDWARE
INITIALIZATION
MANAGER
STORAGE
106

PROCESSOR 104

PMA 126A

PMA 126B

CORE
110-0

CORE
110-1

· · ·

CORE
110-N

PMA
126C

CORE
CIRCUITRY
112

116

SHARED
CACHE
118

MEMORY
CONTROLLER
120

INTERFACE
122

POWER
MANAGER
124

NON-CORE
CIRCUITRY
114

SYSTEM
MEMORY
(e.g., DRAM)
108

POWER SOURCE (E.G., BATTERY)
130

EXTERNAL POWER SOURCE (E.G., WALL OUTLET CONNECTION)
132

**FIG. 1**

EP 4 443 269 A1

FIG. 2

EP 4 443 269 A1

FIG. 3

EP 4 443 269 A1

CONTINUOUS (E.G., BOOST) (E.G., TURBO) MODE (E.G., PL1) CONTROLLER 216
(E.G., CIRCUITRY)

OPERATIONS 400

SYSTEM TURNS ON CONTINUOUS (E.G., BOOST) (E.G., TURBO-BOOST) MODE 402

SYSTEM CHECKS TEMPERATURE OF PRIMARY COMPONENTS (E.G., CORE/CPU) AND ADJUSTS CONTINUOUS (E.G., BOOST) (E.G., TURBO-BOOST) POWER (E.G., CURRENT) 404

SYSTEM MONITORS BATTERY VOLTAGE CHANGE FROM OPEN CIRCUIT VOLTAGE (OCV) (OR MONITORS CURRENT), AND CALCULATES HEAT DISSIPATION OVER TIME 406

IS THE HEAT DISSIPATION OVER TIME GREATER THAN A LIMIT (E.G., BATTERY THERMAL LIMIT)? 408

No → DO NOTHING 410 (FOR EXAMPLE, DO NOT CHANGE CONTINUOUS (E.G., BOOST)(E.G., TURBO-BOOST) MODE POWER, E.G., FREQUENCY/VOLTAGE/CURRENT)

Yes

DECREASE CONTINUOUS (E.G., BOOST) (E.G., TURBO-BOOST) MODE POWER (E.G., FREQUENCY/VOLTAGE/CURRENT) 412

FIG. 4

FIG. 5

CONTINUOUS (E.G., BOOST) (E.G., TURBO) MODE (E.G., PL1) CONTROLLER 216
(E.G., CIRCUITRY)

OPERATIONS 600

SYSTEM READS IMPEDANCE INFORMATION OF A BATTERY IN THE SYSTEM 602

SYSTEM READS REFERENCE BATTERY IMPEDANCE INFORMATION 604

SYSTEM ADJUSTS CONTINUOUS (E.G., BOOST) (E.G., TURBO-BOOST) MODE POWER (E.G., FREQUENCY/VOLTAGE/CURRENT) BASED ON THE IMPEDANCE INFORMATION 606

FIG. 6

700

DETERMINING, BY A POWER MANAGEMENT CIRCUIT, HEAT DISSIPATION FOR A BATTERY, COUPLED TO A HARDWARE PROCESSOR, OVER TIME WHEN THE HARDWARE PROCESSOR IS IN A CONTINUOUS POWER MODE
702

CONTROLLING, BY THE POWER MANAGEMENT CIRCUIT, POWER PROVIDED TO THE HARDWARE PROCESSOR IN THE CONTINUOUS POWER MODE WITHOUT EXCEEDING A LIMIT OF THE HEAT DISSIPATION FOR THE BATTERY OVER TIME
704

**FIG. 7**

FIG. 8

PROCESSOR OR
SOC 900

| SPECIAL PURPOSE LOGIC 908 | CORE 902(A) | CORE 902(N) | SYSTEM AGENT UNIT 910 |

CACHE UNIT(S) 904(A)

CACHE UNIT(S) 904(N)

INTEGRATED MEMORY CONTROLLER UNIT(S) 914

SHARED CACHE UNIT(S) 906

INTERFACE NETWORK 912

INTERFACE CONTROLLER UNIT(S) 916

OTHER DEVICE(S) 918

**FIG. 9**

1000

Wireless
Network
Adapter
1019

Network
Adapter
1018

Display
Device(s)
1010A

I/O Switch
1016

Add-In Device(s)
1020

Input
Device(s)
1008

I/O Hub
1007

System
Storage
1014

I/O Subsystem
1011

Communication
Link
1006

Parallel Processor(s)
1012

Memory
Hub
1005

System
Memory
1004

Communication
Link
1013

Display
Device(s)
1010B

Processor(s)
1002

Processing
Subsystem
1001

FIG. 10

Parallel Processor Memory 1122

| Memory Unit 1124A | Memory Unit 1124B | • • • | Memory Unit 1124N |

Parallel Processor 1100

| Partition Unit 1120A | Partition Unit 1120B | • • • | Partition Unit 1120N |

Memory Interface 1118

Memory Crossbar 1116

| Cluster 1114A | Cluster 1114B | • • • | Cluster 1114N |

Processing Cluster Array 1112

Scheduler 1110

| Front End 1108 | Host Interface 1106 | I/O Unit 1104 |

Parallel Processing Unit 1102

Memory Hub 1105

**FIG. 11A**

To/From
Memory Unit
1124

Frame buffer
Interface
1125

ROP
1126

CODEC
1127

L2 Cache
1121

Partition Unit
1120

To/From
Memory Crossbar
1116

**FIG. 11B**

To
Memory Crossbar
1116 and/or
other Processing
Clusters

To/From
Memory
Crossbar
1116

MMU
1145

PreROP
1142

Data Crossbar
1140

Graphics
Multiprocessor
1134

Texture
Unit
1136

L1 Cache
1148

Processing
Cluster
1114

Pipeline Manager
1132

To/From
Scheduler
1110

FIG. 11C

To
Data Crossbar
1140

To
Data Crossbar
1140

| Shared Memory 1170 | Cache Memory 1172 |

Memory and Cache Interconnect 1168

| Load/Store Unit 1166 | GPGPU Cores 1162 | Tensor/RT Cores 1163 |

Register File 1158

Address Mapping Unit 1156

Instruction Unit 1154

Graphics Multiprocessor 1134

Instruction Cache 1152

From
Pipeline Manager
1132

**FIG. 11D**

Graphics Multiprocessor  1225

Interconnect Fabric 1227

Shared Memory  1246

| Texture Unit(s)  1244A | Texture Unit(s)  1244B |
|---|---|

Cache Memory  1242

| Load/Store Unit 1240A | RT Core 1238A | Tensor Core 1237A | GPGPU Core 1236A | Load/Store Unit 1240B | RT Core 1238B | Tensor Core 1237B | GPGPU Core 1236B |
|---|---|---|---|---|---|---|---|

| Register File  1234A | Register File  1234B |
|---|---|

| Instruction Unit  1232A | Instruction Unit  1232B |
|---|---|

Instruction Cache  1230

# FIG. 12A

Graphics Multiprocessor  1250

Interconnect Fabric 1252

Shared Memory 1253

| Texture Unit(s)  1260A | Texture Unit(s)  1260B |
|---|---|

Cache Memory  1258A

| Execution Resources  1256A | Execution Resources  1256B |
|---|---|
| Texture Unit(s)  1260C | Texture Unit(s)  1260D |

Cache Memory  1258B

| Execution Resources  1256C | Execution Resources  1256D |
|---|---|

Instruction Cache  1254

# FIG. 12B

**FIG. 12C**

EP 4 443 269 A1

**FIG. 13**

EP 4 443 269 A1

**1400**

**1420**

Compute Chiplets **1405**

Media Chiplet **1404**

Memory Chiplets **1406**

| COMPUTE | COMPUTE | COMPUTE | ••• | COMPUTE | MEDIA | MEMORY/ CACHE | ••• | L3 BANKS | L3 BANKS |

| GLOBAL LOGIC 1401 | SCHED 1411 | POWER 1421 | INF 1402 | DISPATCH 1403 | FABRIC 1408 | L3 BANKS 1409A | ••• | L3 BANKS 1409N |

Base Die 1410

Interconnect Layer 1412

**FIG. 14A**

EP 4 443 269 A1

1430

| POWER CONTROL 1432 | CHIPLET LOGIC 1436 |
|---|---|
| CLOCK CONTROL 1434 | CACHE/SLM 1438 |

| INTERCONNECT BUFFER 1439 | INTERCONNECT CACHE 1440 |
|---|---|

| FABRIC INTERCONNECT NODE 1442 |
|---|

**FIG. 14B**

EP 4 443 269 A1

PIPELINE 1500

| FETCH 1502 | LENGTH DECODING 1504 | DECODE 1506 | ALLOC. 1508 | RENAMING 1510 | SCHEDULE 1512 | REGISTER READ/ MEMORY READ 1514 | EXECUTE STAGE 1516 | WRITE BACK/ MEMORY WRITE 1518 | EXCEPTION HANDLING 1522 | COMMIT 1524 |

**FIG. 15A**

FIG. 15B

EXECUTION UNIT(S) CIRCUITRY
1562

ALU 1601

VECTOR/SIMD 1603

LOAD/STORE 1605

BRANCH/JUMP 1607

FPU 1609

FIG. 16

REGISTER ARCHITECTURE
1700

Segment Registers 1720

Model Specific Registers 1735

Writemask/predicate Registers 1715

Control Register(s) 1755

SCALAR FP REGISTER FILE 1745

Instruction Pointer Register(s) 1730

Vector/SIMD Registers 1710

Debug Registers 1750

General Purpose Registers 1725

Mem. Management Registers 1765

Flag Register(s) 1740

Machine Check Registers 1760

FIG. 17

EP 4 443 269 A1

| PREFIX(ES) 1801 | OPCODE 1803 | ADDRESSING INFORMATION 1805 | DISPLACEMENT VALUE 1807 | IMMEDIATE VALUE 1809 |

**FIG. 18**

ADDRESSING INFORMATION
1805

MOD R/M BYTE 1902

7      6 5      3 2      0

| MOD 1942 | REG 1944 | R/M 1946 |

SIB BYTE 1904

7      6 5      3 2      0

| SCALE ss 1952 | INDEX xxx 1954 | BASE bbb 1956 |

MOD R/M        SIB

FIG. 19

EP 4 443 269 A1

## FIG. 20

| PREFIX 1801(A) | | | | | | | | | |
|---|---|---|---|---|---|---|---|---|---|
| | | 7 | 6 | 5 | 4 | 3 | 2 | 1 | 0 |
| FORMAT | | 0 | 1 | 0 | 0 | W | R | X | B |

## FIG. 21A

| PREFIX 1801(A) | OPCODE 1803 | MOD R/M 1902 | | |
|---|---|---|---|---|
| | | MOD 1942 | REG 1944 | R/M 1946 |
| | | !=11 | rrr | bbb |

Rrrr    Bbbb

## FIG. 21B

| PREFIX 1801(A) | OPCODE 1803 | MOD R/M 1902 | | |
|---|---|---|---|---|
| | | MOD 1942 | REG 1944 | R/M 1946 |
| | | 11 | rrr | bbb |

Rrrr    Bbbb

## FIG. 21C

| PREFIX 1801(A) | OPCODE 1803 | MOD R/M 1902 | | | SIB 1904 | | |
|---|---|---|---|---|---|---|---|
| | | MOD 1942 | REG 1944 | R/M 1946 | SCL 1952 | INDEX 1954 | BASE 1956 |
| | | !=11 | rrr | 100 | | xxx | bbb |

Rrrr    Xxxx    Bbbb

## FIG. 21D

| PREFIX 1801(A) | OPCODE 1803 | MOD R/M 1902 |
|---|---|---|
| | | REG 1944 |
| | | bbb |

Bbbb

SECOND PREFIX 1801(B)

| 7 | | | | | 0 | 7 | 6 | 5 | 4 | 3 | 2 | 1 | 0 |
|---|---|---|---|---|---|---|---|---|---|---|---|---|---|
| | FORMAT 2201 | | | | | R | v | v | v | v | L | p | p |

BYTE 0 2203          BYTE 1 2205

**FIG. 22A**

SECOND PREFIX 1801(B)

| 7 | | | 0 | 7 | 6 | 5 | 4 | 3 | 2 | 1 | 0 | 7 | 6 | 5 | 4 | 3 | 2 | 1 | 0 |
|---|---|---|---|---|---|---|---|---|---|---|---|---|---|---|---|---|---|---|---|
| | FORMAT 2211 | | | R | X | B | m | m | m | m | m | W | v | v | v | v | L | p | p |

BYTE 0 2213          BYTE 1 2215          BYTE 2 2217

**FIG. 22B**

EP 4 443 269 A1

PREFIX 1801(C)

| | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|
| FORMAT 2311 | z | L' | L | b | V' | a | a | a | W | v | v | v | v | 1 | p | p | R | X | B | R' | 0 | 0 | m | m |

PAYLOAD BYTE 2
2315

PAYLOAD BYTE 1
2317

PAYLOAD BYTE 0
2319

**FIG. 23**

FIG. 24A

**FIG. 24B**

EXECUTION UNIT
2500

| | | |
|---|---|---|
| THREAD CONTROL 2501 | | COMPUTE 2510 |
| THREAD STATE 2502 | REGISTER FILE 2506 | ALU 2511 |
| INSTRUCTION FETCH/PREFETCH 2503 | | SYSTOLIC ARRAY 2512 |
| | | MATH 2513 |
| INSTRUCTION DECODE 2504 | | SEND 2507 |
| | | BRANCH 2508 |

**FIG. 25**

GRAPHICS PROCESSOR INSTRUCTION FORMATS
2600

128-BIT INSTRUCTION
2610

| OPCODE 2612 | CONTROL 2614 | EXEC-SIZE 2616 | DEST 2618 | SRC0 2620 | SRC1 2622 | SRC2 2624 | ACCESS/ADDRESS MODE 2626 |

64-BIT COMPACT INSTRUCTION
2630

| OPCODE 2612 | INDEX 2613 | CONTROL 2614 | DEST 2618 | SRC0 2620 | SRC1 2622 |

OPCODE DECODE
2640

| 7 | 6 | 5 | 4 | 3 | 2 | 1 | 0 |

opcode=0 00x xxxxb ← Move/Logic - 2642

opcode=0 010 xxxxb ← Flow Control - 2644

opcode=0 011 xxxxb ← Misc. - 2646

opcode=0 100 xxxxb ← Parallel Math - 2648

opcode=0 101 xxxxb ← Vector Math - 2650

**FIG. 26**

EP 4 443 269 A1

GRAPHICS PROCESSOR
2700

MEDIA PIPELINE
2730

DISPLAY ENGINE
2740

COMMAND
STREAMER
2703

GEOMETRY
PIPELINE
2720

2702

VIDEO
FRONT-END
2734

MEDIA
ENGINE
2737

2D ENGINE
2741

DISPLAY
CONTROLLER
2743

VERTEX
FETCHER
2705

EXECUTION LOGIC
2750

2731

VERTEX
SHADER
2707

HULL
SHADER
2711

TESSELLATOR
2713

DOMAIN
SHADER
2717

GEOMETRY
SHADER
2719

STREAM
OUT
2723

CLIP/ SETUP
2729

RING INTERCONNECT

THREAD DISPATCHER

L1
CACHE
2751

EXECUTION
UNITS
2752A

EXECUTION
UNITS
2752B

SAMPLER
2754

DATA
PORT
2756

TEXTURE
CACHE
2758

RASTER/
DEPTH
2773

L3
CACHE
2775

PIXEL
OPS
2777

RENDER
CACHE
2778

DEPTH
CACHE
2779

RENDER OUTPUT
PIPELINE
2770

**FIG. 27**

## FIG. 28A     GRAPHICS PROCESSOR COMMAND FORMAT
### 2800

| CLIENT 2802 | OPCODE 2804 | SUB-OPCODE 2805 | DATA 2806 | COMMAND SIZE 2808 |

## FIG. 28B     GRAPHICS PROCESSOR COMMAND SEQUENCE
### 2810

PIPELINE FLUSH
2812

PIPELINE SELECT
2813

PIPELINE CONTROL
2814

RETURN BUFFER STATE
2816

2822 — 3D     2820 — PIPELINE?     2824 — MEDIA

3D PIPELINE STATE
2830

3D PRIMITIVE
2832

EXECUTE
2834

MEDIA PIPELINE STATE
2840

MEDIA OBJECT
2842

EXECUTE
2844

**FIG. 29**

IP CORE DEVELOPMENT - 3000

SIMULATION
MODEL
3012

REGISTER
TRANSFER
LEVEL DESIGN
3015

SOFTWARE
SIMULATION
3010

HARDWARE MODEL
(HDL OR PHYSICAL
DESIGN DATA)
3020

DESIGN FACILITY  3030

NON-VOLATILE
MEMORY
3040

FABRICATION
FACILITY
3065

WIRED
CONNECTION
3050

WIRELESS
CONNECTION
3060

EP 4 443 269 A1

**FIG. 30**

Europäisches
Patentamt

European
Patent Office

Office européen
des brevets

**EUROPEAN SEARCH REPORT**

Application Number

EP 24 16 6885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/166978 A1 (MATSUMURA NAOKI [US] ET AL) 28 May 2020 (2020-05-28) <br> * the whole document * | 1-14 | INV. <br> G06F1/28 |
| A | US 2022/344728 A1 (MYNENI KRISHNA [US] ET AL) 27 October 2022 (2022-10-27) <br> * paragraph [0026] - paragraph [0050]; figures 2-5 * | 1-14 | |
| A | GB 2 553 196 A (HAND HELD PRODUCTS INCORPORATED [US]) 28 February 2018 (2018-02-28) <br> * paragraph [0133] - paragraph [0140]; figures 8-11 * | 1-14 | |
| A | US 2021/004066 A1 (HE QINGHONG [US] ET AL) 7 January 2021 (2021-01-07) <br> * paragraph [0024] - paragraph [0051]; figures 2-6 * | 1-14 | |
| A | US 2022/283627 A1 (LIN HAO-HSUAN [TW] ET AL) 8 September 2022 (2022-09-08) <br> * paragraph [0026] - paragraph [0029] * | 1-14 | TECHNICAL FIELDS SEARCHED (IPC) <br><br> G06F |
| A | US 2004/104709 A1 (YAMAJI HIDENORI [JP] ET AL) 3 June 2004 (2004-06-03) <br> * paragraph [0031] - paragraph [0075] * | 1-14 | |

The present search report has been drawn up for all claims

| Place of search | Date of completion of the search | Examiner |
|---|---|---|
| The Hague | 9 August 2024 | Bijn, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 6885

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2024

| Patent document cited in search report | | Publication date | Patent family member(s) | | Publication date |
|---|---|---|---|---|---|
| US 2020166978 | A1 | 28-05-2020 | US 2020166978 A1 | | 28-05-2020 |
| | | | US 2021318737 A1 | | 14-10-2021 |
| US 2022344728 | A1 | 27-10-2022 | US 2022344728 A1 | | 27-10-2022 |
| | | | WO 2022225720 A1 | | 27-10-2022 |
| GB 2553196 | A | 28-02-2018 | NONE | | |
| US 2021004066 | A1 | 07-01-2021 | NONE | | |
| US 2022283627 | A1 | 08-09-2022 | TW 202236045 A | | 16-09-2022 |
| | | | US 2022283627 A1 | | 08-09-2022 |
| US 2004104709 | A1 | 03-06-2004 | CN 1498439 A | | 19-05-2004 |
| | | | EP 1471593 A1 | | 27-10-2004 |
| | | | JP 4433656 B2 | | 17-03-2010 |
| | | | JP 2003223937 A | | 08-08-2003 |
| | | | TW I300998 B | | 11-09-2008 |
| | | | US 2004104709 A1 | | 03-06-2004 |
| | | | WO 03065493 A1 | | 07-08-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63493677